(19) Europäisches Patentamt
European Patent Office
Office européen des brevets

(11) **EP 4 101 940 A1**

(12) **EUROPEAN PATENT APPLICATION**
published in accordance with Art. 153(4) EPC

(43) Date of publication:
**14.12.2022 Bulletin 2022/50**

(51) International Patent Classification (IPC):
**C21D 8/12** (2006.01)   **C22C 38/00** (2006.01)
**C22C 38/60** (2006.01)   **H01F 1/147** (2006.01)

(21) Application number: **20917885.4**

(22) Date of filing: **05.02.2020**

(52) Cooperative Patent Classification (CPC):
**C22C 38/00; C22C 38/60; H01F 1/147;** C21D 8/12;
Y02P 10/20

(86) International application number:
**PCT/JP2020/004266**

(87) International publication number:
**WO 2021/156960 (12.08.2021 Gazette 2021/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NIPPON STEEL CORPORATION Chiyoda-ku Tokyo 100-8071 (JP)**

(72) Inventors:
• **NAKAMURA, Shuichi Tokyo 100-8071 (JP)**
• **KAWAMURA, Yusuke Tokyo 100-8071 (JP)**

(74) Representative: **Vossius & Partner Patentanwälte Rechtsanwälte mbB Siebertstraße 3 81675 München (DE)**

(54) **GRAIN-ORIENTED ELECTRICAL STEEL SHEET**

(57)     A grain oriented electrical steel sheet includes the texture aligned with Goss orientation. In the grain oriented electrical steel sheet, when a grain size $RA\alpha_C$, a grain size $RA\beta_C$, and a grain size $RA\gamma_C$ are defined in a transverse direction C, the grain sizes satisfy $RA\gamma_C < RA\alpha_C$ and $RA\gamma_C < RA\beta_C$.

FIG. 2

**Description**

Technical Field

The present invention relates to a grain oriented electrical steel sheet.

Background Art

A grain oriented electrical steel sheet includes 7 mass% or less of Si and has a secondary recrystallized texture which aligns in {110} <001> orientation (Goss orientation). Herein, the {110}<001> orientation represents that {110} plane of crystal is aligned parallel to a rolled surface and <001> axis of crystal is aligned parallel to a rolling direction.

Magnetic characteristics of the grain oriented electrical steel sheet are significantly affected by alignment degree to the {110}<001> orientation. In particular, it is considered that the relationship between the rolling direction of the steel sheet, which is the primal magnetized direction when using the steel sheet, and the <001> direction of crystal, which is the direction of easy magnetization, is important. Thus, in recent years, the practical grain oriented electrical steel sheet is controlled so that an angle formed by the <001> direction of crystal and the rolling direction is within approximately 5°.

It is possible to represent the deviation between the actual crystal orientation of the grain oriented electrical steel sheet and the ideal {110}<001> orientation by three components which are a deviation angle $\alpha$ based on a normal direction Z, a deviation angle $\beta$ based on a transverse direction C, and a deviation angle $\gamma$ based on a rolling direction L.

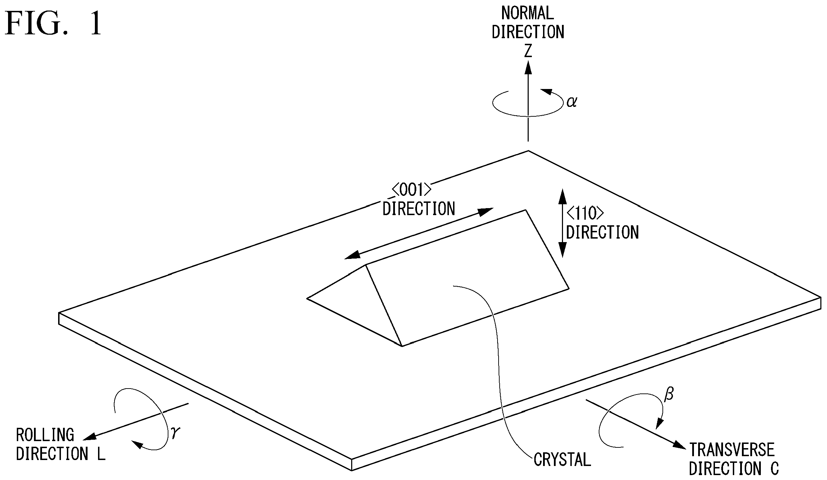

Figure 1 is a schema illustrating the deviation angle $\alpha$, the deviation angle $\beta$, and the deviation angle $\gamma$. As shown in Figure 1, the deviation angle $\alpha$ is an angle formed by the <001> direction of crystal projected on the rolled surface and the rolling direction L when viewing from the normal direction Z. The deviation angle $\beta$ is an angle formed by the <001> direction of crystal projected on L cross section (cross section whose normal direction is the transverse direction) and the rolling direction L when viewing from the transverse direction C (width direction of sheet). The deviation angle $\gamma$ is an angle formed by the <110> direction of crystal projected on C cross section (cross section whose normal direction is the rolling direction) and the normal direction Z when viewing from the rolling direction L.

It is known that, among the deviation angles $\alpha$, $\beta$ and y, the deviation angle $\beta$ affects magnetostriction. Herein, the magnetostriction is a phenomenon in which a shape of magnetic material changes when magnetic field is applied. Since the magnetostriction causes vibration and noise, it is demanded to reduce the magnetostriction of the grain oriented electrical steel sheet utilized for a core of transformer and the like.

For instance, the patent documents 1 to 3 disclose controlling the deviation angle $\beta$. The patent documents 4 and 5 disclose controlling the deviation angle $\alpha$ in addition to the deviation angle $\beta$. The patent document 6 discloses a technique for improving the iron loss characteristics by further classifying the alignment degree of crystal orientation using the deviation angle $\alpha$, the deviation angle $\beta$, and the deviation angle $\gamma$ as indexes.

The patent documents 7 to 9 disclose that not only simply controlling the absolute values and the average values of the deviation angles $\alpha$, $\beta$, and $\gamma$ but also controlling the fluctuations (deviations) therewith. The patent documents 10 to 12 disclose adding Nb, V, and the like to the grain oriented electrical steel sheet.

The patent document 13 proposes a prediction method of transformer noise due to the magnetostriction. The prediction method of transformer noise utilizes the value called a magnetostriction velocity level (Lva) applied A-weighting with respect to frequency characteristics of human hearing in which the magnetostrictive waveform excited by alternating current is time-differentiated and converted into velocity. The patent document 14 discloses that the transformer noise is reduced by decreasing the magnetostriction velocity level (Lva). For instance, the patent document 14 discloses a technique such that strain is lineally applied to steel sheet surface, magnetic domains are refined, the magnetostriction velocity level is decreased, and thereby, the transformer noise due to the grain oriented electrical steel sheet is reduced.

Related Art Documents

Patent Documents

[Patent Document 1] Japanese Unexamined Patent Application, First Publication No. 2001-294996

[Patent Document 2] Japanese Unexamined Patent Application, First Publication No. 2005-240102

[Patent Document 3] Japanese Unexamined Patent Application, First Publication No. 2015-206114

[Patent Document 4] Japanese Unexamined Patent Application, First Publication No. 2004-60026

[Patent Document 5] PCT International Publication No. WO2016/056501

[Patent Document 6] Japanese Unexamined Patent Application, First Publication No. 2007-314826

[Patent Document 7] Japanese Unexamined Patent Application, First Publication No. 2001-192785

[Patent Document 8] Japanese Unexamined Patent Application, First Publication No. 2005-240079

[Patent Document 9] Japanese Unexamined Patent Application, First Publication No. 2012-052229

[Patent Document 10] Japanese Unexamined Patent Application, First Publication No. S52-024116

[Patent Document 11] Japanese Unexamined Patent Application, First Publication No. H02-200732

[Patent Document 12] Japanese Patent (Granted) Publication No. 4962516

[Patent Document 13] Japanese Patent (Granted) Publication No. 3456742

[Patent Document 14] Japanese Unexamined Patent Application, First Publication No. 2017-128765

Summary of Invention

Technical Problem to be Solved

As a result of investigations by the present inventors, although the conventional techniques disclosed in the patent documents 1 to 9 controls the crystal orientation, it is insufficient to reduce the magnetostriction. In particular, it is found that the decrease in the magnetostriction velocity level (Lva) may be insufficient.
Moreover, since the conventional techniques disclosed in the patent documents 10 to 12 merely contain Nb and V, it is insufficient to reduce the magnetostriction velocity level (Lva).
Moreover, the patent documents 13 and 14 disclose the relationship between the magnetostriction velocity level (Lva) and the transformer noise, but merely try to decrease the magnetostriction velocity level (Lva) by treatment (magnetic domain refinement) which is after producing the grain oriented electrical steel sheet. The patent documents 13 and 14 do not control the texture of steel sheet, and it is insufficient to reduce the magnetostriction velocity level (Lva).
The present invention has been made in consideration of the situations such that the grain oriented electrical steel sheet which is able to reduce the transformer noise is required. An object of the invention is to provide the grain oriented electrical steel sheet in which the magnetostriction velocity level (Lva) is improved. Specifically, the object of the invention is to provide the grain oriented electrical steel sheet in which the magnetostriction velocity level (Lva) in middle to high magnetic field range (especially in magnetic field where excited so as to be approximately 1.7 to 1.9T) is improved in addition that the iron loss characteristics are excellent.

Solution to Problem

An aspect of the present invention employs the following.

(1) A grain oriented electrical steel sheet according to an aspect of the present invention includes, as a chemical composition, by mass%,

2.0 to 7.0% of Si,
0 to 0.030% of Nb,
0 to 0.030% of V,
0 to 0.030% of Mo,
0 to 0.030% of Ta,
0 to 0.030% of W,
0 to 0.0050% of C,
0 to 1.0% of Mn,
0 to 0.0150% of S,
0 to 0.0150% of Se,
0 to 0.0650% of Al,

0 to 0.0050% of N,
0 to 0.40% of Cu,
0 to 0.010% of Bi,
0 to 0.080% of B,
0 to 0.50% of P,
0 to 0.0150% of Ti,
0 to 0.10% of Sn,
0 to 0.10% of Sb,
0 to 0.30% of Cr,
0 to 1.0% of Ni, and
a balance consisting of Fe and impurities, and
includes a texture aligned with Goss orientation, characterized in that,
when $\alpha$ is defined as a deviation angle from an ideal Goss orientation based on a rotation axis parallel to a normal direction Z,
when $\beta$ is defined as a deviation angle from the ideal Goss orientation based on a rotation axis parallel to a transverse direction C,
when $\gamma$ is defined as a deviation angle from the ideal Goss orientation based on a rotation axis parallel to a rolling direction L,
when $(\alpha_1\ \beta_1\ \gamma_1)$ and $(\alpha_2\ \beta_2\ \gamma_2)$ represent deviation angles of crystal orientations measured at two measurement points which are adjacent on a sheet surface and which have an interval of 1 mm,
when a boundary condition $BA\alpha$ is defined as $|\alpha_2 - \alpha_1| \geq 0.5°$ and a grain size $RA\alpha_C$ is defined as an average grain size obtained based on the boundary condition $BA\alpha$ in the transverse direction C,
when a boundary condition $BA\beta$ is defined as $|\beta_2 - \beta_1| \geq 0.5°$ and a grain size $KA\beta_C$ is defined as an average grain size obtained based on the boundary condition $BA\beta$ in the transverse direction C,
when a boundary condition $BAy$ is defined as $|\gamma_2 - \gamma_1| \geq 0.5°$ and a grain size $RA\gamma_C$ is defined as an average grain size obtained based on the boundary condition $BA\gamma$ in the transverse direction C, and
when a boundary condition BB is defined as $[(\alpha_2 - \alpha_1)^2 + (\beta_2 - \beta_1)^2 + (\gamma_2 - \gamma_1)^2]^{1/2} \geq 2.0°$,
a boundary which satisfies the boundary condition $BA\gamma$ and which does not satisfy the boundary condition BB is included,
the grain size $RA\alpha_C$ and the grain size $RA\gamma_C$ satisfy $RA\gamma_C < RA\alpha_C$, and
the grain size $RA\beta_C$ and the grain size $RA\gamma_C$ satisfy $RA\gamma_C < RA\beta_C$.

(2) In the grain oriented electrical steel sheet according to (1),

when a grain size $RB_C$ is defined as an average grain size obtained based on the boundary condition BB in the transverse direction C,
the grain size $RA\gamma_C$ and the grain size $RB_C$ may satisfy $1.10 \leq RB_C \div RA\gamma_C$.

(3) In the grain oriented electrical steel sheet according to (1) or (2), the grain size $RB_C$ may be 15 mm or more.
(4) In the grain oriented electrical steel sheet according to any one of (1) to (3), the grain size $RA\gamma_C$ may be 40 mm or less.

Effects of Invention

According to the above aspects of the present invention, it is possible to provide the grain oriented electrical steel sheet in which the magnetostriction velocity level (Lva) in middle to high magnetic field range (especially in magnetic field where excited so as to be approximately 1.7 to 1.9T) is improved in addition that the iron loss characteristics are excellent.

Brief Description of Drawings

Figure 1 is a schema illustrating deviation angle $\alpha$, deviation angle $\beta$, and deviation angle $\gamma$.
Figure 2 is a cross-sectional illustration of a grain oriented electrical steel sheet according to an embodiment of the present invention.
Figure 3 is a flow chart illustrating a method for producing a grain oriented electrical steel sheet according to an embodiment of the present invention.

Detailed Description of Preferred Embodiment

Hereinafter, a preferred embodiment of the present invention is described in detail. However, the present invention is not limited only to the configuration which is disclosed in the present embodiment, and various modifications are possible without departing from the aspect of the present invention. In addition, the limitation range as described below includes a lower limit and an upper limit thereof. However, the value represented by "more than" or "less than" does not include in the limitation range. Unless otherwise noted, "%" of the chemical composition represents "mass%".

In general, in order to reduce the magnetostriction, the crystal orientation has been controlled so that the deviation angle $\beta$ becomes low (specifically, maximum and average of absolute value | $\beta$ | of deviation angle $\beta$ become small). Moreover, in order to reduce the magnetostriction, the crystal orientation has been controlled so that the difference between the minimum and the maximum of magnetostriction (hereinafter, referred to as "$\lambda$p-p") becomes low.

However, the present inventors have investigated the relationship between the crystal orientation of the electrical steel sheet used for the material of practical iron core and the noise thereof. As a result, it has been found that, even when using the grain oriented electrical steel sheet in which the magnetostriction is improved as conventional technics, the noise in the practical environment is not sufficiently reduced.

The present inventors presume the cause thereof as follows. For the noise in the practical environment, it is insufficient to evaluate only the magnetostriction $\lambda$p-p, and it seem that the variation over time of the magnetostrictive waveform excited by alternating current is important. Thus, the present inventors have investigated the magnetostriction velocity level (Lva) in which the variation over time of the magnetostrictive waveform can be evaluated.

In order to understand the magnetic characteristics in the middle to high magnetic field range, the present inventors has analyzed the relation of the magnetostriction velocity level (Lva) when excited so as to be 1.7 T where the magnetic characteristics are generally measured, the magnetostriction velocity level (Lva) when excited so as to be approximately 1.9 T, the magnetostriction, the iron loss, the deviation angles of crystal orientation, and the like.

The magnetic field as 1.7 T corresponds to the magnetic flux density designed for transformer used in general (or the magnetic flux density for evaluating the electrical steel sheet in general). Thus, it seems that the vibration of the iron core is reduced and the transformer noise is reduced by decreasing the magnetostriction velocity level (Lva) when excited so as to be 1.7 T.

The magnetic field as 1.9 T does not corresponds to the magnetic flux density designed for transformer used in general. However, in the practical environment, the magnetic flux does not flow uniformly in the steel sheet, but concentrates locally in a certain area. Thus, an area where the magnetic flux of approximately 1.9 T flows locally exists in the steel sheet. Conventionally, it is known that magnetostriction excessively occurs in the magnetic field as 1.9 T, which affects the vibration of the iron core. Thus, it seems that the vibration of the iron core is reduced and the transformer noise is reduced by decreasing the magnetostriction velocity level (Lva) when excited so as to be 1.9 T. In other words, in order to reduce the transformer noise in practical, it is important to not only decrease the magnetostriction velocity level (Lva) when excited so as to be 1.7 T but also decrease the magnetostriction velocity level (Lva) when excited so as to be 1.9 T.

The reason why the transformer noise is reduced by decreasing the magnetostriction velocity level (Lva) is presumed as follows.

The magnetostriction occurs when the transformer is excited. The above magnetostriction causes the vibration of iron core. The vibration of the iron core in the transformer vibrates the air, which causes the noise. The sound pressure of the noise can be evaluated by the amount of variation per unit time (velocity).

Moreover, the sound characteristics which humans can perceive are not always constant at all frequencies, and can be expressed by the aural characteristics called A-weighting. The actual magnetostrictive waveform is not a sine wave, but a waveform in which various frequencies are overlapped. Thus, the magnetostrictive waveform is fourier-transformed, the amplitude at each frequency is obtained and multiplied by the A-weighting, and thereby, it is possible to obtain the magnetostriction velocity level (Lva) which is an index close to the aural characteristics of the actual human.

When the above magnetostriction velocity level (Lva) is decreased, it is possible to suppress the iron core vibration caused by the frequency which humans perceive among the transformer noise. Thus, it seems that the transformer noise can be effectively reduced.

As a result of investigations by the present inventors, it has been confirmed that, by decreasing the magnetostriction velocity level (Lva) in magnetic field where excited so as to be approximately 1.7 T and 1.9T (hereinafter, referred to as "middle and high magnetic field range"), the transformer noise can be effectively reduced in addition that the iron loss characteristics are excellent.

As a result of further investigations by the present inventors, it has been found that, in order to decrease the magnetostriction velocity level (Lva) in middle and high magnetic field range, it is important to control the deviation angle $\gamma$ in the crystal orientation of electrical steel sheet. Specifically, it is important to control the relationship between the deviation angle $\gamma$ and the deviation angle $\alpha$ and the relationship between the deviation angle $\gamma$ and the deviation angle $\beta$. In other words, it has been found that, when the above relationships of the deviation angles are optimally controlled, the magnetostriction velocity level (Lva) in middle and high magnetic field range can be decreased, and as a result, the transformer noise can be further reduced.

In the past, in the grain-oriented electrical steel sheet, it has been prioritized that the <001 > orientation which is the easy axis of magnetization aligns the rolling direction, and it has been considered that the deviation angle $\gamma$ caused by the crystal rotation around the rolling direction L has little influence on the magnetic characteristics. Thus, the typical grain oriented electrical steel sheet has been produced under conditions such that, in regard to mainly the deviation angle $\alpha$ and the deviation angle $\beta$, the secondary recrystallized grain is nucleated with precisely controlling the orientation and is grown with maintaining the crystal orientation. In general, it has been considered that it is difficult to precisely control the deviation angle $\gamma$, in addition to controlling the deviation angle $\alpha$ and the deviation angle $\beta$.

The present inventors have attempted that the secondary recrystallized grain is not grown with maintaining the crystal orientation, but is grown with changing the crystal orientation. As a result, the present inventors have found that, in order to reduce the magnetostriction velocity level (Lva) in middle and high magnetic field range, it is advantageous to sufficiently induce orientation changes (subboundaries) which are local and low-angle and which are not conventionally recognized as boundary during the growth of secondary recrystallized grain, and to divide one secondary recrystallized grain into small domains where each deviation angle $\beta$ is slightly different.

In particular, it has been found that, in addition to dividing one secondary recrystallized grain into small domains by the subboundary, it is important to control the relationship between the deviation angle $\gamma$ and the deviation angle $\alpha$ and the relationship between the deviation angle $\gamma$ and the deviation angle $\beta$. Specifically, when the subboundaries resulted from the changes in the deviation angle $\gamma$ are formed more than the subboundaries resulted from the change in the deviation angle $\alpha$ and the deviation angle $\beta$ in regard to the transverse direction C, the magnetostriction velocity level (Lva) in middle and high magnetic field range can be improved in addition that the iron loss characteristics are excellent.

In addition, the present inventors have found that, in order to control the above orientation changes, it is important to consider a factor to easily induce the orientation changes itself and a factor to periodically induce the orientation changes within one grain. In order to easily induce the orientation changes itself, it has been found that starting the secondary recrystallization from lower temperature is effective, for instance, by controlling the grain size of the primary recrystallized grain or by utilizing elements such as Nb. Moreover, it has been found that the orientation changes can be periodically induced up to higher temperature within one grain during the secondary recrystallization by utilizing AIN and the like which are the conventional inhibitor at appropriate temperature and in appropriate atmosphere.

Hereinafter, the grain oriented electrical steel sheet according to the present embodiment is described in detail.

In the grain oriented electrical steel sheet according to the present embodiment of the present invention, the secondary recrystallized grain is divided into plural domains where each deviation angle is slightly different. Specifically, the grain oriented electrical steel sheet according to the present embodiment includes the local and low-angle boundary which divides the inside of secondary recrystallized grain, in addition to the comparatively high-angle boundary which corresponds to the grain boundary of secondary recrystallized grain.

In addition, in the grain oriented electrical steel sheet according to the present embodiment of the present invention, the relationship between the deviation angle $\gamma$ and the deviation angle $\alpha$ and the relationship between the deviation angle $\gamma$ and the deviation angle $\beta$ are favorably controlled in the transverse direction C.

Specifically, the grain oriented electrical steel sheet according to the present embodiment includes, as a chemical composition, by mass%,

2.0 to 7.0% of Si,
0 to 0.030% of Nb,
0 to 0.030% of V,
0 to 0.030% of Mo,
0 to 0.030% of Ta,
0 to 0.030% of W,
0 to 0.0050% of C,
0 to 1.0% of Mn,
0 to 0.0150% of S,
0 to 0.0150% of Se,
0 to 0.0650% of Al,
0 to 0.0050% of N,
0 to 0.40% of Cu,
0 to 0.010% of Bi,
0 to 0.080% of B,
0 to 0.50% of P,
0 to 0.0150% of Ti,

0 to 0.10% of Sn,

0 to 0.10% of Sb,

0 to 0.30% of Cr,

0 to 1.0% of Ni, and

a balance consisting of Fe and impurities, and

includes a texture aligned with Goss orientation.

When $\alpha$ is defined as a deviation angle from an ideal Goss orientation based on a rotation axis parallel to a normal direction Z,

when $\beta$ is defined as a deviation angle from the ideal Goss orientation based on a rotation axis parallel to a transverse direction C,

when $\gamma$ is defined as a deviation angle from the ideal Goss orientation based on a rotation axis parallel to a rolling direction L,

when $(\alpha_1\ \beta_1\ \gamma_1)$ and $(\alpha_2\ \beta_2\ \gamma_2)$ represent deviation angles of crystal orientations measured at two measurement points which are adjacent on a sheet surface and which have an interval of 1 mm,

when a boundary condition BA$\alpha$ is defined as $|\alpha_2 - \alpha_1| \geq 0.5°$ and a grain size RA$\alpha_C$ is defined as an average grain size obtained based on the boundary condition BA$\alpha$ in the transverse direction C,

when a boundary condition BA$\beta$ is defined as $|\beta_2 - \beta_1| \geq 0.5°$ and a grain size RA$\beta_C$ is defined as an average grain size obtained based on the boundary condition BA$\beta$ in the transverse direction C,

when a boundary condition BAy is defined as $|\gamma_2 - \gamma_1| \geq 0.5°$ and a grain size RA$\gamma_C$ is defined as an average grain size obtained based on the boundary condition BA$\gamma$ in the transverse direction C, and

when a boundary condition BB is defined as $[(\alpha_2 - \alpha_1)^2 + (\beta_2 - \beta_1)^2 + (\gamma_2 - \gamma_1)^2]^{1/2} \geq 2.0°$,

a boundary which satisfies the boundary condition BA$\gamma$ and which does not satisfy the boundary condition BB is included,

the grain size RA$\alpha_C$ and the grain size RA$\gamma_C$ satisfy RA$\gamma_C$ < RA$\alpha_C$, and

the grain size RA$\beta_C$ and the grain size RA$\gamma_C$ satisfy RA$\gamma_C$ < RA$\beta_C$.

Although the grain oriented electrical steel sheet according to the present embodiment of the present invention includes the boundary which satisfies the boundary condition BA$\gamma$ and which does not satisfy the boundary condition BB as explained above, the boundary which satisfies the boundary condition BA$\alpha$ and which does not satisfy the boundary condition BB and the boundary which satisfies the boundary condition BA$\beta$ and which does not satisfy the boundary condition BB may be included.

In the following description, the boundary condition BA$\alpha$, the boundary condition BA$\beta$, and the boundary condition BA$\gamma$ may be referred to as simply "boundary condition BA". In the same way, the average grain size RA$\alpha_C$, the average grain size RA$\beta_C$, and the average grain size RA$\gamma_C$ may be referred to as simply "average grain size RA".

The boundary which satisfies the boundary condition BB substantially corresponds to the grain boundary of secondary recrystallized grain which is observed when the conventional grain oriented electrical steel sheet is macro-etched. In addition to the boundary which satisfies the boundary condition BB, the grain oriented electrical steel sheet according to the present embodiment includes, at a relatively high frequency, the boundary which satisfies the boundary condition BAy and which does not satisfy the boundary condition BB. The boundary which satisfies the boundary condition BAy and which does not satisfy the boundary condition BB corresponds to the local and low-angle boundary which divides the inside of secondary recrystallized grain. Specifically, in the present embodiment, the secondary recrystallized grain becomes the state of being finely divided into the small domains where each deviation angle is slightly different.

The conventional grain oriented electrical steel sheet may include the secondary recrystallized grain boundary which satisfies the boundary condition BB. Moreover, the conventional grain oriented electrical steel sheet may include the shift of the deviation angle in the secondary recrystallized grain. However, in the conventional grain oriented electrical steel sheet, since the deviation angle tends to shift continuously in the secondary recrystallized grain, the shift of the deviation angle in the conventional grain oriented electrical steel sheet hardly satisfies the boundary condition BAy.

For instance, in the conventional grain oriented electrical steel sheet, it may be possible to detect the long range shift of the deviation angle in the secondary recrystallized grain, but it is hard to detect the short range shift of the deviation angle in the secondary recrystallized grain (it is hard to satisfy the boundary condition BA$\gamma$), because the local shift is slight. On the other hand, in the grain oriented electrical steel sheet according to the present embodiment, the deviation angle locally shifts in short range, and thus, the shift thereof can be detected as the boundary. Specifically, the grain oriented electrical steel sheet according to the present embodiment includes, at a relatively high frequency, the boundary which satisfies the boundary condition BAy and which does not satisfy the boundary condition BB, between the two measurement points which are adjacent in the secondary recrystallized grain and which have the interval of 1 mm.

In the grain oriented electrical steel sheet according to the present embodiment, the boundary which divides the inside of secondary recrystallized grain is purposely elaborated by optimally controlling the production conditions as described later. In addition, in the grain oriented electrical steel sheet according to the present embodiment, the secondary recrystallized grain is controlled to the state such that the grain is divided into the small domains where each deviation angle is slightly different, and the relationship between the deviation angle $\gamma$ and the deviation angle $\alpha$ and the relationship between the deviation angle $\gamma$ and the deviation angle $\beta$ are controlled in the transverse direction C. As a result, the magnetostriction velocity level (Lva) in middle and high magnetic field range is favorably improved.

1. Crystal orientation

The notation of crystal orientation in the present embodiment is described.

In the present embodiment, the {110}<001> orientation is distinguished into two orientations which are "actual {110}<001> orientation" and "ideal {110}<001> orientation". The above reason is that, in the present embodiment, it is necessary to distinguish between the {110}<001> orientation representing the crystal orientation of the practical steel sheet and the {110}<001> orientation representing the academic crystal orientation.

In general, in the measurement of the crystal orientation of the practical steel sheet after recrystallization, the crystal orientation is determined without strictly distinguishing the misorientation of approximately ± 2.5°. In the conventional grain oriented electrical steel sheet, the "{110}<001> orientation" is regarded as the orientation range within approximately ± 2.5° centered on the geometrically ideal {110}<001> orientation. On the other hand, in the present embodiment, it is necessary to accurately distinguish the misorientation of ± 2.5° or less.

Thus, in the present embodiment, although the simply "{110}<001> orientation (Goss orientation)" is utilized as conventional for expressing the actual orientation of the grain oriented electrical steel sheet, the "ideal {110}<001> orientation (ideal Goss orientation)" is utilized for expressing the geometrically ideal {110}<001> orientation, in order to avoid the confusion with the {110}<001> orientation used in conventional publication.

For instance, in the present embodiment, the explanation such that "the {110}<001> orientation of the grain oriented electrical steel sheet according to the present embodiment is deviated by 2° from the ideal {110}<001> orientation" may be included.

In addition, in the present embodiment, the following four angles $\alpha$, $\beta$, $\gamma$ and $\phi$ are used, which relates to the crystal orientation identified in the grain oriented electrical steel sheet.

Deviation angle $\alpha$ : a deviation angle from the ideal {110}<001> orientation around the normal direction Z, which is identified in the grain oriented electrical steel sheet.

Deviation angle $\beta$ : a deviation angle from the ideal {110}<001> orientation around the transverse direction C, which is identified in the grain oriented electrical steel sheet.

Deviation angle $\gamma$ : a deviation angle from the ideal {110}<001> orientation around the rolling direction L, which is identified in the grain oriented electrical steel sheet.

A schema illustrating the deviation angle $\alpha$, the deviation angle $\beta$, and the deviation angle $\gamma$ is shown in Figure 1.

Angle $\phi$ : an angle obtained by $\phi = [(\alpha_2 - \alpha_1)^2 + (\beta_2 - \beta_1)^2 + (\gamma_2 - \gamma_1)^2]^{1/2}$, when $(\alpha_1\ \beta_1\ \gamma_1)$ and $(\alpha_2\ \beta_2\ \gamma_2)$ represent the deviation angles of the crystal orientations measured at two measurement points which are adjacent on the rolled surface of the grain oriented electrical steel sheet and which have the interval of 1 mm.

The angle $\phi$ may be referred to as "three-dimensional misorientation".

2. Grain boundary of grain oriented electrical steel sheet

In the grain oriented electrical steel sheet according to the present embodiment, in particular, a local orientation change is utilized in order to control the relationship between the deviation angle $\gamma$ and the deviation angle $\alpha$ and the relationship between the deviation angle $\gamma$ and the deviation angle $\beta$ in the transverse direction C. Herein, the above local orientation change corresponds to the orientation change which occurs during the growth of secondary recrystallized grain and which is not conventionally recognized as the boundary because the amount of change thereof is slight. Hereinafter, the orientation change which occurs so as to divide one secondary recrystallized grain into the small domains where each deviation angle is slightly different may be referred to as "switching".

Moreover, the boundary which divides one secondary recrystallized grain may be referred to as "subboundary", and the grain segmented by the boundary including the subboundary may be referred to as "subgrain".

Moreover, the boundary considering the misorientation of the deviation angle $\alpha$ (the boundary which satisfies the boundary condition BA$\alpha$) may be referred to as "$\alpha$ subboundary", and the grain segmented by using the $\alpha$ subboundary as the boundary may be referred to as "$\alpha$ subgrain". The boundary considering the misorientation of the deviation angle $\beta$ (the boundary which satisfies the boundary condition BA$\beta$) may be referred to as "$\beta$ subboundary", and the grain segmented by using the $\beta$ subboundary as the boundary may be referred to as "$\beta$ subgrain". The boundary considering the misorientation of the deviation angle $\gamma$ (the boundary which satisfies the boundary condition BA$\gamma$) may be referred to as "$\gamma$ subboundary", and the grain segmented by using the $\gamma$ subboundary as the boundary may be referred to as "$\gamma$ subgrain".

Moreover, hereinafter, the magnetostriction velocity level (Lva) in middle and high magnetic field range which is the characteristic related to the present embodiment may be referred to as simply "magnetostriction velocity level".

It seems that the above switching has the orientation change of approximately 1° (lower than 2°) and occurs during growing the secondary recrystallized grain. Although the details are explained below in connection with the producing method, it is important to grow the secondary recrystallized grain under conditions such that the switching easily occurs. For instance, it is important to initiate the secondary recrystallization from a relatively low temperature by controlling the grain size of the primary recrystallized grain and to maintain the secondary recrystallization up to higher temperature by controlling the type and amount of the inhibitor.

The reason why the control of the deviation angle influences the magnetic characteristics is not entirely clear, but is presumed as follows.

In general, the magnetization occurs due to the motion of 180° domain wall and the magnetization rotation from the easy magnetized direction. It seems that the domain wall motion and the magnetization rotation are influenced particularly near the grain boundary by the continuity of the magnetic domain with the adjoining grain or by the continuity of the magnetized direction, and that the misorientation with the adjoining grain influences the difficulty of the magnetization. In the present embodiment, since the switching is controlled, it seems that the switching (local orientation change) occurs at a relatively high frequency within one secondary recrystallized grain, makes the relative misorientation with the adjoining grain decrease, and thus makes the continuity of the crystal orientation increase in the grain oriented electrical steel sheet as a whole.

In the present embodiment, with respect to the orientation change including the switching, plural types of boundary conditions are defined. In the present embodiment, it is important to define the "boundary" with using these boundary conditions.

In the grain oriented electrical steel sheet which is practically produced, the deviation angle between the rolling direction and the <001> direction is controlled to be approximately 5° or less. Also, the above control is conducted in the grain oriented electrical steel sheet according to the present embodiment. Thus, for the definition of the "boundary" of the grain oriented electrical steel sheet, it is not possible to use the general definition of the grain boundary (high angle tilt boundary) which is "a boundary where the misorientation with the adjoining region is 15° or more". For instance, in the conventional grain oriented electrical steel sheet, the grain boundary is revealed by the macro-etching of the steel surface, and the misorientation between both sides of the grain boundary is approximately 2 to 3° in general.

In the present embodiment, as described later, it is necessary to accurately define the boundary between the crystals. Thus, for measuring the grain size, the method which is based on the visual evaluation such as the macro-etching is not adopted.

In the present embodiment, for identifying the boundary, a measurement line including at least 500 measurement points with 1 mm intervals in the transverse direction is arranged, and the crystal orientations are measured. For instance, the crystal orientation may be measured by the X-ray diffraction method (Laue method). The Laue method is the method such that X-ray beam is irradiated the steel sheet with and that the diffraction spots which are transmitted or reflected are analyzed. By analyzing the diffraction spots, it is possible to identify the crystal orientation at the point irradiated with X-ray beam. Moreover, by changing the irradiated point and by analyzing the diffraction spots in plural points, it is possible to obtain the distribution of the crystal orientation based on each irradiated point. The Laue method is the preferred method for identifying the crystal orientation of the metallographic structure in which the grains are coarse.

The measurement points for the crystal orientation may be at least 500 points. It is preferable that the number of measurement points appropriately increases depending on the grain size of the secondary recrystallized grain. For instance, when the number of secondary recrystallized grains included in the measurement line is less than 10 grains in a case where the number of measurement points for identifying the crystal orientation is 500 points, it is preferable to extend the above measurement line by increasing the measurement points with 1 mm intervals so as to include 10 grains or more of the secondary recrystallized grains in the measurement line.

The crystal orientations are identified at each measurement point with 1 mm interval on the rolled surface, and then, the deviation angle $\alpha$, the deviation angle $\beta$, and the deviation angle $\gamma$ are identified at each measurement point. Based on the identified deviation angles at each measurement point, it is judged whether or not the boundary is included between two adjacent measurement points. Specifically, it is judged whether or not the two adjacent measurement points satisfy the boundary condition BA and/or the boundary condition BB.

Specifically, when $(\alpha_1\ \beta_1\ \gamma_1)$ and $(\alpha_2\ \beta_2\ \gamma_2)$ represent the deviation angles of the crystal orientations measured at two adjacent measurement points, the boundary condition BA$\alpha$ is defined as $|\alpha_2 - \alpha_1| \geq 0.5°$, the boundary condition BA$\beta$ is defined as $|\beta_2 - \beta_1| \geq 0.5°$, the boundary condition BAy is defined as $|\gamma_2 - \gamma_1| \geq 0.5°$ and the boundary condition BB is defined as $[(\alpha_2 - \alpha_1)^2 + (\beta_2 - \beta_1)^2 + (\gamma_2 - \gamma_1)^2]^{1/2} \geq 2.0°$. Furthermore, it is judged whether or not the boundary satisfying the boundary condition BA and/or the boundary condition BB is included between two adjacent measurement points.

The boundary which satisfies the boundary condition BB results in the three-dimensional misorientation (the angle $\phi$ ) of 2.0° or more between two points across the boundary, and it can be said that the boundary corresponds to the conventional grain boundary of the secondary recrystallized grain which is revealed by the macro-etching.

In addition to the boundary which satisfies the boundary condition BB, the grain oriented electrical steel sheet according to the present embodiment includes, at a relatively high frequency, the boundary intimately relating to the "switching", specifically the boundary which satisfies the boundary which satisfies the boundary condition BAy and which does not satisfy the boundary condition BB. The boundary defined above corresponds to the boundary which divides one secondary recrystallized grain into the small domains where each deviation angle is slightly different.

The above boundaries may be determined by using different measurement data. However, in consideration of the complication of measurement and the discrepancy from actual state caused by the different data, it is preferable to determine the above boundaries by using the deviation angles of the crystal orientations obtained from the same measurement line (at least 500 measurement points with 1 mm intervals on the rolled surface).

The grain oriented electrical steel sheet according to the present embodiment includes, at a relatively high frequency, the boundary which satisfies the boundary condition BAy and which does not satisfy the boundary condition BB, in addition to the existence of boundaries which satisfy the boundary condition BB. Thereby, the secondary recrystallized grain becomes the state such that the grain is divided into the small domains where each deviation angle $\beta$ is slightly different.

For instance, in the present embodiment, the secondary recrystallized grain is divided into the small domains where each deviation angle is slightly different, and thus, it is preferable that the subboundary which divides one secondary recrystallized grain is included at a relatively high frequency as compared with the conventional grain boundary of the secondary recrystallized grain.

Specifically, when the crystal orientations are measured on at least 500 measurement points with 1 mm intervals on the rolled surface, when the deviation angles are identified at each measurement point, and when the boundary conditions are applied to two adjacent measurement points, the "boundary which satisfies the boundary condition BAy" may be included at a ratio of 1.05 times or more as compared with the "boundary which satisfies the boundary condition BB". Specifically, when the boundary conditions are applied as explained above, the values of dividing the "boundary which satisfies the boundary condition BAy" by the number of the "boundary which satisfies the boundary condition BB" may be 1.05 or more. In the present embodiment, when the above value is 1.05 or more, the grain oriented electrical steel sheet is judged to include the "boundary which satisfies the boundary condition BAy and which does not satisfy the boundary condition BB".

The upper limit of the values of dividing the "boundary which satisfies the boundary condition BAy" by the number of the "boundary which satisfies the boundary condition BB" is not particularly limited. For instance, the value may be 80 or less, may be 40 or less, or may be 30 or less.

3. Grain boundary of grain oriented electrical steel sheet

In the grain oriented electrical steel sheet according to the present embodiment, it is important to control the relationship between the deviation angle $\gamma$ and the deviation angle $\alpha$ and the relationship between the deviation angle $\gamma$ and the deviation angle $\beta$, in addition to dividing one secondary recrystallized grain into small domains by the subboundary. Specifically, the subboundaries resulted from the changes in the deviation angle $\gamma$ are formed more than the subboundaries resulted from the change in the deviation angle $\alpha$ and the deviation angle $\beta$ in regard to the transverse direction C.

In other words, when a grain size $RA\alpha_C$ is defined as an average grain size obtained based on the boundary condition BA$\alpha$ in the transverse direction C,

when a grain size $RA\beta_C$ is defined as an average grain size obtained based on the boundary condition BA$\beta$ in the transverse direction C, and

when a grain size $RA\gamma_C$ is defined as an average grain size obtained based on the boundary condition BAy in the transverse direction C,

the grain size $RA\alpha_C$ and the grain size $RA\gamma_C$ satisfy a following expression (1), and

the grain size $BA\beta_C$ and the grain size $RA\gamma_C$ satisfy a following expression (2).

$$RA\gamma_C < RA\alpha_C \qquad .....(\text{expression 1})$$

$$RA\gamma_C < RA\beta_C \qquad .....(\text{expression 2})$$

The fact that the grain oriented electrical steel sheet according to the present embodiment satisfies the expression (1) and the expression (2) indicates that the switching regarding the deviation angle $\gamma$ is more than the switching regarding the deviation angle $\alpha$ and the deviation angle $\beta$. It is considered that the magnetic domain structure of the steel sheet is changed by introducing the switching regarding the deviation angle $\gamma$ into the steel sheet more than the switching regarding the deviation angle $\alpha$ and the deviation angle $\beta$.

The detailed mechanism is not fully understood, but it is presumed as follows. In a case where the small orientation change such as the switching regarding the deviation angle $\gamma$ occurs more than those regarding the deviation angle $\alpha$ and the deviation angle $\beta$, the generation and disappearance of the closure domain may be suppressed without deteriorating the continuity of the 180° domain wall. As a result, the magnetostriction velocity level (Lva) may be decreased.

The relationship between the grain size $RA\alpha_C$ and the grain size $RA\gamma_C$ satisfies preferably $RA\gamma_C \div RA\alpha_C \le 0.90$, and more preferably $RA\gamma_C \div RA\alpha_C \le 0.80$. The lower limit of $RA\gamma_C \div RA\alpha_C$ is not particularly limited, but may be 0.20 for instance. In the same way, the relationship between the grain size $RA\beta_C$ and the grain size $RA\gamma_C$ satisfies preferably $RA\gamma_C \div RA\beta_C \le 0.90$, and more preferably $RA\gamma_C \div RA\beta_C \le 0.80$. The lower limit of $RA\gamma_C \div RA\beta_C$ is not particularly limited, but may be 0.20 for instance.

Moreover, in the grain oriented electrical steel sheet according to the second embodiment of the present invention, it is preferable that a grain size of the subgrain based on the deviation angle $\gamma$ in the transverse direction is smaller than the grain size of the secondary recrystallized grain in the transverse direction.

Specifically, when a grain size $RA\gamma_C$ is defined as an average grain size obtained based on the boundary condition BAy in the transverse direction C, and

when a grain size $RB_C$ is defined as an average grain size obtained based on the boundary condition BB in the transverse direction C,

it is preferable that the grain size $RA\gamma_C$ and the grain size $RB_C$ satisfy a following expression (3).

$$1.10 \le RB_C \div RA\gamma_C \qquad \text{.....(expression 3)}$$

The above feature represents the state of the existence of the "switching" in the transverse direction. In other words, the above feature represents the situation such that, in the secondary recrystallized grain having the grain boundary satisfying that the angle $\phi$ is 2° or more, the grain having at least one boundary satisfying that $|\gamma_2 - \gamma_1|$ is 0.5° or more and that the angle $\phi$ is less than 2° is included at an appropriate frequency along the transverse direction. In the present embodiment, the above switching situation is evaluated and judged by using the above expression (3).

When the grain size RBc is small, or when the grain size $RA\gamma_C$ is large because the grain size $RB_C$ is large but the switching is insufficient, the value of $RB_C / RA\gamma_C$ becomes less than 1.10. When the value of $RB_C / RA\gamma_C$ becomes less than 1.10, the switching regarding the deviation angle $\gamma$ may be insufficient, and the magnetostriction velocity level may not be sufficiently improved.

The value of $RBc / RA\gamma_C$ is preferably 1.30 or more, is more preferably 1.50 or more, is further more preferably 2.0 or more, is further more preferably 3.0 or more, and is further more preferably 5.0 or more.

The upper limit of the value of $RB_C / RA\gamma_C$ is not particularly limited. When the switching occurs sufficiently and the value of $RB_C / RA\gamma_C$ becomes large, the continuity of the crystal orientation increases in the grain oriented electrical steel sheet as a whole, which is preferable for the improvement of the magnetostriction velocity level. On the other hand, the switching causes residual lattice defects in the grain. When the switching occurs excessively, it is concerned that the improvement effect on the iron loss may decrease. Thus, the upper limit of the value of $RB_C / RA\gamma_C$ may be practically 80. When the iron loss is needed to be considered in particular, the upper limit of the value of $RB_C / RA\gamma_C$ is preferably 40, and is more preferably 30.

Herein, there is a case such that the value of $RB_C / RA\gamma_C$ become less than 1.0. The $RB_C$ is the average grain size in the transverse direction which is defined based on the boundary where the angle $\phi$ is 2° or more. On the other hand, the $RA\gamma_C$ is the average grain size in the transverse direction which is defined based on the boundary where $|\gamma_2 - \gamma_1|$ is 0.5° or more. When considering simply, it seems that the boundary where the lower limit of the misorientation is lower is detected more frequently. In other words, it seems that the $RB_C$ is always larger than the $RA\gamma_C$ and that the value of $RB_C / RA\gamma_C$ is always 1.0 or more.

However, the $RB_C$ is the grain size which is obtained from the boundary based on the angle $\phi$ and the $RA\gamma_C$ is the grain size which is obtained from the boundary based on the deviation angle $\gamma$. The definition of grain boundaries for obtaining the grain sizes with respect to the $RB_C$ is different from those with respect to the $RA\gamma_C$. Thus, the value of $RB_C / RA\gamma_C$ may be less than 1.0.

For instance, even when $|\gamma_2 - \gamma_1|$ is less than 0.5° (e.g., 0°), as long as the deviation angle $\alpha$ and the deviation angle $\beta$ are large, the angle $\phi$ becomes sufficiently large. In other words, there is a case such that the boundary where the boundary condition BAy is not satisfied but the boundary condition BB is satisfied exists. When the above boundary increases, the value of the $RB_C$ decreases, and as a result, the value of $RB_C / RA\gamma_C$ may be less than 1.0. In the present embodiment, each condition is controlled so that the switching with respect to the deviation angle $\gamma$ occurs more frequently. When the control of the switching is insufficient and the gap from the desired condition of the present embodiment is large, the change with respect to the deviation angle $\gamma$ does not occur, and the value of $RB_C / RA\gamma_C$ may be less than 1.0. In the present embodiment, as mentioned above, it is preferable to sufficiently increase in the occurrence frequency of the $\gamma$ subboundary and to control the value of $RB_C / RA\gamma_C$ to 1.10 or more.

Herein, in the grain oriented electrical steel sheet according to the present embodiment, a misorientation between two measurement points which are adjacent on the sheet surface and which have the interval of 1 mm is classified into case 1 to case 4 shown in Table 1. The above $RB_C$ is determined based on the boundary satisfying the case 1 and/or the case 2 shown in Table 1, and the above $RA\gamma_C$ is determined based on the boundary satisfying the case 1 and/or the case 3 shown in Table 1. For instance, the deviation angles of the crystal orientations are measured on the measurement line including at least 500 measurement points along the transverse direction, and the RBc is determined as the average length of the line segment between the boundaries satisfying the case 1 and/or the case 2 on the measurement line. In the same way, with respect to the deviation angle $\gamma$, the grain size $RA\gamma_C$ is determined as the average length of the line segment between the boundaries (specifically, $\gamma$ subboundary) satisfying the case 1 and/or the case 3 on the measurement line.

[Table 1]

| | CASE1 | CASE2 | CASE3 | CASE4 |
|---|---|---|---|---|
| BOUNDARY CONDITION BA | 0.5° OR MORE | LESS THAN 0.5° | 0.5° OR MORE | LESS THAN 0.5° |
| BOUNDARY CONDITION BB | 2.0° OR MORE | 2.0° OR MORE | LESS THAN 2.0° | LESS THAN 2.0° |
| TYPE OF BOUNDARY OF BOUNDARY | "GENERAL GRAIN BOUNDARY OF SECONDARY RECRYSTALLIZED GRAIN WHICH IS CONVENTIONALLY OBSERVED" AND "SUBBOUNDARY" | "GENERAL GRAIN BOUNDARY OF SECONDARY RECRYSTALLIZED GRAIN WHICH IS CONVENTIONALLY OBSERVED" | "SUBBOUNDARY" | "NOT BOUNDARY SPECIFICALLY,NOT ""GENERAL GRAIN BOUNDARY OF SECONDARY RECRYSTALLIZED GRAIN WHICH IS CONVENTIONALLY OBSERVED"" AND NOT ""$\beta$ SUBBOUNDARY""" |

The reason why the control of the value of $RB_C / RA\gamma_C$ influences the magnetostriction velocity level (Lva) is not entirely clear, but is presumed as follows. It seems that, when the small orientation change such as the switching regarding the deviation angle $\gamma$ occurs, the generation and disappearance of the closure domain are suppressed without deteriorating the continuity of the 180° domain wall.

In addition, in the grain oriented electrical steel sheet according to the present embodiment, it is preferable that the grain size RBc is 15 mm or more.

It seems that the switching occurs caused by the dislocations piled up during the grain growth of the secondary recrystallized grain. Thus, after the switching occurs once and before next switching occurs, it is needed that the secondary recrystallized grain grows to a certain size. When the grain size $RB_C$ is smaller than 15 mm, the switching may be difficult to occur, and it may be difficult to sufficiently improve the magnetostriction velocity level by the switching. The grain size $RB_C$ is preferably 22 mm or larger, is more preferably 30 mm or larger, and is further more preferably 40 mm or larger.

The upper limit of the grain size $RB_L$ is not particularly limited. For instance, in the typical production of the grain oriented electrical steel sheet, since the grain having the {110}<001> orientation is formed due to the growth in the secondary recrystallization by heating the coiled steel sheet after the primary recrystallization, the secondary recrystallized grain can grow from the coil edge where the temperature rises antecedently toward the coil center where the temperature rises subsequently. In the producing method, when the coil width is 1000 mm for instance, the upper limit of the grain size $RB_C$ may be 500 mm which is approximately half of the coil width. Of course, in each embodiment, it is not excluded that the grain size $RB_C$ is the full width of coil.

In addition, in the grain oriented electrical steel sheet according to the present embodiment, it is preferable that the grain size $RA\gamma_C$ is 40 mm or less.

Since the state such that the grain size $RA\gamma_C$ is smaller indicates that the occurrence frequency of the switching in the transverse direction is higher, the grain size $RA\gamma_C$ is preferably 40 mm or smaller. The grain size $RA\gamma_C$ is more

preferably 30 mm or smaller.

The lower limit of the grain size $RA_{\gamma C}$ is not particularly limited. In the present embodiment, since the interval for measuring the crystal orientation is 1 mm, the lower limit of the grain size $RA_{\gamma C}$ may be 1 mm. However, in the present embodiment, even when the grain size $RA_{\gamma C}$ become smaller than 1 mm by controlling the interval for measuring the crystal orientation to less than 1 mm, the above steel sheet is not excluded. Herein, the switching causes residual lattice defects somewhat. When the switching occurs excessively, it is concerned that the magnetic characteristics are negatively affected. The lower limit of the grain size $RA_{\gamma C}$ is preferably 5 mm when considering the industrial feasibility.

In the grain oriented electrical steel sheet according to the present embodiment, the measurement result of the grain size maximally includes an ambiguity of 2 mm for each grain. Thus, when the grain size is measured (when the crystal orientations are measured on at least 500 measurement points with 1 mm intervals on the rolled surface), it is preferable that the above measurements are conducted under conditions such that the measurement areas are totally 5 areas or more and are the areas which are sufficiently distant from each other in the direction orthogonal to the direction for determining the grain size in plane, specifically, the areas where the different grains can be measured. By calculating the average from all grain sizes obtained by the measurements at 5 areas or more in total, it is possible to reduce the above ambiguity. For instance, the measurements may be conducted at 5 areas or more which are sufficiently distant from each other in the rolling direction for measuring the above grain sizes, and then, the average grain size may be determined from the orientation measurements whose measurement points of 2500 or more in total.

4. Deviation angle from ideal {110}<001 > orientation

In the steel sheet in which the switching explained above occurs sufficiently, the "deviation angle" tends to be controlled to a characteristic range.

However in order to obtain the effects of the present embodiment, in particular, it is not an essential requirement to control the crystal orientation to align in the specific direction as with the conventional orientation control, for instance, to control the absolute value and standard deviation of the deviation angle to be small. For instance, in a case where the crystal orientation is gradually changed by the switching regarding the deviation angle, it is not an obstacle for the present embodiment that the absolute value of the deviation angle decreases close to zero. Moreover, for instance, in a case where the crystal orientation is gradually changed by the switching regarding the deviation angle, it is not an obstacle for the present embodiment that the crystal orientation in itself converges with the specific orientation, and as a result, that the standard deviation of the deviation angle decreases close to zero.

In the present embodiment, it should not be considered that "one secondary recrystallized grain is regarded as a single crystal, and the secondary recrystallized grain has a strictly uniform crystal orientation". In other words, in the present embodiment, the small orientation changes which are not conventionally recognized as boundary are included in one coarse secondary recrystallized grain, and it is necessary to detect the small orientation changes.

Thus, for instance, it is preferable that the measurement points of the crystal orientation are distributed at even intervals in a predetermined area which is arranged so as to be independent of the boundaries of grain (the grain boundaries). Specifically, it is preferable that the measurement points are distributed at even intervals that is vertically and horizontally 5 mm intervals in the area of L mm × M mm (however, L, M > 100) where at least 20 grains or more are included on the steel surface, the crystal orientations are measured at each measurement point, and thereby, the data from 500 points or more are obtained. When the measurement point corresponds to the grain boundary or some defect, the data therefrom are not utilized. Moreover, it is needed to widen the above measurement area depending on an area required to determine the magnetic characteristics of the evaluated steel sheet (for instance, in regards to an actual coil, an area for measuring the magnetic characteristics which need to be described in the steel inspection certificate).

The grain oriented electrical steel sheet according to the above embodiment may have an intermediate layer and an insulation coating on the steel sheet. The crystal orientation, the boundary, the average grain size, and the like may be determined based on the steel sheet without the coating and the like. In other words, in a case where the grain oriented electrical steel sheet as the measurement specimen has the coating and the like on the surface thereon, the crystal orientation and the like may be measured after removing the coating and the like.

For instance, in order to remove the insulation coating, the grain oriented electrical steel sheet with the coating may be immersed in hot alkaline solution. Specifically, it is possible to remove the insulating coating from the grain oriented electrical steel sheet by immersing the steel sheet in sodium hydroxide aqueous solution which includes 30 to 50 mass% of NaOH and 50 to 70 mass% of $H_2O$ at 80 to 90°C for 5 to 10 minutes, washing it with water, and then, drying it. Moreover, the immersing time in sodium hydroxide aqueous solution may be adjusted depending on the thickness of insulating coating.

Moreover, for instance, in order to remove the intermediate layer, the grain oriented electrical steel sheet in which the insulation coating is removed may be immersed in hot hydrochloric acid. Specifically, it is possible to remove the intermediate layer by previously investigating the preferred concentration of hydrochloric acid for removing the intermediate layer to be dissolved, immersing the steel sheet in the hydrochloric acid with the above concentration such as 30 to 40 mass% of HCl at 80 to 90°C for 1 to 5 minutes, washing it with water, and then, drying it. In general, layer and coating are removed by selectively using the solution, for instance, the alkaline solution is used for removing the insulation coating, and the hydrochloric acid is used for removing the intermediate layer.

5. Chemical composition

The grain oriented electrical steel sheet according to the present embodiment includes, as the chemical composition, base elements, optional elements as necessary, and a balance consisting of Fe and impurities.

The grain oriented electrical steel sheet according to the present embodiment includes 2.0 to 7.0% of Si (silicon) in mass percentage as the base elements (main alloying elements).

The Si content is preferably 2.0 to 7.0% in order to control the crystal orientation to align in the {110}<001> orientation.

In the present embodiment, the grain oriented electrical steel sheet may include the impurities as the chemical composition. The impurities correspond to elements which are contaminated during industrial production of steel from ores and scrap that are used as a raw material of steel, or from environment of a production process. For instance, an upper limit of the impurities may be 5% in total.

Moreover, in the present embodiment, the grain oriented electrical steel sheet may include the optional elements in addition to the base elements and the impurities. For instance, as substitution for a part of Fe which is the balance, the grain oriented electrical steel sheet may include the optional elements such as Nb, V, Mo, Ta, W, C, Mn, S, Se, Al, N, Cu, Bi, B, P, Ti, Sn, Sb, Cr, or Ni. The optional elements may be included as necessary. Thus, a lower limit of the respective optional elements does not need to be limited, and the lower limit may be 0%. Moreover, even if the optional elements may be included as impurities, the above mentioned effects are not affected.

    0 to 0.030% of Nb (niobium)
    0 to 0.030% of V (vanadium)
    0 to 0.030% of Mo (molybdenum)
    0 to 0.030% of Ta (tantalum)
    0 to 0.030% of W (tungsten)

Nb, V, Mo, Ta, and W can be utilized as an element having the effects characteristically in the present embodiment. In the following description, at least one element selected from the group consisting of Nb, V, Mo, Ta, and W may be referred to as "Nb group element" as a whole.

The Nb group element favorably influences the occurrence of the switching which is characteristic in the grain oriented electrical steel sheet according to the present embodiment. Herein, it is in the production process that the Nb group element influences the occurrence of the switching. Thus, the Nb group element does not need to be included in the final product which is the grain oriented electrical steel sheet according to the present embodiment. For instance, the Nb group element may tend to be released outside the system by the purification during the final annealing described later. In other words, even when the Nb group element is included in the slab and makes the occurrence frequency of the switching increase in the production process, the Nb group element may be released outside the system by the purification annealing. As mentioned above, the Nb group element may not be detected as the chemical composition of the final product.

Thus, in the present embodiment, with respect to an amount of the Nb group element as the chemical composition of the grain oriented electrical steel sheet which is the final product, only upper limit thereof is regulated. The upper limit of the Nb group element may be 0.030% respectively. On the other hand, as mentioned above, even when the Nb group element is utilized in the production process, the amount of the Nb group element may be zero as the final product. Thus, a lower limit of the Nb group element is not particularly limited. The lower limit of the Nb group element may be zero respectively.

In the present embodiment of the present invention, it is preferable that the grain oriented electrical steel sheet includes, as the chemical composition, at least one selected from a group consisting of Nb, V, Mo, Ta, and W and that the amount thereof is 0.0030 to 0.030 mass% in total.

It is unlikely that the amount of the Nb group element increases during the production. Thus, when the Nb group element is detected as the chemical composition of the final product, the above situation implies that the switching is controlled by the Nb group element in the production process. In order to favorably control the switching in the production process, the total amount of the Nb group element in the final product is preferably 0.003% or more, and is more preferably 0.005% or more. On the other hand, when the total amount of the Nb group element in the final product is more than 0.030%, the occurrence frequency of the switching is maintained, but the magnetic characteristics may deteriorate. Thus, the total amount of the Nb group element in the final product is preferably 0.030% or less. The features of the Nb group element are explained later in connection with the producing method.

    0 to 0.0050% of C (carbon)
    0 to 1.0% of Mn (manganese)
    0 to 0.0150% of S (sulfur)
    0 to 0.0150% of Se (selenium)
    0 to 0.0650% of Al (acid-soluble aluminum)
    0 to 0.0050% of N (nitrogen)
    0 to 0.40% of Cu (copper)
    0 to 0.010% of Bi (bismuth)
    0 to 0.080% of B (boron)
    0 to 0.50% of P (phosphorus)
    0 to 0.0150% of Ti (titanium)
    0 to 0.10% of Sn (tin)
    0 to 0.10% of Sb (antimony)
    0 to 0.30% of Cr (chrome)
    0 to 1.0% of Ni (nickel)

The optional elements may be included as necessary. Thus, a lower limit of the respective optional elements does not need to be limited, and the lower limit may be 0%. The total amount of S and Se is preferably 0 to 0.0150%. The total of S and Se indicates that at least one of S and Se is included, and the amount thereof corresponds to the above total amount.

In the grain oriented electrical steel sheet, the chemical composition changes relatively drastically (the amount of alloying element decreases) through the decarburization annealing and through the purification annealing during secondary recrystallization. Depending on the element, the amount of the element may decreases through the purification annealing to an undetectable level (1 ppm or less) using the typical analysis method. The above mentioned chemical composition of the grain oriented electrical steel sheet according to the present embodiment is the chemical composition as the final product. In general, the chemical composition of the final product is different from the chemical composition of the slab as the starting material.

The chemical composition of the grain oriented electrical steel sheet according to the present embodiment may be measured by typical analytical methods for the steel. For instance, the chemical composition of the grain oriented electrical steel sheet may be measured by using ICP-AES (Inductively Coupled Plasma-Atomic Emission Spectrometer: inductively coupled plasma emission spectroscopy spectrometry). Specifically, it is possible to obtain the chemical composition by conducting the measurement by Shimadzu ICPS-8100 and the like (measurement device) under the condition based on calibration curve prepared in advance using samples with 35mm square taken from the grain oriented electrical steel sheet. Herein, the acid soluble Al may be measured by ICP-AES using filtrate after heating and dissolving the sample in acid. In addition, C and S may be measured by the infrared absorption method after combustion, and N may be measured by the thermal conductometric method after fusion in a current of inert gas.

The above chemical composition is the composition of grain oriented electrical steel sheet. When the grain oriented electrical steel sheet used as the measurement sample has the insulating coating and the like on the surface thereof, the chemical composition is measured after removing the coating and the like by the above methods.

6. Layering structure and the like

In the grain oriented electrical steel sheet according to the present embodiment, a layering structure on the steel sheet, a treatment for refining the magnetic domain, and the like are not particularly limited. In the present embodiment, an optional coating may be formed on the steel sheet according to the purpose, and a magnetic domain refining treatment may be applied according to the necessity.

In the grain oriented electrical steel sheet according to the present embodiment of the present invention, the intermediate layer may be arranged in contact with the grain oriented electrical steel sheet and the insulation coating may be arranged in contact with the intermediate layer.

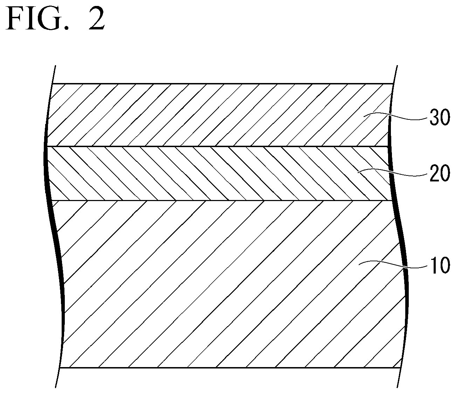

Figure 2 is a cross-sectional illustration of the grain oriented electrical steel sheet according to the preferred embodiment of the present invention. As shown in Figure 2, when viewing the cross section whose cutting direction is parallel to thickness direction, the grain oriented electrical steel sheet 10 (silicon steel sheet) according to the present embodiment may have the intermediate layer 20 which is arranged in contact with the grain oriented electrical steel sheet 10 (silicon steel sheet) and the insulation coating 30 which is arranged in contact with the intermediate layer 20.

For instance, the above intermediate layer may be a layer mainly including oxides, a layer mainly including carbides, a layer mainly including nitrides, a layer mainly including borides, a layer mainly including silicides, a layer mainly including phosphides, a layer mainly including sulfides, a layer mainly including intermetallic compounds, and the like. There intermediate layers may be formed by a heat treatment in an atmosphere where the redox properties are controlled, a chemical vapor deposition (CVD), a physical vapor deposition (PVD), and the like.

In the grain oriented electrical steel sheet according to the present embodiment of the present invention, the intermediate layer may be a forsterite film with an average thickness of 1 to 3 $\mu$m. Herein, the forsterite film corresponds to a layer mainly including $Mg_2SiO_4$. An interface between the forsterite film and the grain oriented electrical steel sheet becomes the interface such that the forsterite film intrudes the steel sheet when viewing the above cross section.

In the grain oriented electrical steel sheet according to the present embodiment of the present invention, the intermediate layer may be an oxide layer with an average thickness of 2 to 500 nm. Herein, the oxide layer corresponds to a layer mainly including $SiO_2$. An interface between the oxide layer and the grain oriented electrical steel sheet becomes the smooth interface when viewing the above cross section.

In addition, the above insulation coating may be an insulation coating which mainly includes phosphate and colloidal silica and whose average thickness is 0.1 to 10 $\mu$m, an insulation coating which mainly includes alumina sol and boric acid and whose average thickness is 0.5 to 8 $\mu$m, and the like.

In the grain oriented electrical steel sheet according to the present embodiment of the present invention, the magnetic domain may be refined by at least one of applying a local minute strain and forming a local groove. The local minute strain or the local groove may be applied or formed by laser, plasma, mechanical methods, etching, or other methods. For instance, the local minute strain or the local groove may be applied or formed lineally or punctiformly so as to extend in the direction intersecting the rolling direction on the rolled surface of steel sheet and so as to have the interval of 2 to 10 mm in the rolling direction.

7. Producing method

Next, a method for producing the grain oriented electrical steel sheet according to the present embodiment of the present invention is described.

The method for manufacturing the grain oriented electrical steel sheet according to the present embodiment is not limited to the following method. The following manufacturing method is an example for manufacturing the grain oriented electrical steel sheet according to the present embodiment.

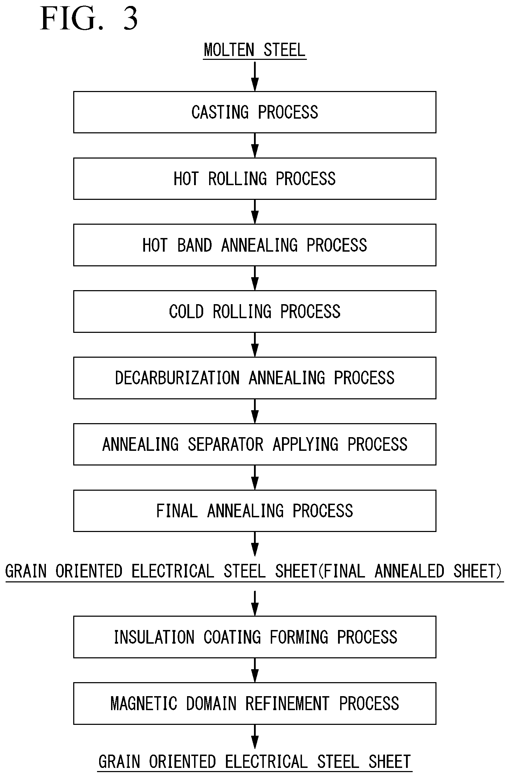

Figure 3 is a flow chart illustrating the method for producing the grain oriented electrical steel sheet according to the present embodiment of the present invention. As shown in Fig. 3, the method for producing the grain oriented electrical steel sheet (silicon steel sheet) according to the present embodiment includes a casting process, a hot rolling process, a hot band annealing process, a cold rolling process, a decarburization annealing process, an annealing separator applying process, and a final annealing process.

Specifically, the method for producing the grain oriented electrical steel sheet (silicon steel sheet) may be as follows.

In the casting process, a slab is cast so that the slab includes, as the chemical composition, by mass%, 2.0 to 7.0% of Si, 0 to 0.030% of Nb, 0 to 0.030% of V, 0 to 0.030% of Mo, 0 to 0.030% of Ta, 0 to 0.030% of W, 0 to 0.0850% of C, 0 to 1.0% of Mn, 0 to 0.0350% of S, 0 to 0.0350% of Se, 0 to 0.0650% of Al, 0 to 0.0120% of N, 0 to 0.40% of Cu, 0 to 0.010% of Bi, 0 to 0.080% of B, 0 to 0.50% of P, 0 to 0.0150% of Ti, 0 to 0.10% of Sn, 0 to 0.10% of Sb, 0 to 0.30% of Cr, 0 to 1.0% of Ni, and a balance consisting of Fe and impurities.

In the decarburization annealing process, a grain size of primary recrystallized grain is controlled to 23 $\mu$m or smaller.

In the final annealing process,

when a total amount of Nb, V, Mo, Ta, and W in the chemical composition of the slab is 0.0030 to 0.030%,
in a heating stage,
$PH_2O$ / $PH_2$ in 700 to 800°C is controlled to be 0.050 to 1.0,
at least one of $PH_2O$ / $PH_2$ in 900 to 950°C to be 0.010 to 0.10, $PH_2O$ / $PH_2$ in 950 to 1000°C to be 0.005 to 0.070, and $PH_2O$ / $PH_2$ in 1000 to 1050°C to be 0.0010 to 0.030 is satisfied,
holding time in 850 to 950°C is controlled to be 120 to 600 minutes,
holding time in 900 to 950°C is controlled to be 400 minutes or shorter, and
holding time in 950 to 1000°C is controlled to be 100 minutes or longer, or
when a total amount of Nb, V, Mo, Ta, and W in the chemical composition of the slab is not 0.0030 to 0.030%,
in a heating stage,
$PH_2O$ / $PH_2$ in 700 to 800°C is controlled to be 0.050 to 1.0,
$PH_2O$ / $PH_2$ in 900 to 950°C is controlled to be 0.010 to 0.10,
$PH_2O$ / $PH_2$ in 950 to 1000°C is controlled to be 0.005 to 0.070,
$PH_2O$ / $PH_2$ in 1000 to 1050°C is controlled to be 0.0010 to 0.030,

holding time in 850 to 950°C is controlled to be 120 to 600 minutes,
holding time in 900 to 950°C is controlled to be 350 minutes or shorter, and
holding time in 950 to 1000°C is controlled to be 200 minutes or longer.

The above $PH_2O$ / $PH_2$ is called oxidation degree, and is a ratio of vapor partial pressure $PH_2O$ to hydrogen partial pressure $PH_2$ in atmosphere gas.

The "switching" according to the present embodiment is controlled mainly by a factor to easily induce the orientation changes (switching) itself and a factor to periodically induce the orientation changes (switching) within one secondary recrystallized grain.

In order to easily induce the switching itself, it is effective to make the secondary recrystallization start from lower temperature. For instance, by controlling the grain size of the primary recrystallized grain or by utilizing the Nb group element, it is possible to control starting the secondary recrystallization to be lower temperature.

In order to periodically induce the switching within one secondary recrystallized grain, it is effective to make the secondary recrystallized grain grow continuously from lower temperature to higher temperature. For instance, by utilizing AlN and the like which are the conventional inhibitor at appropriate temperature and in appropriate atmosphere, it is possible to make the secondary recrystallized grain nucleate at lower temperature, to make the inhibitor ability maintain continuously up to higher temperature, and to periodically induce the switching up to higher temperature within one secondary recrystallized grain.

In other words, in order to favorably induce the switching, it is effective to suppress the nucleation of the secondary recrystallized grain at higher temperature and to make the secondary recrystallized grain nucleated at lower temperature preferentially grow up to higher temperature.

In order to control the switching which is the feature of the present embodiment, the above factors are important. In regards to the production conditions except the above, it is possible to apply a conventional known method for producing the grain oriented electrical steel sheet. For instance, the conventional known method may be a producing method utilizing MnS and AlN as inhibitor which are formed by high temperature slab heating, a producing method utilizing AlN as inhibitor which is formed by low temperature slab heating and subsequent nitridation, and the like. For the switching which is the feature of the present embodiment, any producing method may be applied. The embodiment is not limited to a specific producing method. Hereinafter, the method for controlling the switching by the producing method applied the nitridation is explained for instance.

(Casting process)

In the casting process, a slab is made. For instance, a method for making the slab is as follow. A molten steel is made (a steel is melted). The slab is made by using the molten steel. The slab may be made by continuous casting. An ingot may be made by using the molten steel, and then, the slab may be made by blooming the ingot. A thickness of the slab is not particularly limited. The thickness of the slab may be 150 to 350 mm for instance. The thickness of the slab is preferably 220 to 280 mm. The slab with the thickness of 10 to 70 mm which is a so-called thin slab may be used. When using the thin slab, it is possible to omit a rough rolling before final rolling in the hot rolling process.

As the chemical composition of the slab, it is possible to employ a chemical composition of a slab used for producing a general grain oriented electrical steel sheet. For instance, the chemical composition of the slab may include the following elements.

0 to 0.0850% of C

Carbon (C) is an element effective in controlling the primary recrystallized structure in the production process. However, when the C content in the final product is excessive, the magnetic characteristics are negatively affected. Thus, the C content in the slab may be 0 to 0.0850%. The upper limit of the C content is preferably 0.0750%. C is decarburized and purified in the decarburization annealing process and the final annealing process as mentioned below, and then, the C content becomes 0.0050% or less after the final annealing process. When C is included, the lower limit of the C content may be more than 0%, and may be 0.0010% from the productivity standpoint in the industrial production.

2.0 to 7.0% of Si

Silicon (Si) is an element which increases the electric resistance of the grain oriented electrical steel sheet and thereby decreases the iron loss. When the Si content is less than 2.0%, an austenite transformation occurs during the final annealing and the crystal orientation of the grain oriented electrical steel sheet is impaired. On the other hand, when the Si content is more than 7.0%, the cold workability deteriorates and the cracks tend to occur during cold rolling. The lower limit of the Si content is preferably 2.50%, and is more preferably 3.0%. The upper limit of the Si content is preferably 4.50%, and is more preferably 4.0%.

0 to 1.0% of Mn

Manganese (Mn) forms MnS and/or MnSe by bonding to S and/or Se, which act as the inhibitor. The Mn content may be 0 to 1.0%. When Mn is included and the Mn content is 0.05 to 1.0%, the secondary recrystallization becomes stable, which is preferable. In the present embodiment, the nitride of the Nb group element can bear a part of the function of the inhibitor. In the case, the inhibitor intensity as MnS and/or MnSe in general is controlled weakly. Thus, the upper limit of the Mn content is preferably 0.50%, and is more preferably 0.20%.

0 to 0.0350% of S

0 to 0.0350% of Se

Sulfur (S) and Selenium (Se) form MnS and/or MnSe by bonding to Mn, which act as the inhibitor. The S content may be 0 to 0.0350%, and the Se content may be 0 to 0.0350%. When at least one of S and Se is included, and when the total amount of S and Se is 0.0030 to 0.0350%, the secondary recrystallization becomes stable, which is preferable. In the present embodiment, the nitride of the Nb group element can bear a part of the function of the inhibitor. In the case, the inhibitor intensity as MnS and/or MnSe in general is controlled weakly. Thus, the upper limit of the total amount of S and Se is preferably 0.0250%, and is more preferably 0.010%. When S and/or Se remain in the steel after the final annealing, the compound is formed, and thereby, the iron loss is deteriorated. Thus, it is preferable to reduce S and Se as much as possible by the purification during the final annealing.
Herein, "the total amount of S and Se is 0.0030 to 0.0350%" indicates that only one of S or Se is included as the chemical composition in the slab and the total amount thereof is 0.0030 to 0.0350% or that both of S and Se are included in the slab and the total amount thereof is 0.00300 to 0.0350%.

0 to 0.0650% of Al

Aluminum (Al) forms (Al, Si)N by bonding to N, which acts as the inhibitor. The Al content may be 0 to 0.0650%. When Al is included and the Al content is 0.010 to 0.0650%, the inhibitor AlN formed by the nitridation mentioned below expands the temperature range of the secondary recrystallization, and the secondary recrystallization becomes stable especially in higher temperature range, which is preferable. The lower limit of the Al content is preferably 0.020%, and is more preferably 0.0250%. The upper limit of the Al content is preferably 0.040%, and is more preferably 0.030% from the stability standpoint in the secondary recrystallization.

0 to 0.0120% of N

Nitrogen (N) bonds to Al and acts as the inhibitor. The N content may be 0 to 0.0120%. The lower limit thereof may be 0% because it is possible to include N by the nitridation in midstream of the production process. When N is included and the N content is more than 0.0120%, the blister which is a kind of defect tends to be formed in the steel sheet. The upper limit of the N content is preferably 0.010%, and is more preferably 0.0090%. N is purified in the final annealing process, and then, the N content becomes 0.0050% or less after the final annealing process.

0 to 0.030% of Nb
0 to 0.030% of V
0 to 0.030% of Mo
0 to 0.030% of Ta
0 to 0.030% of W

Nb, V, Mo, Ta, and W are the Nb group element. The Nb content may be 0 to 0.030%, the V content may be 0 to 0.030%, the Mo content may be 0 to 0.030%, the Ta content may be 0 to 0.030%, and the W content may be 0 to 0.030%.
Moreover, it is preferable that the slab includes, as the Nb group element, at least one selected from a group consisting of Nb, V, Mo, Ta, and W and that the amount thereof is 0.0030 to 0.030 mass% in total.
When utilizing the Nb group element for controlling the switching, and when the total amount of the Nb group element in the slab is 0.030% or less (preferably 0.0030% or more and 0.030% or less), the secondary recrystallization starts at appropriate timing. Moreover, the orientation of the formed secondary recrystallized grain becomes very favorable, the switching which is the feature of the present embodiment tends to be occur in the subsequent growing stage, and the microstructure is finally controlled to be favorable for the magnetization characteristics.

By including the Nb group element, the grain size of the primary recrystallized grain after the decarburization annealing becomes fine as compared with not including the Nb group element. It seems that the refinement of the primary recrystallized grain is resulted from the pinning effect of the precipitates such as carbides, carbonitrides, and nitrides, the drug effect of the solid-soluted elements, and the like. In particular, the above effect is preferably obtained by including Nb and Ta.

By the refinement of the grain size of the primary recrystallized grain due to the Nb group element, the driving force of the secondary recrystallization increases, and then, the secondary recrystallization starts from lower temperature as compared with the conventional techniques. In addition, since the precipitates derived from the Nb group element solutes at relatively lower temperature as compared with the conventional inhibitors such as AlN, the secondary recrystallization starts from lower temperature in the heating stage of the final annealing as compared with the conventional techniques. The secondary recrystallization starts from lower temperature, and thereby, the switching which is the feature of the present embodiment tends to be occur. The mechanism thereof is described below.

In a case where the precipitates derived from the Nb group element are utilized as the inhibitor for the secondary recrystallization, since the carbides and carbonitrides of the Nb group element become unstable in the temperature range lower than the temperature range where the secondary recrystallization can occur, it seems that the effect of controlling the starting temperature of the secondary recrystallization to be lower temperature is small. Thus, in order to favorably control the starting temperature of the secondary recrystallization to be lower temperature, it is preferable that the nitrides (or carbonitrides with high nitrogen content) of the Nb group element which are stable up to the temperature range where the secondary recrystallization can occur are utilized.

By concurrently utilizing the precipitates (preferably nitrides) derived from the Nb group element controlling the starting temperature of the secondary recrystallization to be lower temperature and the conventional inhibitors such as AlN, (Al, Si)N, and the like which are stable up to higher temperature even after starting the secondary recrystallization, it is possible to expand the temperature range where the grain having the {110}<001> orientation which is the secondary recrystallized grain is preferentially grown. Thus, the switching is induced in the wide temperature range from lower temperature to higher temperature, and thus, the orientation selectivity functions in the wide temperature range. As a results, it is possible to increase the existence frequency of the subboundary in the final product, and thus, to effectively increase the alignment degree to the {110}<001> orientation of the secondary recrystallized grains included in the grain oriented electrical steel sheet.

Herein, in a case where the primary recrystallized grain is intended to be refined by the pinning effect of the carbides, the carbonitrides, and the like of the Nb group element, it is preferable to control the C content of the slab to be 50 ppm or more at casting. However, since the nitrides are preferred as the inhibitor for the secondary recrystallization as compared with the carbides and the carbonitrides, it is preferable that the carbides and the carbonitrides of the Nb group element are sufficiently soluted in the steel after finishing the primary recrystallization by reducing the C content to 30 ppm or less, preferably 20 ppm or less, and more preferably 10 ppm or less through the decarburization annealing. In a case where most of the Nb group element is solid-soluted by the decarburization annealing, it is possible to control the nitrides (the inhibitor) of the Nb group element to be the morphology favorable for the present embodiment (the morphology facilitating the secondary recrystallization) in the subsequent nitridation.

The total amount of the Nb group element is preferably 0.0040% or more, and more preferably 0.0050% or more. The total amount of the Nb group element is preferably 0.020% or less, and more preferably 0.010% or less.

In the chemical composition of the slab, a balance consists of Fe and impurities. The above impurities correspond to elements which are contaminated from the raw materials or from the production environment, when industrially producing the slab. Moreover, the above impurities indicate elements which do not substantially affect the effects of the present embodiment.

In addition to solving production problems, in consideration of the influence on the magnetic characteristics and the improvement of the inhibitors function by forming compounds, the slab may include the known optional elements as substitution for a part of Fe. For instance, the optional elements may be the following elements.

0 to 0.40% of Cu
0 to 0.010% of Bi
0 to 0.080% of B
0 to 0.50% of P
0 to 0.0150% of Ti
0 to 0.10% of Sn
0 to 0.10% of Sb
0 to 0.30% of Cr
0 to 1.0% of Ni

The optional elements may be included as necessary. Thus, a lower limit of the respective optional elements does not need to be limited, and the lower limit may be 0%.

(Hot rolling process)

In the hot rolling process, the slab is heated to a predetermined temperature (for instance, 1100 to 1400°C), and then, is subjected to hot rolling in order to obtain a hot rolled steel sheet. In the hot rolling process, for instance, the silicon steel material (slab) after the casting process is heated, is rough-rolled, and then, is final-rolled in order to obtain the hot rolled steel sheet with a predetermined thickness, e.g. 1.8 to 3.5 mm. After finishing the final rolling, the hot rolled steel sheet is coiled at a predetermined temperature.

Since the inhibitor intensity as MnS is not necessarily needed, it is preferable that the slab heating temperature is 1100 to 1280°C from the productivity standpoint.

(Hot band annealing process)

In the hot band annealing process, the hot rolled steel sheet after the hot rolling process is annealed under predetermined conditions (for instance, 750 to 1200°C for 30 seconds to 10 minutes) in order to obtain a hot band annealed sheet.

Herein, in a case of the high temperature slab heating process, the morphology of the precipitates such as AlN is finally controlled in the hot band annealing process. Thus, the precipitates are uniformly and finely precipitated in the hot band annealing process, and thereby, the grain size of the primary recrystallized grain becomes fine during post process. Moreover, in addition to control the morphology of the inhibitor in the hot band annealing process, it is effective to combine the above control in the hot rolling process, the control of the steel sheet surface before the final annealing, the control of the atmosphere during the final annealing, and the like.

(Cold rolling process)

In the cold rolling process, the hot band annealed sheet after the hot band annealing process is cold-rolled once or is cold-rolled plural times (two times or more) with an annealing (intermediate annealing) (for instance, 80 to 95% of total cold reduction) in order to obtain a cold rolled steel sheet with a thickness, e.g. 0.10 to 0.50 mm.

(Decarburization annealing process)

In the decarburization annealing process, the cold rolled steel sheet after the cold rolling process is subjected to the decarburization annealing (for instance, 700 to 900°C for 1 to 3 minutes) in order to obtain a decarburization annealed steel sheet which is primary-recrystallized. By conducting the decarburization annealing for the cold rolled steel sheet, C included in the cold rolled steel sheet is removed. In order to remove "C" included in the cold rolled steel sheet, it is preferable that the decarburization annealing is conducted in moist atmosphere.

In the method for producing the grain oriented electrical steel sheet according to the present embodiment, it is preferable to control a grain size of primary recrystallized grain of the decarburization annealed steel sheet to 23 μm or smaller. By refining the grain size of primary recrystallized grain, it is possible to favorably control the starting temperature of the secondary recrystallization to be lower temperature.

For instance, by controlling the conditions in the hot rolling or the hot band annealing, or by controlling the temperature for decarburization annealing to be lower temperature as necessary, it is possible to decrease the grain size of primary recrystallized grain. In addition, by the pinning effect of the carbides, the carbonitrides, and the like of the Nb group element which is included in the slab, it is possible to decrease the grain size of primary recrystallized grain.

Herein, since the amount of oxidation caused by the decarburization annealing and the state of surface oxidized layer affect the formation of the intermediate layer (glass film), the conditions may be appropriately adjusted using the conventional technique in order to obtain the effects of the present embodiment.

Although the Nb group element may be included as the elements which facilitate the switching, the Nb group element is included at present process in the state such as the carbides, the carbonitrides, the solid-soluted elements, and the like, and influences the refinement of the grain size of primary recrystallized grain. The grain size of primary recrystallized grain is preferably 21 μm or smaller, more preferably 20 μm or smaller, and further more preferably 18 μm or smaller. The grain size of primary recrystallized grain may be 8 μm or larger, and may be 12 μm or larger.

(Nitridation)

The nitridation is conducted in order to control the inhibitor intensity for the secondary recrystallization. In the nitridation, the nitrogen content of the steel sheet may be made increase to 40 to 300 ppm at appropriate timing from starting the decarburization annealing to starting the secondary recrystallization in the final annealing. For instance, the nitridation may be a treatment of annealing the steel sheet in an atmosphere containing a gas having a nitriding ability such as ammonia, a treatment of final-annealing the decarburization annealed steel sheet being applied an annealing separator containing a powder having a nitriding ability such as MnN, and the like.

When the slab includes the Nb group element within the above range, the nitrides of the Nb group element formed by the nitridation act as an inhibitor whose ability inhibiting the grain growth disappears at relatively lower temperature, and thus, the secondary recrystallization starts from lower temperature as compared with the conventional techniques. It seems that the nitrides are effective in selecting the nucleation of the secondary recrystallized grain, and thereby, achieve high magnetic flux density. In addition, AlN is formed by the nitridation, and the AlN acts as an inhibitor whose ability inhibiting the grain growth maintains up to relatively higher temperature. In order to obtain these effects, the nitrogen content after the nitridation is preferably 130 to 250 ppm, and is more preferably 150 to 200 ppm.

(Annealing separator applying process)

In the annealing separator applying process, the decarburization annealed steel sheet is applied an annealing separator to. For instance, as the annealing separator, it is possible to use an annealing separator mainly including MgO, an annealing separator mainly including alumina, and the like.

Herein, when the annealing separator mainly including MgO is used, the forsterite film (the layer mainly including $Mg_2SiO_4$) tends to be formed as the intermediate layer during the final annealing. When the annealing separator mainly including alumina is used, the oxide layer (the layer mainly including $SiO_2$) tends to be formed as the intermediate layer during the final annealing. These intermediate layers may be removed according to the necessity.

The decarburization annealed steel sheet after applying the annealing separator is coiled and is final-annealed in the subsequent final annealing process.

(Final annealing process)

In the final annealing process, the decarburization annealed steel sheet after applying the annealing separator is final-annealed so that the secondary recrystallization occurs. In the process, the secondary recrystallization proceeds under conditions such that the grain growth of the primary recrystallized grain is suppressed by the inhibitor. Thereby, the grain having the {110}<001> orientation is preferentially grown, and the magnetic flux density is drastically improved.

The final annealing is important for controlling the switching which is the feature of the present embodiment. In the present embodiment, the deviation angle $\alpha$, the deviation angle $\beta$, or the deviation angle $\gamma$ is controlled based on the following seven conditions (A) to (G) in the final annealing.

Herein, in the explanation of the final annealing process, "the total amount of the Nb group element" represents the total amount of the Nb group element included in the steel sheet just before the final annealing (the decarburization annealed steel sheet). Specifically, the chemical composition of the steel sheet just before the final annealing influences the conditions of the final annealing, and the chemical composition after the final annealing or after the purification annealing (for instance, the chemical composition of the grain oriented electrical steel sheet (final annealed sheet)) is unrelated.

(A) In the heating stage of the final annealing, when PA is defined as $PH_2O/PH_2$ regarding the atmosphere in the temperature range of 700 to 800°C,
PA : 0.050 to 1.000.

(B) In the heating stage of the final annealing, when PB is defined as $PH_2O/PH_2$ regarding the atmosphere in the temperature range of 900 to 950°C,
PB : 0.010 to 0.100.

(C) In the heating stage of the final annealing, when PC is defined as $PH_2O/PH_2$ regarding the atmosphere in the temperature range of 950 to 1000°C,
PC : 0.005 to 0.070.

(D) In the heating stage of the final annealing, when PD is defined as $PH_2O/PH_2$ regarding the atmosphere in the temperature range of 1000 to 1050°C, PD : 0.0010 to 0.030.

(E) In the heating stage of the final annealing, when TE is defined as a holding time in the temperature range of 850 to 950°C,

TE : 120 to 600 minutes.

(F) In the heating stage of the final annealing, when TF is defined as a holding time in the temperature range of 900 to 950°C,

TF : 400 minutes or shorter, in a case where the total amount of the Nb group element is within 0.003 to 0.030%, and

TF : 350 minutes or shorter, in a case where the total amount of the Nb group element is out of the above range.

(G) In the heating stage of the final annealing, when TG is defined as a holding time (total detention time) in the temperature range of 950 to 1000°C,

TG : 100 minutes or longer, in a case where the total amount of the Nb group element is within 0.003 to 0.030%, and

TG : 200 minutes or longer, in a case where the total amount of the Nb group element is out of the above range.

Herein, when the total amount of the Nb group element is within 0.003 to 0.030%, the condition (A) may be satisfied, at least one of the conditions (B) and (D) may be satisfied, and the conditions (E), (F), and (G) may be satisfied.

When the total amount of the Nb group element is out of the above range, all of the seven conditions (A) to (G) may be satisfied.

In regard to the conditions (B) and (D), when the Nb group element within the above range is included, due to the effect of suppressing the recovery and the recrystallization which is derived from the Nb group element, the two factors of "starting the secondary recrystallization from lower temperature" and "maintaining the secondary recrystallization up to higher temperature" are potent enough. As a result, the controlling conditions for obtaining the effects of the present embodiment are relaxed.

The PA is preferably 0.10 or more, and is more preferably 0.30 or more. The PA is preferably 1.0 or less, and is more preferably 0.60 or less.

The PB is preferably 0.040 or more, and is preferably 0.070 or less.

The PC is preferably 0.020 or more, and is preferably 0.050 or less.

The PD is preferably 0.005 or more, and is preferably 0.020 or less.

The TE is preferably 180 minutes or longer, and is more preferably 240 or longer. The TD is preferably 480 minutes or shorter, and is more preferably 360 or shorter.

When the total amount of the Nb group element is within 0.003 to 0.030%, TF is preferably 350 minutes or shorter, and is more preferably 300 minutes or shorter.

When the total amount of the Nb group element is out of the above range, TF is preferably 300 minutes or shorter, and is more preferably 240 minutes or shorter.

When the total amount of the Nb group element is within 0.003 to 0.030%, TG is preferably 200 minutes or longer, and is more preferably 300 minutes or longer. TG is preferably 900 minutes or shorter, and is more preferably 600 minutes or shorter.

When the total amount of the Nb group element is out of the above range, TG is preferably 360 minutes or longer, and is more preferably 600 minutes or longer. TG is preferably 1500 minutes or shorter, and is more preferably 900 minutes or shorter.

The details of occurrence mechanism of the switching are not clear at present. However, as a result of observing the secondary recrystallization behavior and of considering the production conditions for favorably controlling the switching, it seems that the two factors of "starting the secondary recrystallization from lower temperature" and "maintaining the secondary recrystallization up to higher temperature" are important.

Limitation reasons of the above (A) to (G) are explained based on the above two factors. In the following description, the mechanism includes a presumption.

The condition (A) is the condition for the temperature range which is sufficiently lower that the temperature where the secondary recrystallization occurs. The condition (A) does not directly influence the phenomena recognized as the secondary recrystallization. However, the above temperature range corresponds to the temperature where the surface of the steel sheet is oxidized by the water which is brought in from the annealing separator applied to the surface of the steel sheet. In other words, the above temperature range influences the formation of the primary layer (intermediate layer). The condition (A) is important for controlling the formation of the primary layer, and thereby, enabling the subsequent "maintaining the secondary recrystallization up to higher temperature". By controlling the atmosphere in the above temperature range to be the above condition, the primary layer becomes dense, and thus, acts as the barrier to prevent the constituent elements (for instance, Al, N, and the like) of the inhibitor from being released outside the system in the stage where the secondary recrystallization occurs. Thereby, it is possible to maintain the secondary recrystallization up to higher temperature, and possible to sufficiently induce the switching.

The condition (B) is the condition for the temperature range which corresponds to the nucleation stage of the recrystallization nuclei in the secondary recrystallization. By controlling the atmosphere in the above temperature range to be the above condition, the secondary recrystallized grain grows with being rate-limited by the dissolution of the inhibitor in the stage of the grain growth. In seems that the condition (B) promotes the dissolution of the inhibitor near the surface of the steel sheet in particular and influences increasing the secondary recrystallization nuclei. For instance, it is known that the primary recrystallized grains having the preferred crystal orientation for secondary recrystallization are sufficiently included near the surface of the steel sheet. In the present embodiment, by decreasing the inhibitor intensity only near the surface of the steel sheet in the lower temperature range of 900 to 950°C, it seems that the following secondary recrystallization is made to antecedently start (in the lower temperature) during the heating stage. Moreover, in the above case, since the secondary recrystallized grains are sufficiently formed, it seems that the switching frequency increases in an initial stage of the grain growth of secondary recrystallized grain.

The conditions (C) and (D) are the conditions for the temperature range where the secondary recrystallization starts and the grain grows. The conditions (C) and (D) influence the control of the inhibitor intensity in the stage where the secondary recrystallized grain grows. By controlling the atmosphere in the above temperature range to be the above conditions, the secondary recrystallized grain grows with being rate-limited by the dissolution of the inhibitor in each temperature range. Although the details are described later, by the conditions, dislocations are efficiently piled up in front of the grain boundary which is located toward the direction growing the secondary recrystallized grain. Thereby, it is possible to increase the occurrence frequency of the switching, and possible to maintain the occurrence of the switching. As explained above, the temperature range is divided into two range as the conditions (C) and (D) in order to control the atmosphere, because the appropriate atmosphere differs depending on the temperature range..

In the producing method according to the present embodiment, when the Nb group element is utilized, it is possible to obtain the grain oriented electrical steel sheet satisfying the conditions with respect to the switching according to the present embodiment, in so far as at least one of the conditions (B) to (D) is satisfied. In other words, by controlling so as to increase the switching frequency in the initial stage of secondary recrystallization, the secondary recrystallized grain is grown with conserving the misorientation derived from the switching, the effect is maintained till the final stage, and finally, the switching frequency increases. Alternatively, even when the switching does not occur sufficiently in the initial stage of secondary recrystallization, it is possible to finally increase the switching frequency by making the sufficient dislocations pile up toward the direction growing the grain in the growing stage of secondary recrystallization and thereby making the switching newly occur. Needless to explain, it is preferable to satisfy all conditions (B) to (D) even when the Nb group element is utilized. In other word, it is optimal to increase the switching frequency in the initial stage of secondary recrystallization and to newly induce the switching even in the middle and final stages of secondary recrystallization.

The condition (E) is the condition for the temperature range which corresponds to the nucleating stage and the grain-growing stage in the secondary recrystallization. The hold in the temperature range is important for the favorable occurrence of the secondary recrystallization. However, when the holding time is excessive, the primary recrystallized grain tends to be grow. For instance, when the grain size of the primary recrystallized grain becomes excessively large, the dislocations tend not to be piled up (the dislocations are hardly piled up in front of the grain boundary which is located toward the direction growing the secondary recrystallized grain), and thus, the driving force of inducing the switching becomes insufficient. When the holding time in the above temperature range is controlled to 600 minutes or shorter, it is possible to grow the secondary recrystallized grain in the initial stage under conditions such that the grain growth of the primary recrystallized grain is suppressed. Thus, it is possible to increase the selectivity of the specific deviation angle. In the present embodiment, the starting temperature of the secondary recrystallization is controlling to be lower temperature by refining the primary recrystallized grain or by utilizing the Nb group element, and thereby, the switching is sufficiently induced and maintained.

The condition (F) is the condition for the temperature range which corresponds to the nucleating stage and the grain-growing stage in the secondary recrystallization, and is the condition which contributes to the switching regarding the deviation angle $\alpha$. The holding in the temperature range influences the occurrence and continuation of the switching. When the holding time is long, the primary recrystallized grain tends to be grow. It is possible to decrease the switching regarding the deviation angle $\alpha$ by controlling the holding time to an appropriate range.

The condition (G) is a factor for controlling the elongation direction of the subboundary (in particular, the y subboundary) in the plane of the steel sheet where the switching occurs. By sufficiently conducting the holding in 950 to 1000°C, it is possible to increase the switching frequency in the transverse direction. It seems that the morphology (for instance, array and shape) of the precipitates including the inhibitor in the steel is changed during the holding in the above temperature range. When the holding time is controlled to an appropriate range, the switching regarding the subboundary (in particular, the y subboundary) in the transverse direction may be increased.

Since the steel sheet being subjected to the final annealing has been hot-rolled and cold-rolled, the array and shape of the precipitates (in particular, MnS) in the steel show anisotropic in the plane of the steel sheet, and may tend to be uneven in the rolling direction. The details are not clear, but it seems that the holding in the above temperature range changes the unevenness in the rolling direction as to the morphology of the above precipitates, and influences the direction in which the subboundary tends to be elongate in the plane of the steel sheet during the growth of the secondary recrystallized grain. Specifically, when the steel sheet is held at relatively lower temperature such as 950 to 1000°C, the unevenness in the rolling direction as to the morphology of the precipitates in the steel develops. Thereby, the tendency such that the subboundary elongates in the transverse direction decreases, and the tendency such that the subboundary elongates in the rolling direction increases. As a result, it seems that the frequency of the subboundary (in particular, the y subboundary) detected in the transverse direction increases.

Herein, when the total amount of the Nb group element is 0.003 to 0.030%, the existence frequency of the subboundary in itself is high, and thus, it is possible to obtain the effects of the present embodiment even when the holding time TG is insufficient.

(Insulation coating forming process)

In the insulation coating forming process, the insulation coating is formed on the grain oriented electrical steel sheet after the final annealing process. The insulation coating which mainly includes phosphate and colloidal silica, the insulation coating which mainly includes alumina sol and boric acid, and the like may be formed on the steel sheet after the final annealing.

For instance, a coating solution (including phosphoric acid or phosphate, chromic anhydride or chromate, and colloidal silica) is applied to the steel sheet after the final annealing, and is baked (for instance, 350 to 1150°C for 5 to 300 seconds) to form the insulation coating.

Alternatively, a coating solution including alumina sol and boric acid is applied to the steel sheet after the final annealing, and is baked (for instance, 750 to 1350°C for 10 to 100 seconds) to form the insulation coating.

The producing method according to the present embodiment may further include, as necessary, a magnetic domain refinement process.

(Magnetic domain refinement process)

In the magnetic domain refinement process, the magnetic domain is refined for the grain oriented electrical steel sheet. For instance, the local minute strain may be applied or the local grooves may be formed by a known method such as laser, plasma, mechanical methods, etching, and the like for the grain oriented electrical steel sheet. The above magnetic domain refining treatment does not deteriorate the effects of the present embodiment.

Herein, the local minute strain and the local grooves mentioned above become an irregular point when measuring the crystal orientation and the grain size defined in the present embodiment. Thus, when the crystal orientation is measured, it is preferable to make the measurement points not overlap the local minute strain and the local grooves. Moreover, when the grain size is calculated, the local minute strain and the local grooves are not recognized as the boundary.

(Mechanism of occurrence of switching)

The switching specified in the present embodiment occurs during the grain growth of the secondary recrystallized grain. The phenomenon is influenced by various control conditions such as the chemical composition of material (slab), the elaboration of inhibitor until the grain growth of secondary recrystallized grain, and the control of the grain size of primary recrystallized grain. Thus, in order to control the switching, it is necessary to control not only one condition but plural conditions comprehensively and inseparably.

It seems that the switching occurs due to the boundary energy and the surface energy between the adjacent grains.

In regard to the above boundary energy, when the two grains with the misorientation are adjacent, the boundary energy increases. Thus, in the grain growth of the secondary recrystallized grain, it seems that the switching occurs so as to decrease the boundary energy, specifically, so as to be close to a specific same direction.

Moreover, in regard to the above surface energy, even when the orientation deviates slightly from the {110} plane which has high crystal symmetry, the surface energy increases. Thus, in the grain growth of the secondary recrystallized grain, it seems that the switching occurs so as to decrease the surface energy, specifically, so as to decrease the deviation angle by being close to the orientation of the {110} plane.

However, in the general situation, these energies do not give the driving force that induces the orientation changes, and thus, that the switching does not occur in the grain growth of the secondary recrystallized grain. In the general situation, the secondary recrystallized grain grows with maintaining the misorientation or the deviation angle. For instance, in a case where the secondary recrystallized grain grows in the general situation, the switching is not induced, and the deviation angle corresponds to an angle derived from the unevenness of the orientation at nucleating the secondary recrystallized grain. In other words, the deviation angle hardly changes in the growing stage of the secondary recrystallized grain.

On the other hand, as the grain oriented electrical steel sheet according to the present embodiment, in a case where the secondary recrystallization is made to start from lower temperature and where the grain growth of secondary recrystallized grain is made to maintain up to higher temperature for a long time, the switching is sufficiently induced. The above reason is not entirely clear, but it seems that the above reason is related to the dislocations at relatively high densities which remain in the tip area of the growing secondary recrystallized grain, that is, in the area adjoining the primary recrystallized grain, in order to cancel the geometrical misorientation during the grain growth of the secondary recrystallized grain. It seems that the above residual dislocations correspond to the switching and the subboundary which are the features of the present embodiment.

In the present embodiment, since the secondary recrystallization starts from lower temperature as compared with the conventional techniques, the annihilation of the dislocations delays, the dislocations gather and pile up in front of the grain boundary which is located toward the direction growing the secondary recrystallized grain, and then, the dislocation density increases. Thus, the atom tends to be rearranged in the tip area of the growing secondary recrystallized grain, and as a result, it seems that the switching occurs so as to decrease the misorientation with the adjoining secondary recrystallized grain, that is, to decrease the boundary energy or the surface energy.

The switching occurs with leaving the subboundary having the specific orientation relationship in the grain. Herein, in a case where another secondary recrystallized grain nucleates and the growing secondary recrystallized grain reaches the nucleated secondary recrystallized grain before the switching occurs, the grain growth terminates, and thereafter, the switching itself does not occur. Thus, in the present embodiment, it is advantageous to control the nucleation frequency of new secondary recrystallized grain to decrease in the growing stage of secondary recrystallized grain, and advantageous to control the grain growth to be the state such that only already-existing secondary recrystallized grain keeps growing. In the present embodiment, it is preferable to concurrently utilize the inhibitor which controls the starting temperature of the secondary recrystallization to be lower temperature and the inhibitor which are stable up to relatively higher temperature.

Examples

Hereinafter, the effects of an aspect of the present invention are described in detail with reference to the following examples. However, the condition in the examples is an example condition employed to confirm the operability and the effects of the present invention, so that the present invention is not limited to the example condition. The present invention can employ various types of conditions as long as the conditions do not depart from the scope of the present invention and can achieve the object of the present invention.

(Example 1)

Using slabs with chemical composition shown in Table 1A as materials, grain oriented electrical steel sheets (silicon steel sheets) with chemical composition shown in Table 2A were produced. The chemical compositions were measured by the above-mentioned methods. In Table 1A and Table 2A, "-" indicates that the control and production conscious of content did not perform and thus, the content was not measured. Moreover, in Table 1A and Table 2A, the value with "<" indicates that, although the control and production conscious of content performed and the content was measured, the measured value with sufficient reliability as the content was not obtained (the measurement result was less than detection limit).

[Table 1A]

TABLE1A

| STEEL TYPE | CHEMICAL COMPOSITION OF SLAB (STEEL PIECE) (UNIT: mass%, BALANCE CONSISTING OF Fe AND IMPURITIES) | | | | | | | | | | | | |
|---|---|---|---|---|---|---|---|---|---|---|---|---|---|
| | C | Si | Mn | S | Al | N | Cu | Bi | Nb | V | Mo | Ta | W |
| A1 | 0.070 | 3.26 | 0.07 | 0.025 | 0.026 | 0.008 | 0.07 | - | - | - | - | - | - |
| A2 | 0.070 | 3.26 | 0.07 | 0.025 | 0.026 | 0.008 | 0.07 | - | 0.007 | - | - | - | - |
| B1 | 0.070 | 3.26 | 0.07 | 0.025 | 0.025 | 0.003 | 0.07 | 0.002 | - | - | - | - | - |
| B2 | 0.070 | 3.26 | 0.07 | 0.025 | 0.025 | 0008 | 0.07 | 0.002 | 0.007 | - | - | - | - |
| C1 | 0.060 | 3.35 | 0.10 | 0.006 | 0.026 | 0.008 | 0.02 | - | - | - | - | - | - |
| C2 | 0.060 | 3.35 | 0.10 | 0.006 | 0.026 | 0.008 | 0.02 | - | 0.001 | - | - | - | - |
| C3 | 0.060 | 3.35 | 0.10 | 0.006 | 0.026 | 0.008 | 0.02 | - | 0.003 | - | - | - | - |
| C4 | 0.060 | 3.35 | 0.10 | 0.006 | 0.026 | 0.008 | 0.02 | - | 0.005 | - | - | - | - |
| C5 | 0.060 | 3.35 | 0.10 | 0.006 | 0.026 | 0.008 | 0.02 | - | 0.010 | - | - | - | - |
| C6 | 0.060 | 3.35 | 0.10 | 0.006 | 0.026 | 0.008 | 0.02 | - | 0.020 | - | - | - | - |
| C7 | 0.060 | 3.35 | 0.10 | 0.006 | 0.026 | 0.008 | 0.02 | - | 0.030 | - | - | - | - |
| C8 | 0.060 | 3.35 | 0.10 | 0.006 | 0.026 | 0008 | 0.02 | - | 0.050 | - | - | - | - |
| D1 | 0.060 | 3.45 | 0.10 | 0.006 | 0.028 | 0.008 | 0.20 | - | 0.002 | - | - | - | - |
| D2 | 0.060 | 3.45 | 0.10 | 0.006 | 0.028 | 0.008 | 0.20 | - | 0.007 | - | - | - | - |
| E | 0.060 | 3.45 | 0.10 | 0.006 | 0.027 | 0.008 | 0.20 | - | - | 0.007 | - | - | - |
| F | 0.060 | 3.45 | 0.10 | 0.006 | 0.027 | 0.008 | 0.20 | - | - | - | 0.020 | - | - |
| G | 0.060 | 3.45 | 0.10 | 0.006 | 0.027 | 0.008 | 0.20 | - | 0.005 | - | - | 0.003 | - |
| H | 0.060 | 3.45 | 0.10 | 0.006 | 0.027 | 0.008 | 0.20 | - | - | - | - | 0.010 | - |
| I | 0.060 | 3.45 | 0.10 | 0.006 | 0.027 | 0.008 | 0.20 | - | - | - | - | - | 0.010 |
| J | 0.060 | 3.45 | 0.10 | 0.006 | 0.027 | 0008 | 0.20 | - | 0.004 | 0.003 | 0.010 | - | - |
| K | 0.060 | 3.45 | 0.10 | 0.006 | 0.027 | 0008 | 0.20 | - | 0.005 | 0.003 | - | 0.003 | - |

[Table 2A]

[Table 2A]

TABLE2A

| STEEL TYPE | CHEMICAL COMPOSITION OF GRAIN ORIENTED SHEET (UNIT:mass%, BALANCE CONSISTING OF Fe AND IMPURITIES) | | | | | | | | | | | | |
|---|---|---|---|---|---|---|---|---|---|---|---|---|---|
| | C | Si | Mn | S | Al | N | Ca | Bi | Nb | V | Mo | Ta | W |
| A1 | 0.001 | 3.15 | 0.07 | <0.002 | <0.004 | <0.002 | 0.07 | - | - | - | - | - | - |
| A2 | 0.001 | 3.15 | 0.07 | <0.002 | <0.004 | <0.002 | 0.07 | - | 0.005 | - | - | - | - |
| B1 | 0.001 | 3.15 | 0.07 | <0.002 | <0.004 | <0.002 | 0.07 | <0.001 | - | - | - | - | - |
| B2 | 0.001 | 3.15 | 0.07 | <0.002 | < 0.004 | <0.002 | 0.07 | <0.001 | 0.005 | - | - | - | - |
| C1 | 0.001 | 3.30 | 0.10 | <0.002 | <0.004 | <0.002 | 0.02 | - | - | - | - | - | - |
| C2 | 0.001 | 3.30 | 0.10 | <0.002 | <0.004 | < 0.002 | 0.02 | - | 0.001 | - | - | - | - |
| C3 | 0.001 | 3.30 | 0.10 | <0.002 | <0.004 | <0.002 | - 0.02 | - | 0.003 | - | - | - | - |
| C4 | 0.001 | 3.30 | 0.10 | <0.002 | <0.004 | <0.002 | 0.02 | - | 0.003 | - | - | - | - |
| C5 | 0.001 | 3.30 | 0.10 | <0.002 | <0.004 | <0.002 | 0.02 | - | 0.007 | - | - | - | - |
| C6 | 0.002 | 3.30 | 0.10 | <0.002 | <0.004 | <0.002 | 0.02 | - | 0.018 | - | - | - | - |
| C7 | 0.004 | 3.30 | 0.10 | <0.002 | <0.004 | <0.002 | 0.02 | - | 0.028 | - | - | - | - |
| C8 | 0.006 | 3.30 | 0,10 | <0.002 | <0.004 | <0.002 | 0.02 | - | 0.048 | - | - | - | - |
| D1 | 0.001 | 3.34 | 0.10 | <0.002 | <0.004 | <0.002 | 0.20 | - | 0.002 | - | - | - | - |
| D2 | 0.001 | 3.34 | 0.10 | <0.002 | < 0.004 | <0.002 | 0.20 | - | 0.006 | - | - | - | - |
| E | 0.001 | 3.30 | 0.10 | <0.002 | <0.004 | <0.002 | 0.20 | - | - | 0.006 | - | - | - |
| F | 0.001 | 3.34 | 0.10 | <0.002 | < 0.004 | < 0.002 | 0.20 | - | - | - | 0.020 | - | - |
| G | 0.001 | 3.34 | 0.10 | <0.002 | < 0.004 | < 0.002 | 0.20 | - | 0.004 | - | - | 0.001 | - |
| H | 0.001 | 3.34 | 0.10 | <0.002 | <0.004 | <0.002 | 0.20 | - | - | - | - | 0.010 | - |
| I | 0.001 | 3.34 | 0.10 | <0.002 | <0.004 | <0.002 | 0.20 | - | - | - | - | - | 0.010 |
| J | 0.001 | 3.34 | 0.10 | <0.002 | <0.004 | < 0.002 | 0.20 | - | 0.003 | 0.001 | 0.003 | - | - |
| K | 0.001 | 3.34 | 0.10 | <0.002 | <0.004 | <0.002 | 0.20 | - | 0.003 | 0.001 | - | 0.002 | - |

the grain oriented electrical steel sheets were produced unde production conditions shown in Table 3A to Table 12A. Specifically, after casting the slabs, hot rolling, hot band annealing, cold rolling, and decarburization annealing were conducted. For some steel sheets after decarburization annealing, nitridation was conducted in mixed atmosphere of hydrogen, nitrogen, and ammonia.

Annealing separator which mainly included MgO was applied to the steel sheets, and then final annealing was conducted. In final stage of the final annealing, the steel sheets were held at 1200°C for 20 hours in hydrogen atmosphere (purification annealing), and then were cooled.

[Table 3A]

TABLE3A

| No. | STEEL TYPE | PRODUCTION CONDITIONS | | | | | | | | | | |
|---|---|---|---|---|---|---|---|---|---|---|---|
| | | HOT ROLLING | | | | HOT BAND ANNEALING | | COLD ROLLING | | DECARBURIZATION ANNEAL-ING | |
| | | HEATING TEM-PERATURE °C | TEMPERA-TURE: OF FINAL ROLLING °C | COILING TEM-PERATURE °C | SHEET THICKNESS mm | TEMPERA-TURE °C | TIME SECOND | SHEET THICKNESS mm | REDUC-TION OF COLD ROLL-ING % | GRAIN SIZE OF PRIMARY RE-CRYSTALLIZED GRAIN $\mu$m | NITROGEN CONTENT AFTER NITRI-DATION ppm |
| 1 | C1 | 1150 | 900 | 540 | 2.8 | 1100 | 180 | 0.26 | 90.7 | 22 | 220 |
| 2 | C1 | 1150 | 900 | 540 | 2.8 | 1100 | 180 | 0.26 | 90.7 | 22 | 250 |
| 3 | C1 | 1150 | 900 | 540 | 2.8 | 1100 | 180 | 0.26 | 90.7 | 22 | 300 |
| 4 | C1 | 1150 | 900 | 540 | 2.8 | 1100 | 180 | 0.26 | 90.7 | 22 | 160 |
| 5 | C1 | 1150 | 900 | 540 | 2.8 | 1100 | 180 | 0.26 | 90.7 | 22 | 220 |
| 6 | C1 | 1150 | 900 | 540 | 2.8 | 1100 | 180 | 0.26 | 90.7 | 22 | 220 |
| 7 | C1 | 1150 | 900 | 540 | 2.8 | 1100 | 180 | 0.26 | 90.7 | 22 | 220 |
| 8 | C1 | 1150 | 900 | 540 | 2.8 | 1100 | 180 | 0.26 | 90.7 | 22 | 220 |
| 9 | C1 | 1150 | 900 | 540 | 2.8 | 1100 | 180 | 0.26 | 90.7 | 22 | 220 |
| 10 | C1 | 1150 | 900 | 540 | 2.8 | 1100 | 180 | 0.26 | 90.7 | 22 | 160 |
| 11 | C1 | 1150 | 900 | 540 | 2.8 | 1100 | 180 | 0.26 | 90.7 | 22 | 220 |
| 12 | C1 | 1150 | 900 | 540 | 2.8 | 1100 | 180 | 0.26 | 90.7 | 22 | 220 |
| 13 | C1 | 1150 | 900 | 540 | 2.8 | 1100 | 180 | 0.26 | 90.7 | 22 | 220 |
| 14 | C1 | 1150 | 900 | 540 | 2.8 | 1100 | 180 | 0.26 | 90.7 | 22 | 220 |
| 15 | C1 | 1150 | 900 | 540 | 2.8 | 1100 | 180 | 0.26 | 90.7 | 22 | 220 |
| 16 | C1 | 1150 | 900 | 540 | 2.8 | 1100 | 180 | 0.26 | 90.7 | 22 | 220 |
| 17 | C1 | 1150 | 900 | 540 | 2.8 | 1100 | 180 | 0.26 | 90.7 | 22 | 220 |
| 18 | C1 | 1150 | 900 | 540 | 2.8 | 1100 | 180 | 0.26 | 90.7 | 22 | 220 |

(continued)

| No. | STEEL TYPE | PRODUCTION CONDITIONS | | | | | | | | | |
|---|---|---|---|---|---|---|---|---|---|---|---|
| | | HOT ROLLING | | | | HOT BAND ANNEALING | | COLD ROLLING | | DECARBURIZATION ANNEALING | |
| | | HEATING TEMPERATURE °C | TEMPERATURE: OF FINAL ROLLING °C | COILING TEMPERATURE °C | SHEET THICKNESS mm | TEMPERATURE °C | TIME SECOND | SHEET THICKNESS mm | REDUCTION OF COLD ROLLING % | GRAIN SIZE OF PRIMARY RECRYSTALLIZED GRAIN $\mu$ m | NITROGEN CONTENT AFTER NITRIDATION ppm |
| 19 | C1 | 1150 | 900 | 540 | 2.8 | 1100 | 180 | 0.26 | 90.7 | 22 | 220 |
| 20 | C1 | 1150 | 900 | 540 | 2.8 | 1100 | 180 | 0.26 | 90.7 | 22 | 220 |

[Table 4A]

[Table 4A]

TABLE 4A

| No. | STEEL TYPE | PRODUCTION CONDITION | | | | | | | | | |
| --- | --- | --- | --- | --- | --- | --- | --- | --- | --- | --- | --- |
| | | HOT ROLLING | | | | HOT BAND ANNEALING | | COLD ROLLING | | DECARBURIZATION ANNEALING | |
| | | HEATING TEMPERATURE | TEMPERATURE OF FINL ROLLING | COOLING TEMPERATURE | SHEET THICKNESS | TEMPERATURE | TIME | SHEET THICKNESS | REDUCTION OF COLD ROLLING | GRAING SIZE OF PRIMARY RECRYSTALIZED GRAIN | NITROGEN CONTENT AFTER NITRIDATION |
| | | °C | °C | °C | mm | °C | SECOND | mm | % | $\mu$m | ppm |
| 21 | C1 | 1150 | 900 | 540 | 2.8 | 1100 | 180 | 0.26 | 90.7 | 22 | 220 |
| 22 | C1 | 1150 | 900 | 540 | 2.8 | 1100 | 180 | 0.26 | 90.7 | 22 | 300 |
| 23 | C1 | 1150 | 900 | 540 | 2.8 | 1100 | 180 | 0.26 | 90.7 | 22 | 300 |
| 24 | D1 | 1150 | 900 | 540 | 2.8 | 1100 | 180 | 0.26 | 90.7 | 23 | 220 |
| 25 | D1 | 1150 | 900 | 540 | 2.8 | 1100 | 180 | 0.26 | 90.7 | 23 | 220 |
| 26 | D1 | 1150 | 900 | 540 | 2.8 | 1100 | 180 | 0.26 | 90.7 | 23 | 220 |
| 27 | D1 | 1150 | 900 | 540 | 2.8 | 1100 | 180 | 0.26 | 90.7 | 23 | 220 |
| 28 | D1 | 1150 | 900 | 540 | 2.8 | 1100 | 180 | 0.26 | 90.7 | 23 | 220 |
| 29 | D1 | 1150 | 900 | 540 | 2.8 | 1100 | 180 | 0.26 | 90.7 | 23 | 220 |
| 30 | D1 | 1150 | 900 | 540 | 2.8 | 1100 | 180 | 0.26 | 90.7 | 23 | 220 |
| 31 | D1 | 1150 | 900 | 540 | 2.8 | 1100 | 180 | 0.26 | 90.7 | 23 | 220 |
| 32 | D1 | 1150 | 900 | 540 | 2.8 | 1100 | 180 | 0.26 | 90.7 | 23 | 220 |
| 33 | D1 | 1150 | 900 | 540 | 2.8 | 1100 | 180 | 0.26 | 90.7 | 23 | 220 |
| 34 | D1 | 1150 | 900 | 540 | 2.8 | 1100 | 180 | 0.26 | 90.7 | 23 | 220 |
| 35 | D2 | 1150 | 900 | 540 | 2.8 | 1100 | 180 | 0.26 | 90.7 | 17 | 220 |
| 36 | D2 | 1150 | 900 | 540 | 2.8 | 1100 | 180 | 0.26 | 90.7 | 17 | 220 |
| 37 | D2 | 1150 | 900 | 540 | 2.8 | 1100 | 180 | 0.26 | 90.7 | 17 | 220 |
| 38 | D2 | 1150 | 900 | 540 | 2.8 | 1100 | 180 | 0.26 | 90.7 | 17 | 220 |

(continued)

| No. | STEEL TYPE | PRODUCTION CONDITION | | | | | | | | | | |
|---|---|---|---|---|---|---|---|---|---|---|---|
| | | HOT ROLLING | | | | HOT BAND ANNEALING | | COLD ROLLING | | DECARBURIZATION ANNEALING | |
| | | HEATING TEM-PERATURE<br><br>°C | TEMPERA-TURE OF FINL ROLLING<br>°C | COOLING TEM-PERATURE<br><br>°C | SHEET THICKNESS<br><br>mm | TEMPERA-TURE<br><br>°C | TIME<br><br>SECOND | SHEET THICKNESS<br><br>mm | REDUCTION OF COLD ROLLING<br>% | GRAING SIZE OF PRIMARY RE-CRYSTALIZED GRAIN<br>$\mu$m | NITROGEN CONTENT AFTER NITRI-DATION<br>ppm |
| 39 | D2 | 1150 | 900 | 540 | 2.8 | 1100 | 180 | 0.26 | 90.7 | 17 | 220 |
| 40 | D2 | 1150 | 900 | 540 | 2.8 | 1100 | 180 | 0.26 | 90.7 | 17 | 220 |

[Table 5A]

[Table 5A]

TABLE5A

| No. | STEEL TYPE | PRODUCTION CONDITIONS | | | | | | | | | | |
|---|---|---|---|---|---|---|---|---|---|---|---|
| | | HOT ROLLINS | | | | HOT BAND ANNEALING | | COLD ROLLING | | DECARBURIZATION ANNEALING | |
| | | HEATING TEMPERATURE °C | TEMPERATURE OF FINAL ROLLING °C | COILING TEMPERATURE °C | SHEET THICKNESS mm | TEMPERATURE °C | TIME SECOND | SHEET THICKNESS mm | REDUCTION OF COLD ROLLING % | GRAIN SIZE OF PRIMARY RE-CRYSTALLIZED GRAIN $\mu$m | NITROGEN CONTENT AFTER NITRIDATION ppm |
| 41 | D2 | 1150 | 900 | 540 | 2.8 | 1100 | 180 | 0.26 | 90.7 | 17 | 190 |
| 42 | D2 | 1150 | 900 | 540 | 2.8 | 1100 | 180 | 0.26 | 90.7 | 17 | 160 |
| 43 | D2 | 1150 | 900 | 540 | 2.8 | 1100 | 180 | 0.26 | 90.7 | 17 | 220 |
| 44 | D2 | 1150 | 900 | 540 | 2.8 | 1100 | 180 | 0.26 | 90.7 | 17 | 220 |
| 45 | D2 | 1150 | 900 | 540 | 2.8 | 1100 | 180 | 0.26 | 90.7 | 17 | 180 |
| 46 | D2 | 1150 | 900 | 540 | 2.8 | 1100 | 180 | 0.26 | 90.7 | 17 | 180 |
| 47 | D2 | 1150 | 900 | 540 | 2.8 | 1100 | 180 | 0.26 | 90.7 | 17 | 210 |
| 48 | C1 | 1150 | 900 | 540 | 2.8 | 1100 | 180 | 0.26 | 90.7 | 23 | 210 |
| 49 | C2 | 1150 | 900 | 540 | 2.8 | 1100 | 180 | 0.26 | 90.7 | 24 | 210 |
| 50 | C3 | 1150 | 900 | 540 | 2.8 | 1100 | 180 | 0.26 | 90.7 | 20 | 210 |
| 51 | C4 | 1150 | 900 | 540 | 2.8 | 1100 | 180 | 0.26 | 90.7 | 17 | 210 |
| 52 | C5 | 1150 | 900 | 540 | 2.8 | 1100 | 180 | 0.26 | 90.7 | 16 | 210 |
| 53 | C6 | 1150 | 900 | 540 | 2.8 | 1100 | 180 | 0.26 | 90.7 | 15 | 210 |
| 54 | C7 | 1150 | 900 | 540 | 2.8 | 1100 | 180 | 0.26 | 90.7 | 13 | 210 |
| 55 | C8 | 1150 | 900 | 540 | 2.8 | 1100 | 180 | 0.26 | 90.7 | 12 | 210 |
| 56 | D1 | 1150 | 900 | 540 | 2.8 | 1100 | 180 | 0.26 | 90.7 | 24 | 220 |
| 57 | D2 | 1150 | 900 | 540 | 2.8 | 1100 | 180 | 0.26 | 90.7 | 17 | 220 |
| 58 | E | 1150 | 900 | 540 | 2.8 | 1100 | 180 | 0.26 | 90.7 | 22 | 220 |

EP 4 101 940 A1

| No. | STEEL TYPE | PRODUCTION CONDITIONS | | | | | | | | | |
| --- | --- | --- | --- | --- | --- | --- | --- | --- | --- | --- | --- |
| | | HOT ROLLINS | | | | HOT BAND ANNEALING | | COLD ROLLING | | DECARBURIZATION ANNEAL-ING | |
| | | HEATING TEM-PERATURE | TEMPERA-TURE OF FINAL ROLLING | COILING TEM-PERATURE | SHEET THICKNESS | TEMPERA-TURE | TIME | SHEET THICKNESS | REDUC-TION OF COLD ROLL-ING | GRAIN SIZE OF PRIMARY RECRYSTALLIZED GRAIN | NITROGEN CONTENT AFTER NITRIDATION |
| | | °C | °C | °C | mm | °C | SECOND | mm | % | $\mu$m | ppm |
| 59 | F | 1150 | 900 | 540 | 2.8 | 1100 | 180 | 0.26 | 90.7 | 19 | 220 |
| 60 | G | 1150 | 900 | 540 | 2.8 | 1100 | 180 | 0.26 | 90.7 | 15 | 220 |

[Table 6A]

[Table 6A]

TABLE6A

| No. | STEEL TYPE | PRODUCTION CONDITIONS | | | | HOT BAND ANNEALING | | COLD ROLLING | | DECARBURIZATION | ANNEALING |
| | | HOT ROLLING | | | | | | | | | |
| | | HEATING TEMPERATURE °C | TEMPERATURE OF FINAL ROLLING °C | COILING TEMPERATURE °C | SHEET THICKNESS mm | TEMPERATURE °C | TIME SECOND | SHEET THICKNESS mm | REDUCTION OF COLD ROLLING % | GRAIN SIZE OF PRIMARY RE-CRYSTALLIZED GRAIN μm | NITROGEN CONTENT AFTER NITRIDATION ppm |
|---|---|---|---|---|---|---|---|---|---|---|---|
| 61 | H | 1150 | 900 | 540 | 2.8 | 1100 | 180 | 0.26 | 90.7 | 15 | 220 |
| 62 | I | 1150 | 900 | 540 | 2.8 | 1100 | 180 | 0.26 | 90.7 | 23 | 220 |
| 63 | J | 1150 | 900 | 540 | 2.8 | 1100 | 180 | 0.26 | 90.7 | 17 | 220 |
| 64 | K | 1150 | 900 | 540 | 2.8 | 1100 | 180 | 0.26 | 90.7 | 15 | 220 |
| 65 | A1 | 1400 | 1100 | 540 | 2.6 | 1100 | 180 | 0.26 | 90.0 | 9 | - |
| 66 | A1 | 1400 | 1100 | 540 | 2.6 | 1100 | 180 | 0.26 | 90.0 | 9 | - |
| 67 | A1 | 1400 | 1100 | 540 | 2.6 | 1100 | 180 | 0.26 | 90.0 | 9 | - |
| 68 | A1 | 1400 | 1100 | 540 | 2.6 | 1100 | 180 | 0.26 | 90.0 | 9 | - |
| 69 | A1 | 1400 | 1100 | 540 | 2.6 | 1100 | 180 | 0.26 | 90.0 | 9 | - |
| 70 | A1 | 1400 | 1100 | 540 | 2.6 | 1100 | 180 | 0.26 | 90.0 | 9 | - |
| 71 | A1 | 1400 | 1100 | 540 | 2.6 | 1100 | 180 | 0.26 | 90.0 | 9 | - |
| 72 | A1 | 1400 | 1100 | 540 | 2.6 | 1100 | 180 | 0.26 | 90.0 | 9 | - |
| 73 | A1 | 1400 | 1100 | 540 | 2.6 | 1100 | 180 | 0.26 | 90.0 | 9 | - |
| 74 | A2 | 1400 | 1100 | 540 | 2.6 | 1100 | 180 | 0.26 | 90.0 | 7 | - |
| 75 | A2 | 1400 | 1100 | 540 | 2.6 | 1100 | 180 | 0.26 | 90.0 | 7 | - |
| 76 | A2 | 1400 | 1100 | 540 | 2.6 | 1100 | 180 | 0.26 | 90.0 | 7 | - |
| 77 | A2 | 1400 | 1100 | 540 | 2.6 | 1100 | 180 | 0.26 | 90.0 | 7 | - |
| 78 | A2 | 1400 | 1100 | 540 | 2.6 | 1100 | 180 | 0.26 | 90.0 | 7 | - |

(continued)

| No. | STEEL TYPE | PRODUCTION CONDITIONS | | | | | | | | | |
|---|---|---|---|---|---|---|---|---|---|---|---|
| | | HOT ROLLING | | | | HOT BAND ANNEALING | | COLD ROLLING | | DECARBURIZA-TION | ANNEALING |
| | | HEATING TEM-PERATURE °C | TEMPERA-TURE OF FINAL ROLLING °C | COILING TEM-PERATURE °C | SHEET THICKNESS mm | TEMPERA-TURE °C | TIME SECOND | SHEET THICKNESS mm | REDUC-TION OF COLD ROLL-ING % | GRAIN SIZE OF PRIMARY RE-CRYSTALLIZED GRAIN $\mu$ m | NITROGEN CONTENT AFTER NITRI-DATION ppm |
| 79 | A2 | 1400 | 1100 | 540 | 2.6 | 1100 | 180 | 0.26 | 90.0 | 7 | - |
| 80 | A2 | 1400 | 1100 | 540 | 2.6 | 1100 | 180 | 0.26 | 90.0 | 7 | - |

40

[Table 7A]

[Table 7A]

TABLE7A

| No. | STEEL TYPE | PRODUCTION CONDITIONS | | | | | | | | DECARBURIZATION ANNEALING | |
|---|---|---|---|---|---|---|---|---|---|---|---|
| | | HOT ROLLING | | | HOT BAND ANNEALING | | | COLD ROLLING | | GRAIN SIZE OF PRIMARY RECRYSTALLIZED GRAIN | NITROGEN CONTENT AFTER NITRIDATION |
| | | HEATING TEMPERATURE °C | TEMPERATURE OF FINAL ROLLING °C | COILING TEMPERATURE °C | SHEET THICKNESS mm | TEMPERATURE °C | TIME SECOND | SHEET THICKNESS mm | REDUCTION OF COLD ROLLING % | μm | ppm |
| 81 | A2 | 1400 | 1100 | 540 | 2.6 | 1100 | 180 | 0.26 | 90.0 | 7 | - |
| 82 | A2 | 1400 | 1100 | 540 | 2.6 | 1100 | 180 | 0.26 | 90.0 | 7 | - |
| 83 | B1 | 1350 | 1100 | 540 | 2.6 | 1100 | 180 | 0.26 | 90.0 | 10 | - |
| 84 | B1 | 1350 | 1100 | 540 | 2.6 | 1100 | 180 | 0.26 | 90.0 | 10 | - |
| 85 | B1 | 1350 | 1100 | 540 | 2.6 | 1100 | 180 | 0.26 | 90.0 | 10 | - |
| 86 | B1 | 1350 | 1100 | 540 | 2.6 | 1100 | 180 | 0.26 | 90.0 | 10 | - |
| 87 | B1 | 1350 | 1100 | 540 | 2.6 | 1100 | 180 | 0.26 | 90.0 | 10 | - |
| 88 | B1 | 1350 | 1100 | 540 | 2.6 | 1100 | 180 | 0.26 | 90.0 | 10 | - |
| 89 | B1 | 1350 | 1100 | 540 | 2.6 | 1100 | 180 | 0.26 | 90.0 | 10 | - |
| 90 | B1 | 1350 | 1100 | 540 | 2.6 | 1100 | 180 | 0.26 | 90.0 | 10 | - |
| 91 | B1 | 1350 | 1100 | 540 | 2.6 | 1100 | 180 | 0.26 | 90.0 | 10 | - |
| 92 | B1 | 1350 | 1100 | 540 | 2.6 | 1100 | 180 | 0.26 | 90.0 | 10 | - |
| 93 | B2 | 1350 | 1100 | 540 | 2.6 | 1100 | 180 | 0.26 | 90.0 | 8 | - |
| 94 | B2 | 1350 | 1100 | 540 | 2.6 | 1100 | 180 | 0.26 | 90.0 | 8 | - |
| 95 | B2 | 1350 | 1100 | 540 | 2.6 | 1100 | 180 | 0.26 | 90.0 | 8 | - |
| 96 | B2 | 1350 | 1100 | 540 | 2.6 | 1100 | 180 | 0.26 | 90.0 | 8 | - |
| 97 | B2 | 1350 | 1100 | 540 | 2.6 | 1100 | 180 | 0.26 | 90.0 | 8 | - |
| 98 | B2 | 1350 | 1100 | 540 | 2.6 | 1100 | 180 | 0.26 | 90.0 | 8 | - |

(continued)

| | | PRODUCTION CONDITIONS | | | | | | | | | DECARBURIZATION ANNEALING | |
| | | HOT ROLLING | | | | HOT BAND ANNEALING | | COLD ROLLING | | | | |
| No. | STEEL TYPE | HEATING TEMPERATURE °C | TEMPERATURE OF FINAL ROLLING °C | COILING TEMPERATURE °C | SHEET THICKNESS mm | TEMPERATURE °C | TIME SECOND | SHEET THICKNESS mm | REDUCTION OF COLD ROLLING % | | GRAIN SIZE OF PRIMARY RECRYSTALLIZED GRAIN μm | NITROGEN CONTENT AFTER NITRIDATION ppm |
| 99 | B2 | 1350 | 1100 | 540 | 2.6 | 1100 | 180 | 0.26 | 90.0 | | 8 | - |
| 100 | B2 | 1350 | 1100 | 540 | 2.6 | 1100 | 180 | 0.26 | 90.0 | | 8 | - |

[Table 8A]

TABLE8A

| No. | STEEL TYPE | PRODUCTION CONDITIONS | | | | | | |
| --- | --- | --- | --- | --- | --- | --- | --- | --- |
| | | FINAL ANNEALING | | | | | | |
| | | PA | PB | PC | PD | TE MINUTE | TF MINUTE | TG MINUTE |
| 1 | C1 | 0.020 | 0.005 | 0.003 | 0.0007 | 150 | 180 | 300 |
| 2 | C1 | 0.050 | 0.010 | 0.003 | 0.0007 | 150 | 180 | 300 |
| 3 | C1 | 0.050 | 0.010 | 0.003 | 0.0007 | 150 | 180 | 300 |
| 4 | C1 | 0.050 | 0.010 | 0.003 | 0.0007 | 150 | 180 | 300 |
| 5 | C1 | 0.050 | 0.010 | 0.003 | 0.0007 | 150 | 180 | 300 |
| 6 | C1 | 0.050 | 0.005 | 0.003 | 0.0007 | 210 | 180 | 300 |
| 7 | C1 | 0.020 | 0.020 | 0.020 | 0.010 | 210 | 180 | 90 |
| 8 | C1 | 0.100 | 0.005 | 0.005 | 0.0007 | 150 | 180 | 300 |
| 9 | C1 | 0.050 | 0.020 | 0.005 | 0.010 | 210 | 180 | 300 |
| 10 | C1 | 0.050 | 0.010 | 0,050 | 0.010 | 210 | 180 | 300 |
| 11 | C1 | 0.050 | 0.005 | 0.003 | 0.0007 | 210 | 180 | 300 |
| 12 | C1 | 0.050 | 0.010 | 0.003 | 0.0007 | 150 | 180 | 300 |
| 13 | C1 | 0,020 | 0.010 | 0.003 | 0.0007 | 210 | 180 | 300 |
| 14 | C1 | 0.050 | 0.010 | 0.005 | 0.001 | 210 | 180 | 300 |
| 15 | C1 | 0.050 | 0.010 | 0.005 | 0.001 | 210 | 180 | 300 |
| 16 | C1 | 0.050 | 0.010 | 0.020 | 0.001 | 210 | 180 | 300 |
| 17 | C1 | 0.050 | 0.010 | 0.005 | 0.005 | 210 | 180 | 300 |
| 18 | C1 | 0.050 | 0.010 | 0.030 | 0.001 | 210 | 180 | 300 |
| 19 | C1 | 0.050 | 0.010 | 0.030 | 0.005 | 210 | 180 | 300 |
| 20 | C1 | 0.050 | 0.010 | 0.030 | 0.010 | 210 | 180 | 300 |

[Table 9A]

TABLE9A

| No. | STEEL TYPE | PRODUCTION CONDITIONS | | | | | | |
| --- | --- | --- | --- | --- | --- | --- | --- | --- |
| | | FINAL ANNEALING | | | | | | |
| | | PA | PB | PC | PD | TE MINUTE | TF MINUTE | TG MINUTE |
| 21 | C1 | 0.050 | 0.010 | 0.010 | 0.020 | 210 | 180 | 300 |
| 22 | C1 | 0.050 | 0.010 | 0.010 | 0.005 | 150 | 360 | 600 |
| 23 | C1 | 0.050 | 0.010 | 0.010 | 0.005 | 210 | 180 | 600 |
| 24 | D1 | 0.020 | 0.010 | 0.005 | 0.050 | 210 | 180 | 300 |

(continued)

| No. | STEEL TYPE | PRODUCTION CONDITIONS | | | | | | |
|-----|-----------|---|---|---|---|---|---|---|
| | | FINAL ANNEALING | | | | | | |
| | | PA | PB | PC | PD | TE MINUTE | TF MINUTE | TG MINUTE |
| 25 | D1 | 0.050 | 0.010 | 0.005 | 0.001 | 210 | 180 | 300 |
| 26 | D1 | 0.200 | 0.010 | 0.005 | 0.001 | 210 | 180 | 300 |
| 27 | D1 | 0.300 | 0.010 | 0.005 | 0.001 | 210 | 180 | 300 |
| 28 | D1 | 0.400 | 0.010 | 0.005 | 0.001 | 300 | 180 | 300 |
| 29 | D1 | 0.400 | 0.010 | 0.005 | 0.001 | 150 | 180 | 300 |
| 30 | D1 | 0.400 | 0.010 | 0.005 | 0.001 | 150 | 180 | 300 |
| 31 | D1 | 0.600 | 0.010 | 0.005 | 0.001 | 300 | 180 | 300 |
| 32 | D1 | 1.000 | 0.010 | 0.005 | 0.001 | 210 | 180 | 300 |
| 33 | D1 | 1.000 | 0.010 | 0.005 | 0.001 | 210 | 180 | 300 |
| 34 | D1 | 5.000 | 0.010 | 0.005 | 0.001 | 210 | 180 | 300 |
| 35 | D2 | 0.020 | 0.010 | 0.005 | 0.001 | 90 | 180 | 300 |
| 36 | D2 | 0.030 | 0.005 | 0.005 | 0.001 | 150 | 420 | 300 |
| 37 | D2 | 0.050 | 0.005 | 0.003 | 0.001 | 150 | 180 | 300 |
| 38 | D2 | 0.300 | 0.040 | 0.003 | 0.001 | 150 | 360 | 300 |
| 39 | D2 | 0.300 | 0.040 | 0.005 | 0.001 | 300 | 180 | 300 |
| 40 | D2 | 0.300 | 0.040 | 0.005 | 0.001 | 600 | 180 | 300 |

[Table 10A]

TABLE10A

| No. | STEEL TYPE | PRODUCTION CONDITIONS | | | | | | |
|-----|-----------|---|---|---|---|---|---|---|
| | | FINAL ANNEALING | | | | | | |
| | | PA | PB | PC | PD | TE MINUTE | TF MINUTE | TG MINUTE |
| 41 | D2 | 0.300 | 0.040 | 0.005 | 0.001 | 600 | 180 | 300 |
| 42 | D2 | 0.300 | 0.040 | 0.005 | 0.001 | 600 | 180 | 300 |
| 43 | D2 | 0.300 | 0.030 | 0.005 | 0.001 | 300 | 180 | 300 |
| 44 | D2 | 0.200 | 0.030 | 0.005 | 0.001 | 800 | 360 | 300 |
| 45 | D2 | 0.400 | 0.040 | 0.005 | 0.001 | 600 | 180 | 300 |
| 46 | D2 | 0.500 | 0.050 | 0.005 | 0.001 | 600 | 180 | 300 |
| 47 | D2 | 1.000 | 0.010 | 0.003 | 0.0007 | 150 | 180 | 300 |
| 48 | C1 | 0.200 | 0.005 | 0.005 | 0.0007 | 150 | 180 | 300 |
| 49 | C2 | 0.200 | 0.005 | 0.005 | 0.0007 | 150 | 180 | 300 |
| 50 | C3 | 0.200 | 0.005 | 0.005 | 0.0007 | 150 | 180 | 300 |
| 51 | C4 | 0.200 | 0.005 | 0.005 | 0.0007 | 150 | 180 | 300 |

(continued)

| No. | STEEL TYPE | PRODUCTION CONDITIONS | | | | | | |
| --- | --- | --- | --- | --- | --- | --- | --- | --- |
| | | FINAL ANNEALING | | | | | | |
| | | PA | PB | PC | PD | TE MINUTE | TF MINUTE | TG MINUTE |
| 52 | C5 | 0.200 | 0.005 | 0.005 | 0.0007 | 150 | 180 | 300 |
| 53 | C6 | 0.200 | 0.005 | 0.005 | 0.0007 | 150 | 180 | 300 |
| 54 | C7 | 0.200 | 0.005 | 0.005 | 0.0007 | 150 | 180 | 300 |
| 55 | C8 | 0.200 | 0.005 | 0.005 | 0.0007 | 150 | 360 | 300 |
| 56 | D1 | 0.050 | 0.005 | 0.003 | 0.003 | 150 | 360 | 300 |
| 57 | D2 | 0.050 | 0.005 | 0.003 | 0.003 | 150 | 180 | 300 |
| 58 | E | 0.050 | 0.005 | 0.003 | 0.003 | 150 | 360 | 300 |
| 59 | F | 0.050 | 0.005 | 0.003 | 0.003 | 150 | 180 | 300 |
| 60 | G | 0.050 | 0.005 | 0.003 | 0.003 | 150 | 180 | 300 |

[Table 11A]

TABLET11A

| No. | STEEL TYPE | PRODUCTION CONDITIONS | | | | | | |
| --- | --- | --- | --- | --- | --- | --- | --- | --- |
| | | FINAL ANNEALING | | | | | | |
| | | PA | PB | PC | PD | TE MINUTE | TF MINUTE | TG MINUTE |
| 61 | H | 0.050 | 0.005 | 0.003 | 0.003 | 150 | 180 | 300 |
| 62 | I | 0.050 | 0.005 | 0.003 | 0.003 | 150 | 360 | 300 |
| 63 | J | 0.050 | 0.005 | 0.003 | 0.003 | 150 | 180 | 300 |
| 64 | K | 0.050 | 0.005 | 0.003 | 0.003 | 150 | 180 | 300 |
| 65 | A1 | 0.050 | 0.010 | 0.003 | 0.0007 | 150 | 180 | 300 |
| 66 | A1 | 0.050 | 0.018 | 0.003 | 0.0007 | 150 | 180 | 300 |
| 67 | A1 | 0.050 | 0.025 | 0.003 | 0.003 | 150 | 180 | 300 |
| 68 | A1 | 0.400 | 0.150 | 0.003 | 0.0007 | 300 | 180 | 300 |
| 69 | A1 | 0.400 | 0.018 | 0.015 | 0.003 | 300 | 180 | 300 |
| 70 | A1 | 0.050 | 0.018 | 0.015 | 0.003 | 600 | 180 | 300 |
| 71 | A1 | 0.050 | 0.025 | 0.015 | 0.003 | 300 | 180 | 300 |
| 72 | A1 | 0.050 | 0.025 | 0.015 | 0.003 | 600 | 180 | 300 |
| 73 | A1 | 0.050 | 0.025 | 0.015 | 0.003 | 600 | 180 | 300 |
| 74 | A2 | 0.050 | 0.010 | 0.003 | 0.0007 | 150 | 180 | 300 |
| 75 | A2 | 0.050 | 0.018 | 0.003 | 0.0007 | 150 | 180 | 300 |
| 76 | A2 | 0.050 | 0.025 | 0.015 | 0.003 | 150 | 180 | 300 |
| 77 | A2 | 0.400 | 0.005 | 0.003 | 0.0007 | 300 | 180 | 300 |
| 78 | A2 | 0.400 | 0.018 | 0.003 | 0.0007 | 300 | 180 | 300 |

(continued)

| No. | STEEL TYPE | PRODUCTION CONDITIONS | | | | | | |
| | | FINAL ANNEALING | | | | | | |
| | | PA | PB | PC | PD | TE MINUTE | TF MINUTE | TG MINUTE |
| 79 | A2 | 0.050 | 0.018 | 0.003 | 0.0007 | 600 | 180 | 300 |
| 80 | A2 | 0.050 | 0.025 | 0.015 | 0.003 | 300 | 180 | 300 |

[Table 12A]

TABLE12A

| No. | STEEL TYPE | PRODUCTION CONDITIONS | | | | | | |
| | | FINAL ANNEALING | | | | | | |
| | | PA | PB | PC | PD | TE MINUTE | TF MINUTE | TG MINUTE |
| 81 | A2 | 0.050 | 0.025 | 0.015 | 0.003 | 600 | 180 | 300 |
| 82 | A2 | 0.050 | 0.025 | 0.015 | 0.003 | 600 | 180 | 300 |
| 83 | B1 | 0.100 | 0.010 | 0.010 | 0.003 | 300 | 180 | 300 |
| 84 | B1 | 0.100 | 0.010 | 0.010 | 0.005 | 600 | 180 | 300 |
| 85 | B1 | 1.000 | 0.010 | 0.010 | 0.005 | 300 | 180 | 300 |
| 86 | B1 | 1.000 | 0.010 | 0.010 | 0.003 | 300 | 180 | 300 |
| 87 | B1 | 0.400 | 0.040 | 0.040 | 0.003 | 600 | 180 | 300 |
| 88 | B1 | 0.010 | 0.025 | 0.015 | 0.003 | 900 | 180 | 300 |
| 89 | B1 | 1.000 | 0.025 | 0.0015 | 0.003 | 90 | 180 | 300 |
| 90 | B1 | 1.000 | 0.250 | 0.150 | 0.075 | 900 | 180 | 300 |
| 91 | B1 | 0.020 | 0.010 | 0.003 | 0.0007 | 150 | 180 | 300 |
| 92 | B1 | 1.000 | 0.010 | 0.003 | 0.0007 | 150 | 180 | 1800 |
| 93 | B2 | 0.100 | 0.010 | 0.010 | 0.003 | 300 | 180 | 300 |
| 94 | B2 | 0.100 | 0.010 | 0.010 | 0.005 | 600 | 180 | 300 |
| 95 | B2 | 1.000 | 0.010 | 0.010 | 0.005 | 300 | 180 | 300 |
| 96 | B2 | 1.000 | 0.010 | 0.010 | 0.003 | 300 | 180 | 300 |
| 97 | B2 | 0.400 | 0.040 | 0.040 | 0.003 | 600 | 180 | 300 |
| 98 | 82 | 0.010 | 0.025 | 0.015 | 0.003 | 900 | 180 | 300 |
| 99 | 82 | 1.000 | 0.025 | 0.015 | 0.003 | 90 | 180 | 300 |
| 100 | 82 | 1.000 | 0.025 | 0.150 | 0.075 | 900 | 180 | 300 |

Coating solution for forming the insulation coating which mainly included phosphate and colloidal silica and which included chromium was applied on primary layer (intermediate layer) formed on the surface of produced grain oriented electrical steel sheets (final annealed sheets). The above steel sheets were heated and held in atmosphere of 75 volume% hydrogen and 25 volume% nitrogen, were cooled, and thereby the insulation coating was formed.

The produced grain oriented electrical steel sheets had the intermediate layer which was arranged in contact with the grain oriented electrical steel sheet (silicon steel sheet) and the insulation coating which was arranged in contact with the intermediate layer, when viewing the cross section whose cutting direction is parallel to thickness direction. The intermediate layer was forsterite film whose average thickness was 2 $\mu$m, and the insulation coating was the coating which mainly included phosphate and colloidal silica and whose average thickness was 1 $\mu$m.

Various characteristics of the obtained grain oriented electrical steel sheet were evaluated. The evaluation results are shown in Table 13A to Table 22A.

(1) Crystal orientation of grain oriented electrical steel sheet

Crystal orientation of grain oriented electrical steel sheet was measured by the above-mentioned method. Deviation angle was identified from the crystal orientation at each measurement point, and the boundary between two adjacent measurement points was identified based on the above deviation angles. When the boundary condition is evaluated by using two measurement points whose interval is 1 mm and when the value obtained by dividing "the number of boundaries satisfying the boundary condition BAy" by "the number of boundaries satisfying the boundary condition BB" is 1.05 or more, the steel sheet is judged to include "the boundary which satisfies the boundary condition BAy and which does not satisfy the boundary condition BB", and the steel sheet is represented such that "switching boundary" exists in the Tables. Here, "the number of boundaries satisfying the boundary condition BAy" corresponds to the boundary of the case 1 and/or the case 3 in Table 1 as shown above, and "the number of boundaries satisfying the boundary condition BB" corresponds to the boundary of the case 1 and/or the case 2. The average grain size was calculated based on the above identified boundaries.

(2) Magnetic characteristics of grain oriented electrical steel

Magnetic characteristics of the grain oriented electrical steel were measured based on the single sheet tester (SST) method regulated by JIS C 2556: 2015.

As the magnetic characteristics, the iron loss $W_{17/50}$ (unit: W/kg) which was defined as the power loss per unit weight (1 kg) of the steel sheet was measured under the conditions of 50 Hz of AC frequency and 1.7 T of excited magnetic flux density. Moreover, the magnetic flux density $B_8$ (unit: T) in the rolling direction of the steel sheet was measured under the condition such that the steel sheet was excited at 800 A/m.

In addition, as the magnetic characteristics, the magnetostriction $\lambda$p-p@1.7T (difference between the minimum and the maximum of magnetostriction at 1.7 T) generated in the steel sheet was measured under the conditions of 50 Hz of AC frequency and 1.7 T of excited magnetic flux density. Specifically, using the maximum length $L_{max}$ and the minimum length Lmin of the test piece (steel sheet) under the above excitation condition and using the length $L_0$ of the test piece under 0T of the magnetic flux density, the magnetostriction $\lambda$p-p@1.7T was calculated based on $\lambda$p-p@1.7T = $(L_{max} - L_{min}) \div L_0$.

In the same way, the magnetostriction $\lambda$p-p@1.9T (difference between the minimum and the maximum of magnetostriction at 1.9 T) generated in the steel sheet was measured under the conditions of 50 Hz of AC frequency and 1.9 T of excited magnetic flux density.

Based on the values of the magnetic characteristics, the magnetostriction velocity level at 1.7 T (Lva @ 1.7T) and the magnetostriction velocity level at 1.9 T (Lva @ 1.9T) were calculated. The magnetostrictive waveform with cycles of two or more and the waveform obtained at a sampling frequency of 6.4 kHz were fourier-transformed, the magnetostriction $\lambda$ at each frequency (fi) (0 to 3.2 kHz) was obtained, and thereby, the magnetostriction velocity level Lva (unit: dB) was calculated using a following expression (4).

$$\text{Lva} = 20 \times \log_{10} \left[ \left\{ \rho c \times \left\{ \Sigma \left( 2^{1/2} \pi \times \text{fi} \times \lambda(\text{fi}) \times \alpha(\text{fi}) \right)^2 \right\}^{1/2} \right\} \middle/ P_0 \right] \quad .....(\text{expression } 4)$$

Herein,

$\rho$ : Density of air (kg/m$^3$)

c : Speed of sound (m/s)

$P_0$: Minimum pressure which human can hear sound of 1kHz (Pa),

fi: Frequency (Hz)

$\lambda$(fi) : Magnetostriction at each frequency converted into Fourier

a(fi) : A-weighting at frequency fi

$\pi$ : Pi (the ratio of the circumference of a circle to its diameter)

In order to obtain Lva@1.7T and Lva@ 1.9T, the following values were substituted.

$$\rho = 1.185 \ (kg/m^3)$$

$$c = 346.3 \ (m/s)$$

$$P_0 = 2 \times 10^{-5} \ (Pa)$$

[Table 13A]

TABLE13A

| No. | STEEL TYPE | PRODUCTION RESULTS | | | | | | | |
|---|---|---|---|---|---|---|---|---|---|
| | | BOUNDARY. SIZE | | | | | | | |
| | | EXISTENCE OF SWITCHING BOUNDARY | RA$\alpha$c $\mu$m | RA$\beta$c $\mu$m | RA$\gamma$c $\mu$m | RB$_c$ $\mu$m | RA$\gamma$c /RA$\alpha$c | RA$\gamma$c /RA$\beta$c | RB$_C$ /RA$\gamma$c |
| 1 | C1 | NONE | 25.0 | 24.5 | 24.8 | 23.6 | 0.990 | 1.013 | 0.95 1 |
| 2 | C1 | NONE | 30.2 | 30.0 | 30.1 | 28.4 | 0.995 | 1.003 | 0.943 |
| 3 | C1 | NONE | 36.0 | 35.3 | 35.5 | 35.1 | 0.987 | 1.007 | 0.987 |
| 4 | C1 | NONE | 20.9 | 21.9 | 21.7 | 19.7 | 1.039 | 0.994 | 0.905 |
| 5 | C1 | NONE | 26.6 | 26.6 | 26.7 | 24.7 | 1.004 | 1.004 | 0.925 |
| 6 | C1 | NONE | 25.8 | 25.9 | 25.9 | 24.1 | 1.005 | 1.001 | 0.930 |
| 7 | C1 | NONE | 25.7 | 25.6 | 25.7 | 25.3 | 1.002 | 1.003 | 0.984 |
| 8 | C1 | NONE | 28.3 | 28.6 | 28.6 | 27.0 | 1.008 | 1.000 | 0.947 |
| 9 | C1 | EXISTENCE | 22.0 | 22.3 | 19.8 | 21.2 | 0.902 | 0.890 | 1.070 |
| 10 | C1 | EXISTENCE | 18.8 | 18.4 | 17.9 | 19.5 | 0.948 | 0.972 | 1.091 |
| 11 | C1 | NONE | 26.1 | 26.6 | 26.3 | 24.1 | 1.008 | 0.986 | 0.917 |
| 12 | C1 | NONE | 25.8 | 26.1 | 26.2 | 24.1 | 1.018 | 1.006 | 0.920 |
| 13 | C1 | NONE | 24.8 | 24.9 | 25.1 | 23.3 | 1.010 | 1.007 | 0.931 |
| 14 | C1 | EXISTENCE | 22.3 | 22.5 | 20.2 | 23.9 | 0.906 | 0.898 | 1.182 |
| 15 | C1 | EXISTENCE | 23.1 | 22.6 | 21.8 | 23.7 | 0.944 | 0.963 | 1.090 |
| 16 | C1 | EXISTENCE | 22.4 | 21.8 | 20.8 | 23.6 | 0.930 | 0.956 | 1.133 |
| 17 | C1 | EXISTENCE | 22.3 | 22.5 | 20.1 | 22.7 | 0,903 | 0.895 | 1.125 |
| 18 | C1 | EXISTENCE | 21.9 | 21.8 | 20.5 | 24.1 | 0.933 | 0.940 | 1.177 |
| 19 | C1 | EXISTENCE | 22,2 | 22.3 | 20.0 | 24.1 | 0.904 | 0.899 | 1.204 |
| 20 | C1 | EXISTENCE | 22.2 | 22.5 | 21.1 | 25.3 | 0.951 | 0.934 | 1.200 |

[Table 14A]

TABLE14A

| No. | STEEL TYPE | PRODUCTION RESULTS | | | | | | | |
|---|---|---|---|---|---|---|---|---|---|
| | | BOUNDARY, SIZE | | | | | | | |
| | | EXISTENCE OF SWITCHING BOUNDARY: | RA$\alpha$c $\mu$m | RA$\beta$c $\mu$m | RA$\gamma$c $\mu$m | RB$_c$ $\mu$m | RA$\gamma$c | RA$\gamma$c /RA$\beta$c | RB$_c$ /RA$\gamma$c |
| 21 | C1 | EXISTENCE | 21.1 | 21.8 | 19.2 | 24.6 | 0.907 | 0.877 | 1.285 |
| 22 | C1 | NONE | 35.3 | 35.1 | 35.2 | 33.0 | 0.997 | 1.003 | 0.937 |
| 23 | C1 | EXISTENCE | 30.0 | 30.3 | 28.4 | 33.0 | 0.948 | 0.936 | 1.161 |
| 24 | D1 | NONE | 25.8 | 25.4 | 26.1 | 25.1 | 1.008 | 1.024 | 0.964 |
| 25 | D1 | EXISTENCE | 22.4 | 22.3 | 21.5 | 24.4 | 0.961 | 0.968 | 1.134 |
| 26 | D1 | EXISTENCE | 23.4 | 22.6 | 22.2 | 25.6 | 0.949 | 0.983 | 1.151 |
| 27 | D1 | EXISTENCE | 22.8 | 22.7 | 20.7 | 25.6 | 0.905 | 0.911 | 1.239 |
| 28 | D1 | EXISTENCE | 21.6 | 20.7 | 19.6 | 26.0 | 0.906 | 0.947 | 1.326 |
| 29 | D1 | EXISTENCE | 20.3 | 20.9 | 19.2 | 25.3 | 0.943 | 0.920 | 1.321 |
| 30 | D1 | EXISTENCE | 20.9 | 21,4 | 20.3 | 25.7 | 0.973 | 0.950 | 1.268 |
| 31 | D1 | EXISTENCE | 20.6 | 21.1 | 19.3 | 24.8 | 0.939 | 0.918 | 1.285 |
| 32 | D1 | EXISTENCE | 20.9 | 21.1 | 19.5 | 22.7 | 0.930 | 0.923 | 1.164 |
| 33 | D1 | EXISTENCE | 19.2 | 19.0 | 17.4 | 22.2 | 0.907 | 0.91 9 | 1.272 |
| 34 | D1 | NONE | 18.8 | 18.0 | 18.6 | 17.7 | 0.990 | 1.030 | 0.950 |
| 35 | D2 | NONE | 21.0 | 21.2 | 21.3 | 20.9 | 1.017 | 1.008 | 0.982 |
| 36 | D2 | EXISTENCE | 16.7 | 17.5 | 17.4 | 25.2 | 1.047 | 0.995 | 1.443 |
| 37 | D2 | EXISTENCE | 17.5 | 17.0 | 15.7 | 25.2 | 0.896 | 0.921 | 1.612 |
| 38 | D2 | EXISTENCE· | 17.2 | 17.6 | 15.5 | 25.0 | 0.905 | 0.882 | 1.609 |
| 39 | D2 | EXISTENCE | 14.7 | 14.9 | 13.0 | 26.1 | 0.886 | 0.876 | 2.009 |
| 40 | D2 | EXISTENCE | 13.1 | 13.8 | 12.0 | 24.5 | 0.916 | 0.871 | 2.038 |

[Table 15A]

TABLE15A

| No. | STEEL TYPE | PRODUCTION RESULTS | | | | | | | |
|---|---|---|---|---|---|---|---|---|---|
| | | BOUNDARY, SIZE | | | | | | | |
| | | EXISTENCE OF SWITCHING BOUNDARY | RA$\alpha$c $\mu$m | RA$\beta$c $\mu$m | RA$\gamma$c $\mu$m | RB$_c$ $\mu$m | RA$\gamma$C /RA$\alpha$C | RA$\gamma$C /RA$\beta$C | RB$_c$ /RA$\gamma$C |
| 41 | D2 | EXISTENCE. | 13.7 | 13.1 | 12.1 | 25.3 | 0.884 | 0.928 | 2.086 |
| 42 | D2 | EXISTENCE | 13.7 | 13.9 | 12.2 | 24.7 | 0.893 | 0.882 | 2.019 |
| 43 | D2 | EXISTENCE | 14.3 | 14.3 | 12.9 | 25.5 | 0.904 | 0.903 | 1.969 |
| 44 | D2 | EXISTENCE | 14.9 | 15.6 | 13.8 | 25.7 | 0.923 | 0.885 | 1.864 |
| 45 | D2 | EXISTENCE | 14.0 | 14.3 | 13.4 | 26.6 | 0.958 | 0.933 | 1.988 |

(continued)

| No. | STEEL TYPE | PRODUCTION RESULTS | | | | | | | |
|---|---|---|---|---|---|---|---|---|---|
| | | BOUNDARY, SIZE | | | | | | | |
| | | EXISTENCE OF SWITCHING BOUNDARY | RA$\alpha$ c $\mu$m | RA$\beta$ c $\mu$m | RA$\gamma$ c $\mu$m | RB$_c$ $\mu$m | RA$\gamma_C$ /RA$\alpha_C$ | RA$\gamma_C$ /RA$\beta_C$ | RB$_c$ /RA$\gamma_C$ |
| 46 | D2 | EXISTENCE | 13.9 | 13.9 | 12.9 | 27.1 | 0.926 | 0.926 | 2.107 |
| 47 | D2 | EXISTENCE | 17.2 | 17.1 | 14.7 | 25.3 | 0.860 | 0.860 | 1.713 |
| 48 | C1 | NONE | 16.3 | 16.7 | 16.5 | 14.8 | 1.013 | 0.987 | 0.898 |
| 49 | C2 | NONE | 17.0 | 17.9 | 17.7 | 16.3 | 1.043 | 0.988 | 0.920 |
| 50 | C3 | EXISTENCE | 19.6 | 19.2 | 18.3 | 24.3 | 0.933 | 0.955 | 1.329 |
| 51 | C4 | EXISTENCE | 17.9 | 17.6 | 15.3 | 25.1 | 0.858 | 0.871 | 1.641 |
| 52 | C5 | EXISTENCE | 17.4 | 17.3 | 15.6 | 25.0 | 0.895 | 0.901 | 1.601 |
| 53 | C6 | EXISTENCE | 18.0 | 17.8 | 16.4 | 26.1 | 0.914 | 0.923 | 1.588 |
| 54 | C7 | EXISTENCE | 19.5 | 19.3 | 18.4 | 25.1 | 0.947 | 0.955 | 1.362 |
| 55 | C8 | NONE | 17.0 | 16.1 | 16.9 | 14.4 | 0.994 | 1.048 | 0.853 |
| 56 | D1 | NONE | 16.9 | 17.1 | 17.0 | 15.6 | 1.008 | 0.996 | 0.915 |
| 57 | D2 | EXISTENCE | 16.8 | 16.7 | 15.8 | 23.7 | 0.941 | 0.948 | 1.494 |
| 58 | E | EXISTENCE | 18.9 | 18.7 | 18.2 | 23.9 | 0.967 | 0.973 | 1.313 |
| 59 | F | EXISTENCE | 16.9 | 17.1 | 15.2 | 24.2 | 0.898 | 0.890 | 1.596 |
| 60 | G | EXISTENCE | 16.5 | 16.9 | 15.2 | 22.9 | 0.917 | 0.898 | 1.511 |

[Table 16A]

TABLE16A

| No. | STEEL TYPE | PRODUCTION RESULTS | | | | | | | |
|---|---|---|---|---|---|---|---|---|---|
| | | BOUNDARY, SIZE | | | | | | | |
| | | EXISTENCE OF SWITCHING BOUNDARY | RA$\alpha$ c $\mu$m | RA$\beta$ C $\mu$m | RA$\gamma$ c $\mu$m | RB$_C$ $\mu$m | RA$\gamma_C$ /RA$\alpha_C$ | RA$\gamma_C$ /RA$\beta_C$ | RB$_c$ /RA$\gamma_C$ |
| 61 | H | EXISTENCE | 17.9 | 17.5 | 17.0 | 25.2 | 0.946 | 0.972 | 1.486 |
| 62 | I | EXISTENCE | 19.7 | 19.0 | 17.4 | 23.5 | 0.885 | 0.916 | 1.351 |
| 63 | J | EXISTENCE | 16.9 | 17.0 | 14.9 | 25,4 | 0.884 | 0.877 | 1.698 |
| 64 | K | EXISTENCE | 17.5 | 17.0 | 15.8 | 24.1 | 0.903 | 0.932 | 1.521 |
| 65 | A1 | NONE | 15.0 | 15.7 | 15.1 | 13.5 | 1.005 | 0.958 | 0.897 |
| 66 | A1 | NONE | 15.6 | 15.9 | 15.7 | 13.6 | 1.005 | 0.986 | 0.867 |
| 67 | A1 | NONE | 15.5 | 15.8 | 15.8 | 14,5 | 1.019 | 0.995 | 0.922 |
| 68 | A1 | NONE | 18.6 | 17.6 | 18.3 | 17.7 | 0.983 | 1.037 | 0.969 |
| 69 | A1 | EXISTENCE | 31.5 | 31.3 | 29.0 | 32.5 | 0.923 | 0.926 | 1.119 |
| 70 | A1 | EXISTENCE | 28.1 | 28.2 | 26.2 | 32.6 | 0,933 | 0.930 | 1.245 |

(continued)

| No. | STEEL TYPE | PRODUCTION RESULTS | | | | | | | |
|---|---|---|---|---|---|---|---|---|---|
| | | BOUNDARY, SIZE | | | | | | | |
| | | EXISTENCE OF SWITCHING BOUNDARY | RA$\alpha$c $\mu$m | RA$\beta$c $\mu$m | RA$\gamma$c $\mu$m | RB$_C$ $\mu$m | RA$\gamma_C$ /RA$\alpha_C$ | RA$\gamma_C$ /RA$\beta_C$ | RB$_c$ /RA$\gamma_C$ |
| 71 | A1 | EXISTENCE | 29.7 | 30.0 | 28.8 | 36.3 | 0.970 | 0.960 | 1.260 |
| 72 | A1 | EXISTENCE | 31.4 | 31.7 | 30.9 | 39.9 | 0.986 | 0.975 | 1.288 |
| 73 | A1 | EXISTENCE | 31.1 | 31.8 | 30.0 | 40.8 | 0.965 | 0.944 | 1.358 |
| 74 | A2 | EXISTENCE | 18.2 | 17.4 | 15.6 | 25.4 | 0.860 | 0.896 | 1.629 |
| 75 | A2 | EXISTENCE | 16.9 | 17.2 | 15.5 | 24.9 | 0.916 | 0.897 | 1.610 |
| 76 | A2 | EXISTENCE | 17.2 | 17.2 | 16.4 | 25.3 | 0.955 | 0.956 | 1.541 |
| 77 | A2 | EXISTENCE | 17.9 | 17.2 | 17.4 | 25.0 | 0.974 | 1.015 | 1.432 |
| 78 | A2 | EXISTENCE | 16.1 | 15.8 | 15.0 | 26.6 | 0.932 | 0.948 | 1.776 |
| 79 | A2 | EXISTENCE | 16.5 | 16.4 | 14.1 | 26.0 | 0.853 | 0.856 | 1.847 |
| 80 | A2 | EXISTENCE | 15.5 | 15,0 | 13.9 | 24.2 | 0.897 | 0.928 | 1.743 |

[Table 17A]

TABLE17A

| No. | STEEL TYPE | PRODUCTION RESULTS | | | | | | | |
|---|---|---|---|---|---|---|---|---|---|
| | | BOUNDARY, SIZE | | | | | | | |
| | | EXISTENCE OF SWITCHING BOUNDARY | RA$\alpha$c $\mu$m | RA$\beta$c $\mu$m | RA$\gamma$c $\mu$m | RB$_c$ $\mu$m | RA$\gamma_C$ /RA$\alpha_c$ | RA$\gamma_C$ /RA$\beta_C$ | RB$_c$ /RA$\gamma_c$ |
| 81 | A2 | EXISTENCE | 15.5 | 14.9 | 14.5 | 24.1 | 0.939 | 0.977 | 1.661 |
| 82 | A2 | EXISTENCE | 15.0 | 15.7 | 13.2 | 25.0 | 0.883 | 0.841 | 1.894 |
| 83 | B1 | EXISTENCE | 32.0 | 32.2 | 30.3 | 41.4 | 0.949 | 0.940 | 1.366 |
| 84 | B1 | EXISTENCE | 37.4 | 37.3 | 36.3 | 55.2 | 0.972 | 0.973 | 1.520 |
| 85 | B1 | EXISTENCE | 35.3 | 34.7 | 33.0 | 47.9 | 0.933 | 0.950 | 1.452 |
| 86 | B1 | EXISTENCE | 32.1 | 32.7 | 31.8 | 40.8 | 0.990 | 0.971 | 1.284 |
| 87 | B1 | EXISTENCE | 41.1 | 40.5 | 39.6 | 64.5 | 0.964 | 0.977 | 1.631 |
| 88 | B1 | NONE | 22.3 | 22.1 | 22.8 | 22.4 | 1.020 | 1.031 | 0.982 |
| 89 | B1 | NONE | 20.5 | 20.8 | 20.7 | 21.0 | 1.006 | 0.993 | 1.016 |
| 90 | B1 | NONE | 22.1 | 21.9 | 22.4 | 23.1 | 1.011 | 1.021 | 1.031 |
| 91 | B1 | NONE | 16.1 | 15.8 | 16.0 | 13.4 | 0.991 | 1.010 | 0.834 |
| 92 | 81 | NONE | 21.8 | 21.7 | 22.3 | 22.9 | 1.023 | 1.029 | 1.025 |
| 93 | B2 | EXISTENCE | 15.1 | 15.1 | 14.4 | 24.3 | 0.949 | 0.951 | 1.694 |
| 94 | B2 | EXISTENCE | 15.1 | 14.9 | 12.3 | 26.3 | 0.815 | 0.829 | 2.133 |
| 95 | B2 | EXISTENCE | 14.8 | 15.2 | 14.1 | 26.4 | 0.953 | 0.927 | 1.869 |

(continued)

| No. | STEEL TYPE | PRODUCTION RESULTS | | | | | | | | |
|---|---|---|---|---|---|---|---|---|---|---|
| | | BOUNDARY, SIZE | | | | | | | | |
| | | EXISTENCE OF SWITCHING BOUNDARY | RA $\alpha_c$ $\mu$m | RA $\beta_c$ $\mu$m | RA $\gamma_c$ $\mu$m | RB$_c$ $\mu$m | RA $\gamma_C$ /RA $\alpha_c$ | RA $\gamma_C$ /RA $\beta_C$ | RB$_c$ /RA $\gamma_c$ |
| 96 | 82 | EXISTENCE | 15.3 | 15.4 | 13.2 | 24.6 | 0.863 | 0.856 | 1.863 |
| 97 | B2 | EXISTENCE | 14.4 | 13.5 | 12.7 | 26.3 | 0.879 | 0.937 | 2.077 |
| 98 | B2 | EXISTENCE | 16.6 | 17.1 | 16.9 | 26.0 | 1.017 | 0.989 | 1.589 |
| 99 | 82 | EXISTENCE | 16.7 | 16.4 | 16.6 | 24.1 | 0.997 | 1.015 | 1.450 |
| 100 | B2 | EXISTENCE | 16.2 | 16.4 | 16.6 | 25.2 | 1.026 | 1.013 | 1.517 |

[Table 18A]

TABLE18A

| No. | STEEL TYPE | EVALUATION RESULTS | | | | NOTE |
|---|---|---|---|---|---|---|
| | | MAGNETIC CHARACTERISTICS | | | | |
| | | $B_8$ T | Lva @1.7T dB | Lva @1.9T dB | $W_{17/50}$ W/kg | |
| 1 | C1 | 1.912 | 52.870 | 63.970 | 0.890 | COMPARATIVE EXAMPLE |
| 2 | C1 | 1.921 | 52.919 | 62.479 | 0.868 | COMPARATIVE EXAMPLE |
| 3 | C1 | 1.927 | 52.400 | 60.950 | 0.852 | COMPARATIVE EXAMPLE |
| 4 | C1 | 1 .902 | 53.964 | 60.469 | 0.902 | COMPARATIVE EXAMPLE |
| 5 | C1 | 1.912 | 52.942 | 60.308 | 0.880 | COMPARATIVE EXAMPLE |
| 6 | C1 | 1.916 | 53.189 | 60.551 | 0.882 | COMPARATIVE EXAMPLE |
| 7 | C1 | 1.927 | 53.420 | 64.241 | 0.871 | COMPARATIVE EXAMPLE |
| 8 | C1 | 1.922 | 52.907 | 61.163 | 0.875 | COMPARATIVE EXAMPLE |
| 9 | C1 | 1,918 | 48.868 | 54.818 | 0.873 | INVENTIVE EXAMPLE |
| 10 | C1 | 1.911 | 48.630 | 54.467 | 0.895 | INVENTIVE EXAMPLE |
| 11 | C1 | 1.918 | 53.631 | 61.684 | 0.883 | COMPARATIVE EXAMPLE |
| 12 | C1 | 1.918 | 52.849 | 63.338 | 0.883 | COMPARATIVE EXAMPLE |
| 13 | C1 | 1.914 | 53.548 | 61.568 | 0.880 | COMPARATIVE EXAMPLE |
| 14 | C1 | 1.919 | 48.885 | 55.675 | 0.874 | INVENTIVE EXAMPLE |
| 15 | C1 | 1.920 | 48.819 | 55.599 | 0.874 | INVENTIVE EXAMPLE |
| 16 | C1 | 1.920 | 49.048 | 57.515 | 0.875 | INVENTIVE EXAMPLE |
| 17 | C1 | 1.917 | 48.876 | 54.352 | 0.875 | INVENTIVE EXAMPLE |
| 18 | C1 | 1.925 | 48.741 | 53.831 | 0.867 | INVENTIVE EXAMPLE |
| 19 | C1 | 1.917 | 48.413 | 57.205 | 0.875 | INVENTIVE EXAMPLE |
| 20 | C1 | 1.922 | 48.270 | 56.171 | 0.867 | INVENTIVE EXAMPLE |

[Table 19A]

TABLE19A

| No. | STEEL TYPE | EVALUATION RESULTS | | | | NOTE |
|---|---|---|---|---|---|---|
| | | MAGNETIC CHARACTERISTICS | | | | |
| | | $B_8$ T | Lva @1.7T dB | Lva @1.9T dB | $W_{17/50}$ W/kg | |
| 21 | C1 | 1.928 | 48.193 | 54.028 | 0.861 | INVENTIVE EXAMPLE |
| 22 | C1 | 1.943 | 52.583 | 59.529 | 0.852 | COMPARATIVE EXAMPLE |
| 23 | C1 | 1.944 | 46.996 | 53.576 | 0.844 | INVENTIVE EXAMPLE |
| 24 | D1 | 1.914 | 53.470 | 64.058 | 0.860 | COMPARATIVE EXAMPLE |
| 25 | D1 | 1.910 | 48.562 | 53.872 | 0.854 | INVENTIVE EXAMPLE |
| 26 | D1 | 1.914 | 48.150 | 56.385 | 0.847 | INVENTIVE EXAMPLE |
| 27 | D1 | 1.919 | 48.698 | 55.984 | 0.842 | INVENTIVE EXAMPLE |
| 28 | D1 | 1.928 | 47.924 | 55.400 | 0.834 | INVENTIVE EXAMPLE |
| 29 | D1 | 1.927 | 47.941 | 58.279 | 0.831 | INVENTIVE EXAMPLE |
| 30 | D1 | 1.924 | 48.869 | 56.911 | 0.835 | INVENTIVE EXAMPLE |
| 31 | D1 | 1.921 | 48.176 | 57.786 | 0.834 | INVENTIVE EXAMPLE |
| 32 | D1 | 1.918 | 48.892 | 58.483 | 0.847 | INVENTIVE EXAMPLE |
| 33 | D1 | 1.915 | 48.728 | 56.249 | 0.853 | INVENTIVE EXAMPLE |
| 34 | D1 | 1.912 | 53.423 | 61.554 | 0.861 | COMPARATIVE EXAMPLE |
| 35 | D2 | 1.935 | 53.003 | 61.923 | 0.848 | COMPARATIVE EXAMPLE |
| 36 | D2 | 1.945 | 51.660 | 59.842 | 0.835 | CDMPARATIVE EXAMPLE |
| 37 | D2 | 1.944 | 47.048 | 54.294 | 0.835 | INVENTIVE EXAMPLE |
| 38 | D2 | 1.953 | 46.394 | 53.917 | 0.811 | INVENTIVE EXAMPLE |
| 39 | D2 | 1.961 | 46.040 | 54.456 | 0.794 | INVENTIVE EXAMPLE |
| 40 | D2 | 1.968 | 46.187 | 53.786 | 0.790 | INVENTIVE EXAMPLE |

[Table 20A]

TABLE20A

| No. | STEEL TYPE | EVALUATION RESULTS | | | | NOTE |
|---|---|---|---|---|---|---|
| | | MAGNETIC CHARACTERISTICS | | | | |
| | | $B_8$ T | Lva @1.7T dB | Lva @1.9T dB | $W_{17/50}$ W/kg | |
| 41 | D2 | 1.959 | 47.011 | 53.675 | 0.800 | INVENTIVE EXAMPLE |
| 42 | D2 | 1.956 | 46.797 | 52.171 | 0.811 | INVENTIVE EXAMPLE |
| 43 | D2 | 1.955 | 46.427 | 55.097 | 0.802 | INVENTIVE EXAMPLE |
| 44 | D2 | 1.964 | 46.097 | 56.365 | 0.802 | INVENTIVE EXAMPLE |

(continued)

| No. | STEEL TYPE | EVALUATION RESULTS | | | | NOTE |
|-----|-----------|--------------------|--|--|--|------|
| | | MAGNETIC CHARACTERISTICS | | | | |
| | | $B_8$ T | Lva @1.7T dB | Lva @1.9T dB | $W_{17/50}$ W/kg | |
| 45 | D2 | 1.960 | 46.833 | 57.021 | 0.800 | INVENTIVE EXAMPLE |
| 46 | D2 | 1.959 | 46.413 | 53.808 | 0.800 | INVENTIVE EXAMPLE |
| 47 | D2 | 1.948 | 46.503 | 54.223 | 0.819 | INVENTIVE EXAMPLE |
| 48 | C1 | 1.913 | 52.885 | 59.619 | 0.875 | COMPARATIVE EXAMPLE |
| 49 | C2 | 1.924 | 52.803 | 60.862 | 0.877 | COMPARATIVE EXAMPLE |
| 50 | C3 | 1.928 | 47.983 | 53.845 | 0.839 | INVENTIVE EXAMPLE |
| 51 | C4 | 1.941 | 47.349 | 54.234 | 0.813 | INVENTIVE EXAMPLE |
| 52 | C5 | 1.950 | 47.405 | 52.846 | 0.816 | INVENTIVE EXAMPLE |
| 53 | C6 | 1.942 | 47.462 | 56.775 | 0.815 | INVENTIVE EXAMPLE |
| 54 | C7 | 1.931 | 48.124 | 54.268 | 0.850 | INVENTIVE EXAMPLE |
| 55 | C8 | 1.929 | 52.838 | 60.776 | 0.886 | COMPARATIVE EXAMPLE |
| 56 | D1 | 1.916 | 52.964 | 60.335 | 0.885 | COMPARATIVE EXAMPLE |
| 57 | D2 | 1.948 | 47.013 | 52.403 | 0.834 | INVENTIVE EXAMPLE |
| 58 | E | 1.928 | 48.307 | 54.254 | 0.854 | INVENTIVE EXAMPLE |
| 59 | F | 1.945 | 47.510 | 57.034 | 0.835 | INVENTIVE EXAMPLE |
| 60 | G | 1.947 | 46.751 | 58.297 | 0.833 | INVENTIVE EXAMPLE |

[Table 21A]

TABLE21A

| No. | STEEL TYPE | EVALUATION RESULTS | | | | NOTE |
|-----|-----------|--------------------|--|--|--|------|
| | | MAGNETIC CHARACTERISTICS | | | | |
| | | $B_8$ T | Lva @1.7T dB | Lva @1.9T dB | $W_{17/50}$ W/kg | |
| 61 | H | 1.948 | 46.710 | 54.552 | 0.833 | INVENTIVE EXAMPLE |
| 62 | I | 1.924 | 48.770 | 54.005 | 0.854 | INVENTIVE EXAMPLE |
| 63 | J | 1.945 | 46.908 | 56.559 | 0.836 | INVENTIVE EXAMPLE |
| 64 | K | 1.945 | 47.569 | 53.944 | 0.835 | INVENTIVE EXAMPLE |
| 65 | A1 | 1.921 | 52.637 | 59.403 | 0.878 | COMPARATIVE EXAMPLE |
| 66 | A1 | 1.928 | 52.330 | 63.049 | 0.878 | COMPARATIVE EXAMPLE |
| 67 | A1 | 1.931 | 52.821 | 60.743 | 0.871 | COMPARATIVE EXAMPLE |
| 68 | A1 | 1.939 | 52.458 | 61.984 | 0.862 | COMPARATIVE EXAMPLE |
| 69 | A1 | 1.937 | 48.072 | 57.806 | 0.852 | INVENTIVE EXAMPLE |
| 70 | A1 | 1.940 | 47.397 | 54.210 | 0.858 | INVENTIVE EXAMPLE |
| 71 | A1 | 1.942 | 48.020 | 56.311 | 0.857 | INVENTIVE EXAMPLE |

(continued)

| No. | STEEL TYPE | EVALUATION RESULTS | | | | NOTE |
|---|---|---|---|---|---|---|
| | | MAGNETIC CHARACTERISTICS | | | | |
| | | $B_8$ T | Lva @1.7T dB | Lva @1.9T dB | $W_{17/50}$ W/kg | |
| 72 | A1 | 1.939 | 47.601 | 56.890 | 0.851 | INVENTIVE EXAMPLE |
| 73 | A1 | 1.938 | 47.728 | 56.701 | 0.850 | INVENTIVE EXAMPLE |
| 74 | A2 | 1.951 | 47.195 | 55.297 | 0.827 | INVENTIVE EXAMPLE |
| 75 | A2 | 1.950 | 46.548 | 53.880 | 0.828 | INVENTIVE EXAMPLE |
| 76 | A2 | 1.952 | 47.292 | 54.200 | 0.820 | INVENTIVE EXAMPLE |
| 77 | A2 | 1.961 | 51.605 | 59.163 | 0.811 | COMPARATIVE EXAMPLE |
| 78 | A2 | 1.963 | 46.364 | 54.974 | 0.802 | INVENTIVE EXAMPLE |
| 79 | A2 | 1.957 | 46.796 | 55.994 | 0.811 | INVENTIVE EXAMPLE |
| 80 | A2 | 1.959 | 46.569 | 54.162 | 0.808 | INVENTIVE EXAMPLE |

[Table 22A]

TABLE22A

| No. | STEEL TYPE | EVALUATION RESULTS | | | | NOTE |
|---|---|---|---|---|---|---|
| | | MAGNETIC CHARACTERISTICS | | | | |
| | | $B_6$ T | Lva @1.7T dB | Lva @1.9T dB | $W_{17/50}$ W/kg | |
| 81 | A2 | 1.965 | 46.055 | 53.396 | 0.803 | INVENTIVE EXAMPLE |
| 82 | A2 | 1.962 | 46.075 | 52.727 | 0.802 | INVENTIVE EXAMPLE |
| 83 | B1 | 1.944 | 47.156 | 53.019 | 0.849 | INVENTIVE EXAMPLE |
| 84 | B1 | 1.949 | 47.578 | 54.530 | 0.836 | INVENTIVE EXAMPLE |
| 85 | B1 | 1.947 | 47.601 | 54.158 | 0.845 | INVENTIVE EXAMPLE |
| 86 | B1 | 1.941 | 48.017 | 56.157 | 0.848 | INVENTIVE EXAMPLE |
| 87 | B1 | 1.948 | 47.374 | 55.448 | 0.831 | INVENTIVE EXAMPLE |
| 88 | B1 | 1.936 | 52.104 | 60.526 | 0.859 | COMPARATIVE EXAMPLE |
| 89 | B1 | 1.927 | 52.688 | 59.264 | 0.863 | COMPARATIVE EXAMPLE |
| 90 | B1 | 1.937 | 52.323 | 63.436 | 0.859 | COMPARATIVE EXAMPLE |
| 91 | B1 | 1.928 | 52.444 | 62.242 | 0.882 | COMPARATIVE EXAMPLE |
| 92 | B1 | 1.921 | 53.014 | 62.980 | 0.880 | COMPARATIVE EXAMPLE |
| 93 | B2 | 1.959 | 45.800 | 53.370 | 0.802 | INVENTIVE EXAMPLE |
| 94 | B2 | 1.965 | 46.023 | 52.537 | 0.791 | INVENTIVE EXAMPLE |
| 95 | B2 | 1.967 | 46.015 | 55.860 | 0.797 | INVENTIVE EXAMPLE |
| 96 | B2 | 1.966 | 46.643 | 52.418 | 0.800 | INVENTIVE EXAMPLE |
| 97 | B2 | 1.972 | 45.422 | 51.614 | 0.785 | INVENTIVE EXAMPLE |
| 98 | B2 | 1.955 | 51.084 | 58.775 | 0.810 | COMPARATIVE EXAMPLE |

(continued)

| No. | STEEL TYPE | EVALUATION RESULTS | | | | NOTE |
|---|---|---|---|---|---|---|
| | | MAGNETIC CHARACTERISTICS | | | | |
| | | $B_6$ T | Lva @1.7T dB | Lva @1.9T dB | $W_{17/50}$ W/kg | |
| 99 | B2 | 1.957 | 50.841 | 58.201 | 0.814 | COMPARATIVE EXAMPLE |
| 100 | B2 | 1.955 | 50.533 | 61.518 | 0.809 | COMPARATIVE EXAMPLE |

The characteristics of grain oriented electrical steel sheet significantly vary depending on the chemical composition and the producing method. Thus, it is necessary to compare and analyze the evaluation results of characteristics within steel sheets whose chemical compositions and producing methods are appropriately classified. Hereinafter, the evaluation results of characteristics are explained by classifying the grain oriented electrical steels under some features in regard to the chemical compositions and the producing methods.

(Examples produced by low temperature slab heating process)

Nos. 1 to 64 were examples produced by a process in which slab heating temperature was decreased, nitridation was conducted after primary recrystallization, and thereby main inhibitor for secondary recrystallization was formed.

(Examples of Nos. 1 to 23)

Nos. 1 to 23 were examples in which the steel type without the Nb group element was used and the conditions of PA, PB, PC, PD, TE, TF, and TG were mainly changed during final annealing.
In Nos. 1 to 23, when $W_{17/50}$ was 0.900 W/kg or less, Lva@ 1.7T was 50.0 dB or less, and Lva@ 1.9T was 58.0 dB or less, both the iron loss characteristics and the magnetostriction velocity level were judged to be acceptable.
In the inventive examples among Nos. 1 to 23, the secondary recrystallized grain was divided into small domains by the subboundary, and the relationship between the deviation angle $\gamma$ and the deviation angle $\alpha$ and the relationship between the deviation angle $\gamma$ and the deviation angle $\beta$ were favorably controlled. Thus, these examples exhibited excellent iron loss characteristics and excellent magnetostriction velocity level. On the other hand, in the comparative examples, although the deviation angle was slightly and continuously shifted in the secondary recrystallized grain, the secondary recrystallized grain was not divided into small domains by the subboundary, and the relationship of the deviation angles $\alpha/\beta/\gamma$ was not favorably controlled. Thus, these examples did not exhibited excellent iron loss characteristics and excellent magnetostriction velocity level.
Here, No. 3 was the comparative example in which the inhibitor intensity was increased by controlling the N content after nitridation to be 300 ppm. In general, although increasing the nitrogen content by nitridation causes a decrease in productivity, increasing the nitrogen content by nitridation results in an increase in the inhibitor intensity, and thereby $B_8$ increases. In No. 3, $B_8$ increased. However, in No. 3, the conditions in final annealing were not preferable, and thus, the magnetostriction velocity level was insufficient. On the other hand, No. 10 was the inventive example in which the N content after nitridation was controlled to be 160 ppm. In No. 10, although $B_8$ was not a particularly high value, the conditions in final annealing were preferable, and thus, the magnetostriction velocity level became a preferred low value.
Nos. 22 and 23 were examples in which the nitridation was sufficiently conducted and the secondary recrystallization was maintained up to higher temperature by increasing TF. In these examples, $B_8$ increased. However, in No. 22 among the above, TF was excessively increased, and thus, the magnetostriction velocity level was insufficient. On the other hand, in No. 23, TF was favorably controlled, and thus, the magnetostriction velocity level became a preferred low value.

(Examples of Nos. 24 to 34)

Nos. 24 to 34 were examples in which the steel type including 0.002% of Nb as the slab was used and the conditions of PA and TE were significantly changed during final annealing.
In Nos. 24 to 34, when $W_{17/50}$ was 0.855 W/kg or less, Lva@ 1.7T was 49.0 dB or less, and Lva@ 1.9T was 59.0 dB or less, both the iron loss characteristics and the magnetostriction velocity level were judged to be acceptable.
In the inventive examples among Nos. 24 to 34, the secondary recrystallized grain was divided into small domains by the subboundary, and the relationship between the deviation angle $\gamma$ and the deviation angle $\alpha$ and the relationship between the deviation angle $\gamma$ and the deviation angle $\beta$ were favorably controlled. Thus, these examples exhibited excellent iron loss characteristics and excellent magnetostriction velocity level. On the other hand, in the comparative examples, although the deviation angle was slightly and continuously shifted in the secondary recrystallized grain, the secondary recrystallized grain was not divided into small domains by the subboundary, and the relationship of the deviation angles $\alpha/\beta/\gamma$ was not favorably controlled. Thus, these examples did not exhibited excellent iron loss characteristics and excellent magnetostriction velocity level.

(Examples of Nos. 35 to 47)

Nos. 35 to 47 were examples in which the steel type including 0.007% of Nb as the slab was used.
In Nos. 35 to 47, when $W_{17/50}$ was 0.835 W/kg or less, Lva@ 1.7T was 48.0 dB or less, and Lva@ 1.9T was 58.0 dB or less, both the iron loss characteristics and the magnetostriction velocity level were judged to be acceptable.
In the inventive examples among Nos. 35 to 47, the secondary recrystallized grain was divided into small domains by the subboundary, and the relationship between the deviation angle $\gamma$ and the deviation angle $\alpha$ and the relationship between the deviation angle $\gamma$ and the deviation angle $\beta$ were favorably controlled. Thus, these examples exhibited excellent iron loss characteristics and excellent magnetostriction velocity level. On the other hand, in the comparative examples, although the deviation angle was slightly and continuously shifted in the secondary recrystallized grain, the secondary recrystallized grain was not divided into small domains by the subboundary, and the relationship of the deviation angles $\alpha/\beta/\gamma$ was not favorably controlled. Thus, these examples did not exhibited excellent iron loss characteristics and excellent magnetostriction velocity level.
Here, Nos. 35 to 47 included the preferred amount of Nb as the slab as compared with the above Nos. 1 to 34, and thus, the magnetostriction velocity level became a preferred low value. Moreover, $B_8$ increased. As described above, when the slab including Nb was used and the conditions in final annealing were controlled, the magnetic characteristics and the magnetostriction characteristics were favorably affected.

(Examples of Nos. 48 to 55)

Nos. 48 to 55 were examples in which TE was controlled to shorter than 200 minutes and the influence of Nb content was particularly confirmed.
In Nos. 48 to 55, when $W_{17/50}$ was 0.850 W/kg or less, Lva@ 1.7T was 49.0 dB or less, and Lva@ 1.9T was 57.0 dB or less, both the iron loss characteristics and the magnetostriction velocity level were judged to be acceptable.
In the inventive examples among Nos. 48 to 55, the secondary recrystallized grain was divided into small domains by the subboundary, and the relationship between the deviation angle $\gamma$ and the deviation angle $\alpha$ and the relationship between the deviation angle $\gamma$ and the deviation angle $\beta$ were favorably controlled. Thus, these examples exhibited excellent iron loss characteristics and excellent magnetostriction velocity level. On the other hand, in the comparative examples, although the deviation angle was slightly and continuously shifted in the secondary recrystallized grain, the secondary recrystallized grain was not divided into small domains by the subboundary, and the relationship of the deviation angles $\alpha/\beta/\gamma$ was not favorably controlled. Thus, these examples did not exhibited excellent iron loss characteristics and excellent magnetostriction velocity level.
As shown in Nos. 48 to 55, as long as 0.0030 to 0.030 mass% of Nb was included in the slab, the switching favorably occurred during final annealing, and thus the magnetostriction velocity level was improved even when TE was the short time.

(Examples of Nos. 56 to 64)

Nos. 56 to 64 were examples in which TE was controlled to less than 200 minutes and the influence of the amount of Nb group element was confirmed.
In Nos. 56 to 64, when $W_{17/50}$ was 0.86 W/kg or less, Lva@ 1.7T was 49.0 dB or less, and Lva@ 1.9T was 58.0 dB or less, both the iron loss characteristics and the magnetostriction velocity level were judged to be acceptable.
In the inventive examples among Nos. 56 to 64, the secondary recrystallized grain was divided into small domains by the subboundary, and the relationship between the deviation angle $\gamma$ and the deviation angle $\alpha$ and the relationship between the deviation angle $\gamma$ and the deviation angle $\beta$ were favorably controlled. Thus, these examples exhibited excellent iron loss characteristics and excellent magnetostriction velocity level. On the other hand, in the comparative examples, although the deviation angle was slightly and continuously shifted in the secondary recrystallized grain, the secondary recrystallized grain was not divided into small domains by the subboundary, and the relationship of the deviation angles $\alpha/\beta/\gamma$ was not favorably controlled. Thus, these examples did not exhibited excellent iron loss characteristics and excellent magnetostriction velocity level.

As shown in Nos. 56 to 64, as long as the predetermined amount of Nb group element except for Nb was included in the slab, the switching favorably occurred during final annealing, and thus the magnetostriction velocity level was improved even when TE was the short time.

(Examples produced by high temperature slab heating process)

Nos. 65 to 100 were examples produced by a process in which slab heating temperature was increased, MnS was sufficiently soluted during slab heating and was reprecipited during post process, and the reprecipited MnS was utilized as main inhibitor.

Nos. 83 to 100 in the above Nos. 65 to 100 were examples in which Bi was included in the slab and thus $B_8$ increased.

In Nos. 65 to 82, when $W_{17/50}$ was 0.860 W/kg or less, Lva@1.7T was 49.0 dB or less, and Lva@ 1.9T was 58.0 dB or less, both the iron loss characteristics and the magnetostriction velocity level were judged to be acceptable.

In Nos. 83 to 100, when $W_{17/50}$ was 0.850 W/kg or less, Lva@1.7T was 49.0 dB or less, and Lva@ 1.9T was 56.5 dB or less, both the iron loss characteristics and the magnetostriction velocity level were judged to be acceptable.

In the inventive examples among Nos. 65 to 100, the secondary recrystallized grain was divided into small domains by the subboundary, and the relationship between the deviation angle $\gamma$ and the deviation angle $\alpha$ and the relationship between the deviation angle $\gamma$ and the deviation angle $\beta$ were favorably controlled. Thus, these examples exhibited excellent iron loss characteristics and excellent magnetostriction velocity level. On the other hand, in the comparative examples, although the deviation angle was slightly and continuously shifted in the secondary recrystallized grain, the secondary recrystallized grain was not divided into small domains by the subboundary, and the relationship of the deviation angles $\alpha/\beta/\gamma$ was not favorably controlled. Thus, these examples did not exhibited excellent iron loss characteristics and excellent magnetostriction velocity level.

As shown in Nos. 65 to 100, as long as the conditions in final annealing were appropriately controlled, the switching favorably occurred during final annealing, and thus the magnetostriction velocity level was improved even by the high temperature slab heating process. Moreover, as with the low temperature slab heating process, when the slab including Nb was used and the conditions in final annealing were controlled, the magnetic characteristics and the magnetostriction characteristics were favorably affected.

(Example 2)

Using the grain oriented electrical steel sheet of No. 97 and No. 98 shown in the above Example 1, the effect of the magnetic domain refinement was investigated. Specifically, the local minute strain was applied or the local grooves was formed by any method such as laser, plasma, mechanical methods, etching, and the like for the grain oriented electrical steel sheet of No. 97 and No. 98.

The evaluation results are shown in Table 1B and Table 2B. From the Tables, it is possible to confirm that the characteristics of the steel sheet did not change and the magnetic characteristics did not deteriorate by any method for the grain oriented electrical steel sheet in which the magnetic domain refinement was conducted.

[Table 1B]

TABLE1B

| No. | STEEL TYPE | MAGNETIC DOMAIN REFINING METHOD | PRODUCTION RESULTS | | | | | | | |
|---|---|---|---|---|---|---|---|---|---|---|
| | | | EXISTENCE OF SWITCHING BOUNDARY | RA$\alpha$c $\mu$m | RA$\beta$c $\mu$m | RA$\gamma$c $\mu$m | RB$_C$ $\mu$m | RA$\gamma_C$ /RA$\alpha$c | RA$\gamma_C$ /RA$\beta$c | RB$_C$ /RA$\gamma$c |
| 97 | B2 | - | EXISTENCE | 14.4 | 13.5 | 12.7 | 26.3 | 0.879 | 0.937 | 2.077 |
| 98 | B2 | - | EXISTENCE | 16.6 | 17.1 | 16.9 | 26.0 | 1.017 | 0.989 | 1.589 |
| 97-2 | B2 | LASER | EXISTENCE | 14.4 | 13.5 | 12.7 | 26.3 | 0.879 | 0.937 | 2.077 |
| 98-2 | B2 | LASER | EXISTENCE | 16.6 | 17.1 | 16.9 | 26.0 | 1.017 | 0.989 | 1.589 |
| 97-3 | B2 | PLASMA | EXISTENCE | 14.4 | 13.5 | 12.7 | 26.3 | 0.879 | 0.937 | 2.077 |

(continued)

| No. | STEEL TYPE | MAGNETIC DOMAIN REFINING METHOD | PRODUCTION RESULTS | | | | | | | |
|---|---|---|---|---|---|---|---|---|---|---|
| | | | EXISTENCE OF SWITCHING BOUNDARY | $RA\alpha_c$ $\mu m$ | $RA\beta_c$ $\mu m$ | $RA\gamma_c$ $\mu m$ | $RB_C$ $\mu m$ | $RA\gamma_C/RA\alpha_c$ | $RA\gamma_C/RA\beta_c$ | $RB_C/RA\gamma_c$ |
| 98-3 | B2 | PLASMA | EXISTENCE | 16.6 | 17.1 | 16.9 | 26.0 | 1.017 | 0.989 | 1.589 |
| 97-4 | B2 | MECHANICAL STRAIN | EXISTENCE | 14.4 | 13.5 | 12.7 | 26,3 | 0.879 | 0.937 | 2.077 |
| 98-4 | 82 | MECHANICAL STRAIN | EXISTENCE | 16.6 | 17.1 | 16.9 | 26.0 | 1.017 | 0.989 | 1.589 |
| 97-5 | 82 | ETCHING | EXISTENCE | 14.4 | 13.5 | 12.7 | 26.3 | 0.879 | 0.937 | 2.077 |
| 98-5 | B2 | ETCHING | EXISTENCE | 16.6 | 17.1 | 16.9 | 26.0 | 1.017 | 0.989 | 1.589 |

[Table 2B]

TABLE2B

| No. | STEEL TYPE | MAGNETIC DOMAIN REFINING METHOD | EVALUATION RESULTS | | | | NOTE |
|---|---|---|---|---|---|---|---|
| | | | $B_8$ T | Lva @1.7T dB | Lva @1.9T dB | $W_{17/50}$ W/kg | |
| 97 | B2 | - | 1.972 | 45.422 | 51.674 | 0.785 | INVENTIVE EXAMPLE |
| 98 | B2 | - | 1.955 | 51.084 | 58.775 | 0.810 | COMPARATIVE EXAMPLE |
| 97-2 | B2 | LASER | 1.969 | 49.029 | 56.778 | 0.695 | INVENTIVE EXAMPLE |
| 98-2 | B2 | LASER | 1.952 | 54.431 | 66.620 | 0.730 | COMPARATIVE EXAMPLE |
| 97-3 | B2 | PLASMA | 1.969 | 49.819 | 56.780 | 0.705 | INVENTIVE EXAMPLE |
| 98-3 | B2 | PLASMA | 1.951 | 54.241 | 66.483 | 0.740 | COMPARATIVE EXAMPLE |
| 97-4 | B2 | MECHANICAL STRAIN | 1.944 | 47.342 | 54.603 | 0.735 | INVENTIVE EXAMPLE |
| 98-4 | B2 | MECHANICAL STRAIN | 1.927 | 52.130 | 64.455 | 0.760 | COMPARATIVE EXAMPLE |
| 97-5 | B2 | ETCHING | 1.949 | 46.852 | 54.705 | 0.725 | INVENTIVE EXAMPLE |
| 98-5 | B2 | ETCHING | 1.932 | 51.926 | 63.776 | 0.750 | COMPARATIVE EXAMPLE |

(Example 3)

Using slabs with chemical composition shown in Table 1C and Table 2C as materials, grain oriented electrical steel sheets with chemical composition shown in Table 3C and Table 4C were produced. The methods for measuring the chemical composition and the notation in the tables are the same as in the above Example 1.

[Table 1C]

TABLE1C

| STEEL TYPE | CHEMICAL COMPOSITION OF SLAB(STEEL PIECE) (UNIT:mass%.BALANCE CONSISTING OF Fe AND IMPURITIES) | | | | | | | | | | |
|---|---|---|---|---|---|---|---|---|---|---|---|
| | C | Si | Mn | S | Al | N | Cu | Bi | Nb | V | Mo |
| X1 | 0.080 | 3.26 | 0.07 | 0.018 | 0.026 | 0.008 | 0.07 | - | - | - | - |
| X2 | 0.080 | 3.26 | 0.07 | 0.006 | 0.026 | 0.008 | 0.07 | - | - | - | - |
| X3 | 0.060 | 3.35 | 0.10 | 0.006 | 0.026 | 0.008 | 0.02 | - | - | - | - |
| X4 | 0.060 | 3.35 | 0.10 | 0.006 | 0.026 | 0.008 | 0.02 | - | - | - | - |
| X5 | 0.060 | 3.35 | 0.10 | 0.006 | 0.026 | 0.008 | 0.02 | - | - | - | - |
| X6 | 0.060 | 3.35 | 0.10 | 0.006 | 0.026 | 0.008 | 0.02 | - | | | - |
| X7 | 0.060 | 3.35 | 0.10 | 0.006 | 0.026 | 0.008 | 0.02 | - | - | - | - |
| X8 | 0.060 | 3.35 | 0.10 | 0.006 | 0.026 | 0.008 | 0.02 | - | - | - | - |
| X9 | 0.060 | 3,45 | 0.10 | 0.006 | 0.028 | 0.008 | 0.20 | - | 0.007 | - | - |
| X10 | 0.060 | 3.35 | 0.10 | 0.006 | 0.026 | 0.008 | 0.02 | - | - | - | - |
| X11 | 0.060 | 3.35 | 0.10 | 0.006 | 0.026 | 0.008 | 0.02 | - | - | - | - |
| X12 | 0.070 | 3.26 | 0.07 | 0.025 | 0.025 | 0.008 | 0.07 | 0.002 | - | - | - |

[Table 2C]

TABLE2C

| STEEL TYPE | CHEMICAL COMPOSITION OF SLAB(STEEL PIECE) (UNIT:mass%.BALANCE CONSISTING OF Fe AND IMPURITIES) | | | | | | | | | |
|---|---|---|---|---|---|---|---|---|---|---|
| | Ta | W | Se | 8 | P | Ti | Sn | Sb | Cr | Ni |
| X1 | - | - | 0.018 | - | - | - | | | | |
| X2 | - | - | 0.020 | - | - | - | - | - | - | - |
| X3 | - | - | - | 0.002 | - | - | - | - | - | - |
| X4 | - | - | - | - | 0.011 | - | - | - | - | - |
| X5 | - | - | - | - | - | 0.007 | - | - | - | - |
| X6 | - | - | - | - | - | - | 0.050 | - | - | - |
| X7 | - | - | - | - | - | - | - | 0.025 | - | - |
| X8 | - | - | - | - | - | - | - | - | 0.100 | - |
| X9 | - | - | - | - | 0.021 | 0.001 | 0.060 | - | 0.110 | 0.020 |
| X10 | - | - | - | - | - | - | - | - | - | 0.100 |
| X11 | - | - | - | - | - | - | - | - | - | - |
| X12 | - | - | - | - | - | - | | - | - | |

[Table 3C]

TABLE3C

| STEEL TYPE | CHEMICAL COMPOSITION OF GRAIN ORIENTED ELECTRICAL STEEL SHEET (UNIT:mass%, BALANCE CONSISTING OF Fe AND IMPURITIES) | | | | | | | | | | |
|---|---|---|---|---|---|---|---|---|---|---|---|
| | C | Si | Mn | S | Al | N | Cu | Bi | Nb | V | Mo |
| X1 | 0.001 | 3.15 | 0.07 | <0.002 | <0.004 | <0.002 | 0.07 | - | - | - | - |
| X2 | 0.001 | 3.15 | 0.07 | <0.002 | <0.004 | <0.002 | 0.07 | - | - | - | - |
| X3 | 0.001 | 3.30 | 0.10 | <0.002 | <0.004 | <0.002 | 0.02 | | - | - | - |
| X4 | 0.001 | 3.30 | 0.10 | <0.002 | <0.004 | <0.002 | 0.02 | - | - | - | - |
| X5 | 0.001 | 3.30 | 0.10 | <0.002 | <0.004 | <0.002 | 0.02 | - | - | - | - |
| X6 | 0.001 | 3.30 | 0.10 | <0.002 | <0.004 | <0.002 | 0.02 | - | - | - | - |
| X7 | 0.001 | 3.30 | 0.10 | <0.002 | <0.004 | <0.002 | 0.02 | - | - | - | - |
| X8 | 0.001 | 3.30 | 0.10 | <0.002 | <0.004 | <0.002 | 0.02 | - | - | - | - |
| X9 | 0.001 | 3.34 | 0.10 | <0.002 | <0.004 | <0.002 | 0.20 | - | 0.006 | - | - |
| X10 | 0.001 | 3.30 | 0.10 | <0.002 | <0.004 | <0.002 | 0.02 | - | - | - | - |
| X11 | 0.001 | 3.30 | 0.10 | <0.002 | <0.004 | <0.002 | 0.02 | - | - | - | - |
| X12 | 0.001 | 3.15 | 0.07 | <0.002 | <0.004 | <0.002 | 0.07 | <0.001 | - | - | - |

[Table 4C]

TABLE4C

| STEEL TYPE | CHEMICAL COMPOSITION OF GRAIN ORIENTED ELECTRICAL STEEL SHEET (UNIT:mass%, BALANCE CONSISTING OF Fe AND IMPURITIES) | | | | | | | | | |
|---|---|---|---|---|---|---|---|---|---|---|
| | Ta | W | Se | B | P | Ti | Sn | Sb | Cr | Ni |
| X1 | - | - | <0.002 | - | - | - | - | - | - | - |
| X2 | - | - | <0.002 | - | - | - | - | - | - | - |
| X3 | - | - | - | 0.002 | - | - | - | - | - | - |
| X4 | - | - | - | - | 0.011 | - | - | - | - | - |
| X5 | - | - | - | - | - | 0.007 | - | - | - | - |
| X6 | - | - | - | - | - | - | 0.050 | - | - | - |
| X7 | - | - | - | - | - | - | - | 0.025 | - | - |
| X8 | - | - | - | - | - | - | - | - | 0.100 | - |
| X9 | - | | - | | 0.020 | 0.001 | 0.060 | - | 0.110 | 0.020 |
| X10 | - | - | - | - | - | - | - | - | - | 0.100 |
| X11 | - | - | - | - | - | - | - | - | - | - |
| X12 | - | - | - | - | - | - | - | - | - | - |

The grain oriented electrical steel sheets were produced under production conditions shown in Table 5C and Table 6C. The production conditions other than those shown in the tables were the same as those in the above Example 1.

In the examples except for No. 1011, the annealing separator which mainly included MgO was applied to the steel sheets, and then final annealing was conducted. On the other hand, in No. 1011, the annealing separator which mainly included alumina was applied to the steel sheets, and then final annealing was conducted.

[Table 5C]

TABLE5C

| No. | STEEL TYPE | PRODUCTION CONDITIONS | | | | | | | | | |
| --- | --- | --- | --- | --- | --- | --- | --- | --- | --- | --- | --- |
| | | HOT ROLLING | | | | HOT BAND ANNEALING | | COLD ROLLING | | DECARBURIZATION ANNEAL-ING | |
| | | HEATING TEM-PERATURE | TEMPERA-TURE OF FINAL ROLLING | COILING TEM-PERATURE | SHEET THICKNESS | TEMPERA-TURE | TIME | SHEET THICKNESS | REDUC-TION OF COLD ROLL-ING | GRAIN SIZE OF PRIMARY RECRYSTALUZED GRAIN | NITROGEN CONTENT AFTER NITRIDATION |
| | | °C | °C | °C | mm | °C | SECOND | mm | % | $\mu$ m | ppm |
| 1001 | X1 | 1400 | 1100 | 540 | 2.6 | 1100 | 180 | 0.26 | 90.0 | 9 | - |
| 1002 | X2 | 1400 | 1100 | 540 | 2.6 | 1100 | 180 | 0.26 | 90.0 | 9 | - |
| 1003 | X3 | 1150 | 900 | 540 | 2.8 | 1100 | 180 | 0.26 | 90.7 | 22 | 160 |
| 1004 | X4 | 1150 | 900 | 540 | 2.8 | 1100 | 180 | 0.26 | 90.7 | 22 | 160 |
| 1005 | X5 | 1150 | 900 | 540 | 2.8 | 1100 | 180 | 0.26 | 90.7 | 22 | 160 |
| 1006 | X6 | 1150 | 900 | 540 | 2.8 | 1100 | 180 | 0.26 | 90.7 | 22 | 160 |
| 1007 | X7 | 1150 | 900 | 540 | 2.8 | 1100 | 180 | 0.26 | 90.7 | 22 | 160 |
| 1008 | X8 | 1150 | 900 | 540 | 2.8 | 110O | 180 | 0.26 | 90.7 | 22 | 160 |
| 1 009 | X9 | 1150 | 900 | 540 | 2.8 | 1100 | 180 | 0.26 | 90.7 | 17 | 220 |
| 1010 | X10 | 1150 | 900 | 540 | 2.8 | 1100 | 180 | 0.26 | 90.7 | 22 | 160 |
| 1011 | X11 | 1150 | 900 | 540 | 2.8 | 1100 | 180 | 0.26 | 90.7 | 22 | 160 |
| 1012 | X12 | 1350 | 1100 | 540 | 2.6 | 1100 | 180 | 0.26 | 90.0 | 10 | - |
| 1013 | X11 | 1150 | 900 | 540 | 2.8 | 1060 | 180 | 0.26 | 90.7 | 24 | 160 |
| 1014 | X11 | 1150 | 900 | 540 | 2.8 | 1100 | 180 | 0.26 | 90.7 | 22 | 160 |
| 1015 | X11 | 1150 | 900 | 540 | 2.8 | 1100 | 180 | 0.26 | 90.7 | 22 | 160 |
| 1016 | X11 | 1150 | 900 | 540 | 2.8 | 1100 | 180 | 0.26 | 90.7 | 22 | 160 |
| 1017 | X11 | 1150 | 900 | 540 | 2.8 | 1100 | 180 | 0.26 | 90.7 | 22 | 160 |
| 1018 | X11 | 1150 | 900 | 540 | 2.8 | 1100 | 180 | 0.26 | 90.7 | 22 | 160 |

[Table 6C]

TABLE6C

| No. | STEEL TYPE | PRODUCTION CONDITIONS | | | | | | |
|---|---|---|---|---|---|---|---|---|
| | | FINAL ANNEALING | | | | | | |
| | | PA | PB | PC | PD | TE MINUTE | TF MINUTE | TG MINUTE |
| 1001 | X1 | 0.400 | 0.018 | 0.015 | 0.003 | 300 | 180 | 300 |
| 1002 | X2 | 0.400 | 0.018 | 0.015 | 0.003 | 300 | 180 | 300 |
| 1003 | X3 | 0.050 | 0.010 | 0.050 | 0.010 | 210 | 180 | 300 |
| 1004 | X4 | 0.050 | 0.010 | 0.050 | 0.010 | 210 | 180 | 300 |
| 1005 | X5 | 0.050 | 0.010 | 0.050 | 0.010 | 210 | 180 | 300 |
| 1006 | X6 | 0.050 | 0.010 | 0.050 | 0.010 | 210 | 180 | 300 |
| 1007 | X7 | 0.050 | 0.010 | 0.050 | 0.010 | 210 | 180 | 300 |
| 1008 | X8 | 0.050 | 0.010 | 0.050 | 0.010 | 210 | 180 | 300 |
| 1009 | X9 | 0.050 | 0.010 | 0.050 | 0.010 | 210 | 180 | 300 |
| 1010 | X10 | 0.050 | 0.010 | 0.050 | 0.010 | 210 | 180 | 300 |
| 1011 | X11 | 0.050 | 0.010 | 0.050 | 0.010 | 210 | 180 | 300 |
| 1012 | X12 | 0.400 | 0.040 | 0.040 | 0.003 | 450 | 180 | 400 |
| 1013 | X11 | 0.050 | 0.010 | 0.050 | 0.010 | 210 | 180 | 300 |
| 1014 | X11 | 0.040 | 0.010 | 0.050 | 0.010 | 210 | 180 | 300 |
| 1015 | X11 | 0.050 | 0.005 | 0.050 | 0.010 | 210 | 180 | 300 |
| 1016 | X11 | 0.050 | 0.010 | 0.050 | 0.0007 | 210 | 180 | 300 |
| 1017 | X11 | 0.050 | 0.010 | 0.050 | 0.010 | 210 | 180 | 120 |
| 1018 | X11 | ※1 | 0.010 | 0.050 | 0.010 | 210 | 180 | 300 |

"※1"indicates that "$PH_2O/PH_2$ in 700 to 750°C was controlled to be 0.2,
and $PH_2O/PH_2$ in 750 to 800°C was controlled to be 0.03".

The insulation coating which was the same as those in the above Example 1 was formed on the surface of produced grain oriented electrical steel sheets (final annealed sheets).

The produced grain oriented electrical steel sheets had the intermediate layer which was arranged in contact with the grain oriented electrical steel sheet (silicon steel sheet) and the insulation coating which was arranged in contact with the intermediate layer, when viewing the cross section whose cutting direction is parallel to thickness direction.

In the grain oriented electrical steel sheets except for No. 1011, the intermediate layer was forsterite film whose average thickness was 1.5 μm, and the insulation coating was the coating which mainly included phosphate and colloidal silica and whose average thickness was 2 μm. On the other hand, in the grain oriented electrical steel sheet of No. 1011, the intermediate layer was oxide layer (layer which mainly included $SiO_2$) whose average thickness was 20 nm, and the insulation coating was the coating which mainly included phosphate and colloidal silica and whose average thickness was 2 μm.

Various characteristics of the obtained grain oriented electrical steel sheet were evaluated. The evaluation methods were the same as those in the above Example 1. The evaluation results are shown in Table 7C and Table 8C.

[Table 7C]

TABLE7C

| No. | STEEL TYPE | PRODUCTION RESULTS | | | | | | | |
| --- | --- | --- | --- | --- | --- | --- | --- | --- | --- |
| | | BOUNDARY, SIZE | | | | | | | |
| | | EXISTENCE OF SWITCHING BOUNDARY | RA$\alpha$c $\mu$m | RA$\beta$c $\mu$m | RA$\gamma$c $\mu$m | RB$_C$ $\mu$m | RA$\gamma_C$ /RA$\alpha_C$ | RA$\gamma_C$ /RA$\beta_C$ | RB$_C$ /RA$\gamma_C$ |
| 1001 | X1 | EXISTENCE | 32.5 | 32.1 | 29.9 | 33.0 | 0.921 | 0.930 | 1.103 |
| 1002 | X2 | EXISTENCE | 32.1 | 30.5 | 29.5 | 32.5 | 0.920 | 0.967 | 1.101 |
| 1003 | X3 | EXISTENCE | 19.2 | 18.5 | 18.0 | 19.7 | 0.938 | 0.973 | 1.094 |
| 1004 | X4 | EXISTENCE | 18.5 | 18.4 | 18.1 | 19.6 | 0.978 | 0.984 | 1.083 |
| 1005 | X5 | EXISTENCE | 18.9 | 18.3 | 17.9 | 19.7 | 0.945 | 0.976 | 1.103 |
| 1006 | X6 | EXISTENCE | 18.8 | 18.3 | 18.0 | 19.6 | 0.956 | 0.984 | 1.089 |
| 1007 | X7 | EXISTENCE | 18.6 | 18.1 | 17.8 | 19.6 | 0.957 | 0.983 | 1.101 |
| 1008 | X8 | EXISTENCE | 18.7 | 19.2 | 18.0 | 19.5 | 0.961 | 0.938 | 1.081 |
| 1009 | X9 | EXISTENCE | 27.4 | 17.2 | 14.8 | 30.3 | 0.896 | 0.921 | 1.612 |
| 1010 | X10 | EXISTENCE | 18.6 | 18.2 | 17.7 | 19.7 | 0.954 | 0.976 | 1.111 |
| 1011 | X11 | EXISTENCE | 19.0 | 18.3 | 17.7 | 19.6 | 0.929 | 0.967 | 1.107 |
| 1012 | X12 | EXISTENCE | 51.5 | 48.2 | 42.6 | 58.3 | 0.826 | 0.882 | 1.369 |
| 1013 | X11 | NONE | 18.3 | 18.6 | 18.5 | 19.7 | 1.013 | 0.994 | 1.062 |
| 1014 | X11 | NONE | 19.6 | 20.1 | 19.8 | 19.6 | 1.006 | 0.982 | 0.995 |
| 1015 | X11 | NONE | 19.8 | 19.4 | 19.5 | 19.8 | 0.985 | 1.006 | 1.015 |
| 1016 | X11 | NONE | 18.5 | 18.1 | 18.3 | 19.2 | 0.994 | 1.013 | 1.047 |
| 1017 | ✕11 | NONE | 17.8 | 18.4 | 17.9 | 18.9 | 1.005 | 0.974 | 1.058 |
| 1018 | X11 | NONE | 18.2 | 17.6 | 17.8 | 18.6 | 0.976 | 1.007 | 1.049 |

[Table 8C]

TABLE8C

| No. | STEEL TYPE | EVALUATION RESULTS | | | | NOTE |
| --- | --- | --- | --- | --- | --- | --- |
| | | MAGNETIC CHARACTERISTICS | | | | |
| | | B$_8$ T | Lva @1.7T dB | Lva @1.9T dB | W$_{17/50}$ W/kg | |
| 1001 | X1 | 1.948 | 47.521 | 56.632 | 0.832 | INVENTIVE EXAMPLE |
| 1002 | X2 | 1.942 | 47.733 | 57.341 | 0.852 | INVENTIVE EXAMPLE |
| 1003 | X3 | 1.922 | 48.574 | 57.236 | 0.866 | INVENTIVE EXAMPLE |
| 1004 | X4 | 1.913 | 48.532 | 54.521 | 0.886 | INVENTIVE EXAMPLE |
| 1005 | X5 | 1.921 | 48.650 | 54.,156 | 0.881 | INVENTIVE EXAMPLE |
| 1006 | X6 | 1.915 | 48.432 | 53.850 | 0.882 | INVENTIVE EXAMPLE |

(continued)

| No. | STEEL TYPE | EVALUATION RESULTS | | | | NOTE |
| | | MAGNETIC CHARACTERISTICS | | | | |
| | | $B_8$ T | Lva @1.7T dB | Lva @1.9T dB | $W_{17/50}$ W/kg | |
|---|---|---|---|---|---|---|
| 1007 | X7 | 1.917 | 48.877 | 53.720 | 0.881 | INVENTIVE EXAMPLE |
| 1008 | X8 | 1.920 | 48.125 | 54.270 | 0.885 | INVENTIVE EXAMPLE |
| 1009 | X9 | 1.945 | 46.823 | 54.181 | 0.832 | INVENTIVE EXAMPLE |
| 1010 | X10 | 1.916 | 48.524 | 55.120 | 0.867 | INVENTIVE EXAMPLE |
| 1011 | ×11 | 1.948 | 47.054 | 53.897 | 0.924 | INVENTIVE EXAMPLE |
| 1012 | X12 | 1.953 | 47.813 | 56.346 | 0.828 | INVENTIVE EXAMPLE |
| 1013 | X11 | 1.908 | 53.597 | 63.468 | 0.883 | COMPARATIVE EXAMPLE |
| 1014 | X11 | 1.910 | 53.257 | 63.821 | 0.879 | COMPARATIVE EXAMPLE |
| 1015 | X11 | 1.909 | 53.564 | 62.845 | 0.881 | COMPARATIVE EXAMPLE |
| 1016 | X11 | 1.906 | 53.865 | 62.230 | 0.893 | COMPARATIVE EXAMPLE |
| 1017 | X11 | 1.908 | 53.438 | 63.245 | 0.886 | COMPARATIVE EXAMPLE |
| 1018 | X11 | 1.905 | 53.814 | 63.751 | 0.892 | COMPARATIVE EXAMPLE |

In Nos. 1001 to 1018, when $W_{17/50}$ was 0.925 W/kg or less, Lva@1.7T was 50.0 dB or less, and Lva@1.9T was 58.0 dB or less, both the iron loss characteristics and the magnetostriction velocity level were judged to be acceptable.

In the inventive examples among Nos. 1001 to 1018, the secondary recrystallized grain was divided into small domains by the subboundary, and the relationship between the deviation angle $\gamma$ and the deviation angle $\alpha$ and the relationship between the deviation angle $\gamma$ and the deviation angle $\beta$ were favorably controlled. Thus, these examples exhibited excellent iron loss characteristics and excellent magnetostriction velocity level. On the other hand, in the comparative examples, although the deviation angle was slightly and continuously shifted in the secondary recrystallized grain, the secondary recrystallized grain was not divided into small domains by the subboundary, and the relationship of the deviation angles $\alpha/\beta/\gamma$ was not favorably controlled. Thus, these examples did not exhibited excellent iron loss characteristics and excellent magnetostriction velocity level.

Industrial Applicability

According to the above aspects of the present invention, it is possible to provide the grain oriented electrical steel sheet in which the magnetostriction velocity level (Lva) in middle to high magnetic field range (especially in magnetic field where excited so as to be approximately 1.7 to 1.9T) is improved in addition that the iron loss characteristics are excellent. Accordingly, the present invention has significant industrial applicability.

Reference Signs List

10   Grain oriented electrical steel sheet (silicon steel sheet)
20   Intermediate layer
30   Insulation coating

Claims

1. A grain oriented electrical steel sheet comprising, as a chemical composition, by mass%,

2.0 to 7.0% of Si,

0 to 0.030% of Nb,
0 to 0.030% of V,
0 to 0.030% of Mo,
0 to 0.030% of Ta,
0 to 0.030% of W,
0 to 0.0050% of C,
0 to 1.0% of Mn,
0 to 0.0150% of S,
0 to 0.0150% of Se,
0 to 0.0650% of Al,
0 to 0.0050% of N,
0 to 0.40% of Cu,
0 to 0.010% of Bi,
0 to 0.080% of B,
0 to 0.50% of P,
0 to 0.0150% of Ti,
0 to 0.10% of Sn,
0 to 0.10% of Sb,
0 to 0.30% of Cr,
0 to 1.0% of Ni, and
a balance consisting of Fe and impurities, and
comprising a texture aligned with Goss orientation, **characterized in that**,
when $\alpha$ is defined as a deviation angle from an ideal Goss orientation based on a rotation axis parallel to a normal direction Z,
when $\beta$ is defined as a deviation angle from the ideal Goss orientation based on a rotation axis parallel to a transverse direction C,
when $\gamma$ is defined as a deviation angle from the ideal Goss orientation based on a rotation axis parallel to a rolling direction L,
when $(\alpha_1 \ \beta_1 \ \gamma_1)$ and $(\alpha_2 \ \beta_2 \ \gamma_2)$ represent deviation angles of crystal orientations measured at two measurement points which are adjacent on a sheet surface and which have an interval of 1 mm,
when a boundary condition BA$\alpha$ is defined as $|\alpha_2 - \alpha_1| \geq 0.5°$ and a grain size RA$\alpha_C$ is defined as an average grain size obtained based on the boundary condition BA$\alpha$ in the transverse direction C,
when a boundary condition BA$\beta$ is defined as $|\beta_2 - \beta_1| \geq 0.5°$ and a grain size RA$\beta_C$ is defined as an average grain size obtained based on the boundary condition BA$\beta$ in the transverse direction C,
when a boundary condition BA$\gamma$ is defined as $|\gamma_2 - \gamma_1| \geq 0.5°$ and a grain size RA$\gamma_C$ is defined as an average grain size obtained based on the boundary condition BA$\gamma$ in the transverse direction C, and
when a boundary condition BB is defined as $[(\alpha_2 - \alpha_1)^2 + (\beta_2 - \beta_1)^2 + (\gamma_2 - \gamma_1)^2]^{1/2} \geq 2.0°$,
a boundary which satisfies the boundary condition BA$\gamma$ and which does not satisfy the boundary condition BB is included,
the grain size RA$\alpha_C$ and the grain size RA$\gamma_C$ satisfy RA$\gamma_C$ < RA$\alpha_C$, and
the grain size RA$\beta_C$ and the grain size RA$\gamma_C$ satisfy RA$\gamma_C$ < RA$\beta_C$.

2. The grain oriented electrical steel sheet according to claim 1, wherein

   when a grain size RB$_C$ is defined as an average grain size obtained based on the boundary condition BB in the transverse direction C,
   the grain size RA$\gamma_C$ and the grain size RB$_C$ satisfy $1.10 \leq$ RB$_C \div$ RA$\gamma_C$.

3. The grain oriented electrical steel sheet according to claim 2, wherein the grain size RB$_C$ is 15 mm or more.

4. The grain oriented electrical steel sheet according to any one of claims 1 to 3, wherein the grain size RA$\gamma_C$ is 40 mm or less.

FIG. 1

FIG. 2

# FIG. 3

<u>MOLTEN STEEL</u>

↓

| CASTING PROCESS |

↓

| HOT ROLLING PROCESS |

↓

| HOT BAND ANNEALING PROCESS |

↓

| COLD ROLLING PROCESS |

↓

| DECARBURIZATION ANNEALING PROCESS |

↓

| ANNEALING SEPARATOR APPLYING PROCESS |

↓

| FINAL ANNEALING PROCESS |

↓

<u>GRAIN ORIENTED ELECTRICAL STEEL SHEET(FINAL ANNEALED SHEET)</u>

↓

| INSULATION COATING FORMING PROCESS |

↓

| MAGNETIC DOMAIN REFINEMENT PROCESS |

↓

<u>GRAIN ORIENTED ELECTRICAL STEEL SHEET</u>

**INTERNATIONAL SEARCH REPORT**

| | International application No. |
|---|---|
| | PCT/JP2020/004266 |

A. CLASSIFICATION OF SUBJECT MATTER
Int.Cl. C21D8/12(2006.01)n, C22C38/00(2006.01)i, C22C38/60(2006.01)i, H01F1/147(2006.01)i
FI: C22C38/00303U, C22C38/60, H01F1/147175, C21D8/12B
According to International Patent Classification (IPC) or to both national classification and IPC

B. FIELDS SEARCHED

Minimum documentation searched (classification system followed by classification symbols)
Int.Cl. C21D8/12, C22C38/00-38/60, H01F1/147

Documentation searched other than minimum documentation to the extent that such documents are included in the fields searched
Published examined utility model applications of Japan    1922-1996
Published unexamined utility model applications of Japan    1971-2020
Registered utility model specifications of Japan    1996-2020
Published registered utility model applications of Japan    1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-238984 A (NIPPON STEEL CORPORATION) 20.09.2007 (2007-09-20) | 1-4 |
| A | JP 2019-163518 A (NIPPON STEEL CORP.) 26.09.2019 (2019-09-26) | 1-4 |
| A | WO 2019/182154 A1 (NIPPON STEEL CORP.) 26.09.2019 (2019-09-26) | 1-4 |
| A | CN 105220071 A (BAOSHAN IRON & STEEL CO., LTD.) 06.01.2016 (2016-01-06) | 1-4 |
| A | JP 8-297104 A (NIPPON STEEL CORPORATION) 12.11.1996 (1996-11-12) | 1-4 |
| E, A | WO 2020/027215 A1 (NIPPON STEEL CORP.) 06.02.2020 (2020-02-06) | 1-4 |

☒ Further documents are listed in the continuation of Box C.        ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 17.04.2020 | 28.04.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2020/004266 |

C (Continuation).   DOCUMENTS CONSIDERED TO BE RELEVANT

| Category* | Citation of document, with indication, where appropriate, of the relevant passages | Relevant to claim No. |
| --- | --- | --- |
| E, A | WO 2020/027218 A1 (NIPPON STEEL CORP.) 06.02.2020 (2020-02-06) | 1-4 |
| E, A | WO 2020/027219 A1 (NIPPON STEEL CORP.) 06.02.2020 (2020-02-06) | 1-4 |

Form PCT/ISA/210 (second sheet) (January 2015)

**INTERNATIONAL SEARCH REPORT**
Information on patent family members

| International application No. |
|---|
| PCT/JP2020/004266 |

```
JP 2007-238984 A   20.09.2007   US 2009/0032142 A1
                                WO 2007/102282 A1
                                EP 1992708 A1
                                KR 10-2008-0100245 A
                                CN 101395284 A
                                KR 10-1060745 B1

JP 2019-163518 A   26.09.2019   (Family: none)

WO 2019/182154 A1  26.09.2019   (Family: none)

CN 105220071 A     06.01.2016   (Family: none)

JP 8-297104 A      12.11.1996   (Family: none)

WO 2020/027215 A1  06.02.2020   (Family: none)

WO 2020/027218 A1  06.02.2020   (Family: none)

WO 2020/027219 A1  06.02.2020   (Family: none)
```

Form PCT/ISA/210 (patent family annex) (January 2015)

74

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001294996 A
- JP 2005240102 A
- JP 2015206114 A
- JP 2004060026 A
- WO 2016056501 A
- JP 2007314826 A
- JP 2001192785 A
- JP 2005240079 A
- JP 2012052229 A
- JP S52024116 A
- JP H02200732 A
- JP 4962516 B
- JP 3456742 B
- JP 2017128765 A